# EUROPEAN PATENT APPLICATION

(11) **EP 4 403 529 A1**
(43) Date of publication of application: **24.07.2024**
(21) Application number: 23152091.7
(22) Date of filing: 17.01.2023
(51) Int. Cl.: C03C 1/00, B33Y 10/00, B33Y 40/10, B33Y 40/20, B33Y 70/00, B33Y 70/10, B33Y 80/00

(54) **PHOTOCURABLE SOL-GEL COMPOSITIONS**

(71) Applicant: D. Swarovski KG, 6112 Wattens (AT); Università degli Studi di Padova, 35122 Padova (IT)
(72) Inventor: ERLER, Johannes, 6113 Wattenberg (AT); ZANINI, Alice, 35017 Padova (IT); DE MARZI, Anna, 35128 Padova (IT); GIOMETTI, Giulio, 35129 Padova (IT); FRANCHIN, Giorgia, 35010 Padova (IT); COLOMBO, Paolo, 35127 Padova (IT)
(74) Representative: Keltie LLP

(57) **Abstract**

A photocurable sol-gel composition for the production of transparent and crack-free glass bodies, wherein the composition comprises a silicon sol-gel precursor, a photopolymerisable monomer, a transition metal precursor, an organic solvent and water. Methods for making photocurable sol-gel compositions and for making transparent and crack-free glass objects from photocurable sol-gel compositions are also disclosed.

## Description

### Field of the Invention

The invention relates to photocurable sol-gel compositions for the production of transparent and crack-free glass bodies, and to methods for making such photocurable sol-gel compositions and for making transparent and crack-free glass objects from such photocurable sol-gel compositions. In particular, the invention relates to the compositions for the production of high-refractive index glasses, and glass objects formed therefrom, such as crystal glass.

### Background

Glass, and especially high-purity glasses such as fused silica glass are known to be difficult to shape, requiring large machinery for high-temperature melting and casting. This puts some practical limits on the types of objects that can be produced, and often requires large production throughputs in order to be economically viable. By contrast, in the field of polymers, new manufacturing paradigms based on additive manufacturing have emerged that offer greater design flexibility as well as options for production of small numbers of items.

Over recent years there have been attempts to develop additive manufacturing / 3D printing approaches for glass objects. Additive manufacturing of glass objects is a particularly attractive prospect, as it can potentially benefit from the speed of automation and the ability to produce objects having complex geometries. Moreover, additive manufacturing offers the possibility of economically viable small-scale and/or highly customised production processes.

Various processes for glass additive manufacturing are known in the art, including: selective laser sintering (SLS), where a glass powder is melted directly by a laser to form a 3D structure; fused deposition modeling (FDM), which involves extruding a molten glass (e.g. from a solid rod of pellets) through a heated nozzle onto a deposition surface; stereolithographic printing (SLA) of silica-containing liquids or silica particle suspensions at room temperature by heat, chemical or light curing; digital light processing (DLP), which is a similar technique to SLA in that it cures a liquid or suspension of silica, except that it uses a digital light projector, which can cure an entire layer of the printed object at a time, providing more rapid build speeds; and direct-ink-writing (DIW) where a liquid composition is cured and solidified by heat, chemical or photocuring upon extrusion from a printing nozzle. In the latter case UV-assisted direct-ink-writing (UV-DIW) process can provide benefits in that the combination between the extrusion of a suspension of silica and its rapid curing allows for the fabrication of overhangs, support-less features and/or layer-less components, enabling lower build times compared to DLP and DIW with similar geometric complexity.

Techniques based on extrusion of molten glass, or melting of a solid glass feedstock to form a new structure are attractive, since they can avoid many of the problems associated with 3D printing of silica-based liquids or suspensions, such as high shrinkage and cracking during curing and sintering of the printed object, and difficulties in obtaining transparent glasses of high refractive index. However, powder and extrusion-based processes require high energy input and are, therefore, costly and may not be available for small-scale, economic printing. In addition, feature resolution, lack of geometric complexity and printing speed and additional problems that have been identified with extrusion and other melt processes.

WO 2020/043788 describes liquid additive manufacturing compositions ('inks') for stereolithographic printing of glass ceramics. The compositions comprise a continuous liquid phase capable of photoinduced phase separation into a bi-continous bi-phasic structure comprising at least one or more inorganic precursor compounds, in particular alkoxylated inorganic precursor compounds and a photopolymerisable organic polymer precursor compound.

WO 2017/029673 describes ceramic inks for use in additive manufacturing techniques, such as SLA. The inks are based on transparent or semi-transparent polymerisable solutions of ceramic materials including organic and/or organometallic compounds, which avoids the need to use suspensions and particulate materials. As such, UV light used in curing of the 3D printed structure can penetrate deeper and more consistently into the liquid composition to allow more complete, quicker printing of thicker material layers and structures.

WO 2018/065093 describes a composition capable of being used in a stereolithographic process to obtain a quartz glass object, in which quartz glass particles are dispersed in a polymerisable organic polymer precursor that forms a green body that is fired to obtain a quartz glass object. Since such suspension-based compositions have a high particle load, viscosity is typically very high, limiting utility of the composition and providing relatively low resolution products.

US 2018/0036945, similarly to WO 2018/065093 describes a composition that may be used in a stereolithographic printing process, in which an inorganic material powder is dispersed in a photocurable organic polymer precursor. The composition must be degassed to avoid the formation of voids in the fired object, and does not overcome the process limitations relating to viscosity, debinding, and sintering.

The Applicant's co-pending patent application entitled 'Production Of Glass Bodies From Polymerisable Solutions' (WO 2020/245427) provides multi-component glass solutions and suspensions for casting and direct-ink-writing (DIW) based on a combination of liquid and solid silica, which increases the silica loading of the printing liquid, and thereby reduces shrinkage and weight loss on curing and sintering.

However, there is still a need in the art for liquid compositions for glass additive manufacturing that can achieve transparent and/or crack-free high-refractive index glasses. There also remains a need in the art for liquid compositions for glass additive manufacturing that can produce multi-component solid glass structures and/or coloured glasses.

Processing (specifically, by Additive Manufacturing via DLP) difficulties for a sol-gel based feedstock include: 1) compositional / viscosity change during long printing jobs due to evaporation of low boiling point solvents; 2) crack formation during drying (shrinkage stresses due to capillary forces); 3) failed print jobs (due to fracture of the sample or detachment from the building platform during the layer-by-layer printing sequence); 4) crack formation during debinding (due to the elimination of all organic moieties).

It is against this background that the invention has been devised.

### Summary of the Invention

In a first aspect, the invention resides in a photocurable sol-gel composition for the production of transparent and crack-free glass bodies, wherein the composition comprises a silicon sol-gel precursor, a photopolymerisable monomer, a transition metal precursor, organic solvent and water.

The use of both a silicon sol-gel precursor and a photopolymerisable monomer in the composition means that a first part of the composition undergoes sol-gel reactions including hydrolysis and condensation while a second part of the composition undergoes polymerisation during production of the glass body. Thus, the first part forms an inorganic portion of the network while the second part forms a organic portion of the network. Such hybrid (i.e., organic-inorganic) networks have improvements in both flexibility and strength.

The use of silicon sol-gel precursor and a photopolymerisable monomer also facilitates better control of the feedstock composition during printing, drying, debinding and firing. For example, they provide the feedstock compositions with desirable rheology which are suitable for different additive manufacturing techniques (including digital light processing, UV-assisted direct ink writing, and casting processes).

The transition metal precursor allows the feedstock composition to be used to make multicomponent glass with high refractive index, e.g. crystal glass. The selection of the transition metal precursor allows for tailorable optical properties of the printed glass body. The addition of a transition metal precursor also participates in the development of the inorganic network.

Silicon sol-gel precursor refers to a precursor that has moieties that undergo hydrolysis and condensation as part of a sol-gel process. Meanwhile, the photopolymerisable monomer polymerises on exposure to photo-energy such as UV radiation.

In a preferred embodiment, the photopolymerisable monomer comprises silicon. In this way, the photopolymerisable monomer is not solely organic and contributes to the increase in Si content in the final material (i.e. it is hybrid), thus decreasing the weight loss and shrinkage and producing less volatile components to be eliminated during debinding and sintering.

In embodiments, the silicon sol-gel precursor and/ or the photopolymerisable monomer comprises a silicon alkoxide.

The silicon sol-gel precursor may comprise or consists of triethoxymethylsilane (MTES) and/ or tetraethyl orthosilicate (TEOS).

MTES is a modified silicon alkoxide precursor, containing a nonhydrolyzable Si-C bond which reduces network connectivity, thus providing structural flexibility of the network and mitigating stress evolution during thermal treatment. Moreover, the incorporation of an organic moiety serves as an internal porogen agent, assisting in developing an open porous structure, which is of particular importance for the release of the gaseous species during the decomposition of the organic compounds.

TEOS is a fully hydrolysable silicon alkoxide and contributes to the primary Si-O backbone network.

The photopolymerisable monomer may comprises or consist of 3-(Trimethoxysilyl)propyl Methacrylate (TMSPM).

TMSPM is a silicon alkoxide containing an organic photopolymerisable functionality, thus enabling the fabrication of printed structures by photopolymerisation under UV-light. TSMPM is an advantageous in terms of cost and (limited) toxicity. TMSPM is a hybrid precursor since it acts both as a silicon source and as a monomer for the photopolymerisation process, and thus participates to provide both an inorganic portion and a photopolymerised organic portion of the overall network. Such a hybrid precursor is capable of photo-induced (e.g. under UV irradiation) polymerization, i.e. photopolymerisation, (leading to the formation of an organic portion of the network) as well as of sol-gel reactions - hydrolysis and condensation of hydrolysed alkoxides (leading to the formation of an inorganic portion of the overall network).

TMSPM is a photopolymerisable silicon monomer. Hence it is not solely organic and contributes to the increase in Si content in the final material, thus decreasing the weight loss and shrinkage and producing less volatile components to be eliminated during debinding and sintering. Moreover, it is also a silicon sol-gel precursor that can cross-link via sol-gel reactions (hydrolysis and condensation) to itself and with any other sol-gel precursors in the composition during production of the glass.

The silicon sol-gel precursor and the photopolymerisable monomer may comprise or consist of TMSPM.

In a preferred embodiment, the silicon sol-gel precursor comprises or consists of a mixture of MTES and TEOS, and the photopolymerisable monomer comprises or consists of TMSPM. Preferably, the composition includes a mixture of silicon alkoxides. More preferably, the composition includes a mixture of MTES, TEOS and TMSPM.

The silicon sol-gel precursor may comprises or consists of MTES at a concentration of between about 1 and 5 wt% and may comprises or consist of TEOS at a concentration of between about 25 and 45 wt%, and the photopolymerisable monomer may comprise or consist of TMSPM at a concentration between about 0.5 and 15 wt% of the composition.

The silicon sol-gel precursor may comprise or consist of MTES. MTES may be at a concentration of between about 1.2 and 4.8 wt%, between about 1.4 and 4.6 wt%, between about 1.6 and 4.4 wt% or between about 1.8 and 4.2 wt% of the composition. MTES may be at a concentration between about 1.85 and 4.0 wt%, or between about 1.83 and 3.84 wt% of the composition. MTES may be at a concentration of about 1.9 wt%, about 2.1 wt%, about 2.3 wt%, about 2.5 wt%, about 2.7 wt%, about 2.9 wt%, about 3.1 wt%, about 3.3 wt%, about 3.5 wt%, about 3.7 wt%, or about 3.9 wt% of the composition.

The silicon sol-gel precursor may comprise or consist of TEOS. TEOS may be at a concentration of between about 26 and 46 wt%, between about 26 and 45 wt%, between about 27 and 44 wt% or between about 28 and 43 wt% of the composition. TEOS may be at a concentration between about 29 and 42 wt%, between about 30 and wt% of the composition, or between about 30.13 and 40.69 wt% of the composition. TEOS may be at a concentration of about 30 wt%, about 31 wt%, about 32 wt%, about 33 wt%, about 34 wt%, about 35 wt%, about 36 wt%, about 37 wt%, about 38 wt%, about 39 wt%, about 40 wt%, or about 41 wt% of the composition.

The photopolymerisable monomer may comprise or consist of TMSPM. TMSPM may be at a concentration of between about 0.6 and 14 wt%, between about 0.8 and 13 wt%, between about 1.0 and 12 wt% or between about 1.2 and 10 wt% of the composition. TMSPM may be at a concentration between about 1.25 and 9.5 wt%, or between about 1.30 and 9.32 wt% of the composition. TMSPM may be at a concentration of about 1.3 wt%, about 2.3 wt%, about 3.3 wt%, about 4.3 wt%, about 5.3 wt%, about 6.3 wt%, about 7.3 wt%, about 8.3 wt%, or about 9.3 wt% of the composition. TMSPM may be at a concentration of between about 1.5 and 9.5 wt%, between about 2.0 and 9.0 wt%, between about 2.5 and 8.5 wt% between about 3.0 and 8.0 wt%; between about 3.5 and 7.5 wt%, or between about 4.0 and 7.0 wt% of the composition.

The silicon sol-gel precursor may comprise or consist of a mixture of MTES and / or TEOS and the photopolymerisable monomer may comprise or consist of TMSPM. The molar ratio of TEOS to TMSPM (TEOS:TMSPM) may be between about 12:1 and about 2:1, between about 10:1 and about 3:1, or between about 8:1 and about 4:1. The molar ratio of TEOS to TMSPM (TEOS:TMSPM) may be about 10:1, about 7.5:1 about 5:1 or about 3:1; particularly about 5:1. The molar ratio of TEOS and TMSPM to MTES (([TEOS]+[TMSPM]):[MTES]) may be between about 40:1 and about 5:1, between about 35:1 and about 10:1 or between about 30:1 and about 12:1. The molar ratio of TEOS and TMSPM to MTES (([TEOS]+[TMSPM]):[MTES]) may be about 30:1, about 25:1, about 20:1, about 17:1 or about 15:1; particularly about 17:1.

At lower values of the MTES, the benefits associated with introducing MTES are not repeated, resulting in cracked samples, whilst at higher values, the suppression of the formation of a three-dimensional network can lead to extremely shorter oligomers, which was found to be detrimental for the photopolymerisation process as long exposure times are required in order to achieve a proper degree of connectivity.

At lower values of TEOS, the final ceramic yield is significantly decreased; moreover, the formation of larger inorganic oligomeric species is hindered and the hybrid organic-inorganic network can result in a poorly-crosslinked structure, thereby reducing the extent of the crosslinking during the photopolymerisation process. At higher values of TEOS, the presence of a larger amount of hydrolyzable sites can accelerate hydrolysis and polycondensation reactions, resulting in a shorter shelf life as the gelation time is drastically reduced. Moreover, TEOS exhibits a poor affinity towards POE upon hydrolysis, inducing phase separation in the system and thus resulting in inhomogeneous solutions.

The concentration of the TMPSM preferably ranges between 1.30 and 9.32 wt% for sol-gel-based inks for digital light processing (DLP) technology, and between 7.46 to 8.53 wt% for the synthesis of sol-gel feedstock for UV-DIW printing. Lower values of TMPSM may not ensure adequate reactive material for the photopolymerisation process, and the printed structure is too soft and tends to break off during the printing. At larger values of TMPSM, the large organic content can lead to the formation of cracks during the thermal treatment due to decomposition of the organic moieties and release of the gaseous species within the printed parts. Furthermore, high concentrations of TMPSM were found to induce the formation of an extremely stiff network, and brittle and rigid printed parts, leading to detachment and delamination phenomena during the printing process.

Additionally or alternatively, the photopolymerisable monomer comprises or consists of at least one of Titanium methacrylate triisopropoxide, Titanium triacrylate methoxyethoxyethoxide, Zirconium dimethacrylate dibutoxide. The sol-gel precuror may also/ alternatively include 3-Aminopropyl)trimethoxysilane, (3-Aminopropyl)triethoxysilane,

(3-Aminopropyl)trimethoxysilane and (3-Aminopropyl)triethoxysilane can be used separately or together in place of MTES, and/ or may separately or together have the same weight concentrations as MTES as set out above.

Titanium methacrylate triisopropoxide, Titanium triacrylate methoxyethoxyethoxide, Zirconium dimethacrylate dibutoxide, Titanium methacrylate triisopropoxide, Titanium triacrylate methoxyethoxyethoxide and Zirconium dimethacrylate dibutoxide can be used separately or together in place of TMSPM as a photopolymerisable monomer and/ or may separately or together have the same weight concentrations as TMSPM as set out above.

In embodiments, the organic solvent has a boiling point of at least 100°C, at least 120°C, at least 140°C, at least 160°C, at least 180°C, at least 200°C, at least 220°C, or at least 240°C.

Additionally or alternatively, the organic solvent may have a boiling point between about 180°C and about 280°C; between about 200°C and about 270°C, between about 220°C and about 260°C, or between about 240°C and about 250°C.

Use of a "high boiling point solvent" a) stabilises the viscosity of the feedstock over a long period of time (e.g. hours); b) avoids fast evaporation during and after printing of the glass body (which can otherwise cause cracks); and c) provides (by way of only being eliminated during a drying stage after printing, i.e. after the formation of the sol-gel network) transient porosity in printed glass bodies that facilitates the escape of decomposition gases generated by the reaction of the organic moieties with air during debinding (low temperature firing).

The organic solvent may be selected from one or more of alcohol, one or more glycol ether, one or more ester, or a combination thereof. The organic solvent may be selected from one or more of n-butyl alcohol (118), benzyl alcohol (205), and phenoxyethanol (247); one or more of methyl glycol (124), ethyl glycol (197), n-propyl glycol (188), n-butyl glycol (171), diacetone alcohol (166), methoxy butanol (161), and tripropylene glycol monomethyl ether (243); one or more of n-Propyl acetate (102), butyl acetate (126), ethoxypropyl acetate (182) and propylene carbonate (242); or a mixture thereof.

In embodiments, the organic solvent comprises of consists of at least one of propylene carbonate (PC), phenoxyethanol (POE), tripropylene glycol monomethyl ether (TPM). In a particularly preferred embodiment, the organic solvent comprises or consists of a mixture of two or three of propylene carbonate (PC), phenoxyethanol (POE) and tripropylene glycol monomethyl ether (TPM).

PC is propylene carbonate (242), POE is phenoxyethanol (247), and TPM is tripropylene glycol monomethyl ether (243).

Additionally/ alternatively, the high boiling point solvent comprises at least one alcohol (n-butyl alcohol (118), benzyl alcohol (205), phenoxyethanol (247), etc.), at least one glycol ether (methyl glycol (124), ethyl glycol (197), n-propyl glycol (188), n-butyl glycol (171), diacetone alcohol (166), methoxy butanol (161), etc.) and/ or at least one ester (n-Propyl acetate (102), butyl acetate (126), ethoxypropyl acetate (182), propylene carbonate (242), etc.).

The organic solvent may comprise between about 12 and 40 wt% of the composition; between about 14 and about 38 wt% of the composition, between about 16 and about 36 wt% of the composition, between about 18 and about 34 wt% of the composition, between about 20 and about 32 wt% of the composition, or between about 22 and about 30 wt% of the composition. The organic solvent may comprise between about 19 and about 33 wt% of the composition, between 19.4 and 32.5 wt%, or between 19.45 and 32.42 wt% of the composition. The organic solvent may comprise between about 20 wt%, about 21 wt%, about 22 wt%, about 23 wt%, about 24 wt%, about 25 wt%, about 26 wt%, about 27 wt%, about 28 wt%, about 29 wt%, about 30 wt%, about 31 wt% or about 32 wt% of the composition.

Lower concentrations of the high boiling point solvent may not prevent material fracture phenomena, and cracked parts are obtained. At higher concentrations, crack-free components can be easily fabricated; however, the organic solvent content should not exceed 35 wt% in order to ensure a sufficient amount of metal alkoxides and therefore a reasonable ceramic yield.

Water may be present at a concentration between about 4 and 15 wt%, between about 5 and 14 wt%, between about 6 and 12 wt%, or between about 6.47 and 9.45 wt% of the composition. Water may be present at a concentration of about 6 wt%, about 6.5 wt%, about 7 wt%, about 7.5 wt%, about 8 wt%, about 8.5 wt%, about 9 wt%, or about 9.5 wt% of the composition.

At lower concentrations of water, the extent of the hydrolysis reactions is limited and hence unhydrolyzed species are not able to undergo polycondensation reactions to form a three-dimensional structure, thus leading to a poorly-connected network. On the other hand, higher concentrations of water would rapidly accelerate hydrolysis and polycondensation reactions, reducing the shelf life of the photocurable solution.

Water may be present at a concentration suitable to hydrolyse between about 35% and about 65%, between about 40% and about 60%, between about 45% and about 55% of the hydrolysable groups of the silicon sol-gel precursors. Water may be present at a concentration suitable to hydrolyse about 60%, about 55%, about 50%, about 45% or about 40% of the hydrolysable groups of the silicon sol-gel precursors; particularly about 50%.

In embodiments, the transition metal precursor is a transition metal alkoxide.

The transition metal precursor may comprise a source of at least one of zirconium (Zr) and titanium (Ti). The transition metal precursor may be selected from at least one of zirconium n-butoxide (ZrB) and titanium isopropoxide (TiIP). The transition metal precursors in the form of titanium isopropoxide and/ or zirconium n-butoxide participate in the development of the inorganic network by forming Si-O-Zr, Si-O-Ti, Zr-O-Zr, Ti-O-Ti and/ or Zr-O-Ti bonds.

The transition metal precursor may comprise or consist of zirconium n-butoxide (ZrB). ZrB may be present at a concentration between about 10 and 30 wt%, between about 12 and 28 wt%, between about 14 and 26 wt%, between about 16 and about 24 wt%, between about 17 and 22 wt% of the composition. ZrB may be present at a concentration between about 17.72 and 21.62 wt%, between about 18 and 21.5 wt% or between about 19 and 21 wt% of the composition. ZrB may be present at a concentration of about 18 wt%, about 18.5 wt%, about 19 wt%, about 19.5 wt%, about 20 wt%, about 20.5 wt%, about 21 wt% or about 21.5 wt% of the composition.

This therefore provides a SiO2-ZrO2 bicomponent system, and these concentrations ensure an advantageous molar ratio [Si]:[Zr] ranging from 4.7 to 5.0. The advantage of a zirconium precursor is that it provides a multicomponent glass with high refractive index, e.g. crystal glass. Higher concentrations can potentially promote the growth of the zirconia crystallites, leading to low optical quality and lack of transparency in the glass components due to scattering phenomena from the crystalline domains, whereas lower concentrations would not significantly improve the optical properties.

The transition metal precursor may comprise or consist of titanium isopropoxide (TiIP). TilP may be present at a concentration between about 5 and 20 wt%, between about 6 and 19 wt%, between about 7 and 18 wt%, between about 8 and about 17 wt%, or between about 9 and 16 wt% of the composition. TilP may be present at a concentration between about 10 and 15 wt%, between about 11 and 14 wt% or between about 11.72 and 13.55 wt% of the composition. TilP may be present at a concentration of about 11.5 wt%, about 12 wt%, about 12.5 wt%, about 13 wt%, or about 13.5 wt% of the composition.

This therefore provides a SiO2-TiO2 multicomponent (bicomponent) system, and these concentrations ensure an advantageous molar ratio [Si]:[Ti] of 5. The advantage of a titanium precursor is that it provides a multicomponent glass with a high refractive index, e.g. crystal glass. Higher concentrations can potentially promote the growth of the titania crystallites, leading to low optical quality and lack of transparency in the glass components due to scattering phenomena from the crystalline domains, whereas lower concentrations would not significantly improve the optical properties.

The transition metal precursor may comprise or consist of a mixture of a source of zirconium (Zr) and/ or a source of titanium (Ti). The molar ratio of silicon to zirconium and titanium [Si:(Zr+Ti)] may be between about 12:1 and about 2:1, between about 10:1 and about 3:1, or between about 8:1 and about 4:1. The molar ratio of silicon to zirconium and titanium [Si:(Zr+Ti)] may be about 10:1, about 8:1, about 6:1, about 5:1, about 4:1 or about 3:1; particularly about 5:1.

The transition metal precursor may comprise or consist of a mixture ZrB and / or TiIP. The total amount of ZrB and TilP may be present at a concentration between about 10 and 21 wt%, between about 13 and 18 wt%, between about 14 and 17 wt%, between about 14.5 and about 16.5 wt%, or between 15 and 16 wt% of the composition. The total amount of ZrB and TilP may be present at a concentration between about 11.5 and 20.5 wt%, between about 13.5 and 18.5 wt% or between about 15.5 and 16.5 wt% of the composition. The total amount of ZrB and TilP may be present at a concentration of about 14.5 wt%, about 15 wt%, about 15.63 wt%, about 16 wt%, or about 16.5 wt% of the composition.

A mixture or ZrB and TilP provides a SiO2-ZrO2-TiO2 multicomponent (tricomponent) system, and these concentrations ensure an advantageous molar ratio [Si]:([Ti]+[Zr]) of 5. The advantage of a tricomponent system is that it provides a multicomponent glass with a high refractive index, e.g. crystal glass. Higher concentrations can potentially promote the growth of the zirconia and titania crystallites, leading to low optical quality and lack of transparency in the glass components due to scattering phenomena from the crystalline domains, whereas lower concentrations would not significantly improve the optical properties.

The composition is preferably suitable for producing transparent and crack-free glass bodies with refractive indices of more than about 1.535, more than about 1.540, more than about 1.545, more than about 1.550 or even more than 1.555. Such refractive indices of glass have up to now not between possible with photocurable systems.

In preferred embodiments the composition further comprises a chelating agent.

Processing of hybrid systems consisting solely of a continuous network containing both organic and inorganic building blocks is challenging, as the behaviour generated during the manufacturing operations in response to the stresses can be significantly different, resulting in cracks formation and damaged parts, particularly when the bodies are shaped with digital light processing.

To address this shortcoming, the inventors have developed an innovative approach to partially decouple the photopolymerised organic portion of the network from the inorganic one by means of a partial substitution of the hybrid precursor with a chelating agent such as a carboxylic acid monomer (e.g., acrylic acid). This serves to distribute the (e.g. transition) metal precursor homogeneously through the material, and generates an independent, continuous organic network upon photopolymerisation. This thorough control of the structural assembly can be paramount in preventing the formation of defects in the printed structures and to enable the synthesis of a formulation that can withstand the stresses exerted during the manufacturing processes.

It is posited that the presence of the fully and continuous organic network (formed by e.g. acrylic acid through the photopolymerisation reaction) affords either flexibility to the overall network or increases its strength (or both). Based on preliminary data, the second explanation seems the most likely cause, since it makes it capable of withstanding the stresses deriving from the printing process and the subsequent thermal treatment. Notably, a too high - or total - substitution of hybrid precursor (e.g. TMSPM) with chelating agent (e.g. AA) can result in stronger bodies, but upon de-binding severely damaged samples. Both acrylates can be provided in order to provide strength in both states.

When a chelating agent is present and contains/ is a monomer capable of photopolymerization, there can be two photopolymerised networksWhen a chelating agent is present, there can be two photopolymerised networks. The first photopolymerised network is derived from the photopolymerisation of the e.g., hybrid precursor (e.g. TMSPM) which is directly bonded to the inorganic network by O-Si-C bonds. The second photopolymerised network is instead derived from the photopolymerisation of the chelating agent e.g. a fully organic reactant acrylic acid.

Acrylic acid acts as a chelating agent as well - thus during the first stages it is still bonded to the transition metal precursors through coordination bonds, preventing the transition metal precursors (which are much more reactive compared to the silicon alkoxides in the formulation) to be quickly hydrolysed and condensed. However, the presence of water weakens these bonds and slowly the transition metal precursor become available for the hydrolysis and condensation reactions. Acetic acid solely chelates the alkoxides but does not participate to the photopolymerisation reactions.

Acrylic acid does decouple the two networks (i.e. the organic part is separated from the inorganic one); however, Acrylic acid can also react with TMSPM during the photopolymerisation reactions. When it does that, this establishes a link between the organic network and the inorganic one. Due to the relative content of the two photocurable materials, a good part of the organic network is expected to be decoupled from the inorganic one. However, in order to decouple the two photopolymerised networks, other monomers (i.e. HEMA, TEGDA, HEA, trimethylolpropane triacrylate etc.) and/ or photopolymer (PEGDA, PEGDMA etc) could be used since they are fully organic compounds capable of undergoing photopolymerisation reactions and thus creating a fully organic photopolymerised network.

Acrylic acid is thus preferred because it plays a dual role - chelating agent for the transition metal precursors and monomer for the photopolymerisation.

The chelating agent also moderates the reactivity of the transition metal precursor.

The chelating agent may be a carboxylic acid, and may preferably be selected from at least one of acetic acid and acrylic acid.

Acetic acid can be used as a chelating agent to moderate the reactivity of the transition metal alkoxide(s). Acrylic acid (AA) plays a dual role and is preferably solely employed in sol-gel-based solutions for DLP: (i) as a chelating agent, it controls the reactivity of the transition metal alkoxide, (ii) as a monomer, it provides a photocurable species for the photopolymerisation process in addition to the hybrid precursor such as TMSPM, and assists in tailoring the flexibility of the hybrid inorganic-organic network. AA is thus an organic photopolymerisable component.

In this regard, the carboxylic acid improves the flexibility of the hybrid network, which is beneficial for the survival of the samples to processing.

The chelating agent may comprise or consist of acetic acid. Acetic acid may be present at a concentration between about 1 and 10 wt%, between about 1.25 and 9.5 wt%, between about 1.5 and 9 wt%, between about 1.75 and 8.5 wt%, between about 2.0 and 8 wt%, or between about 2.25 and 7.75 wt% of the composition. Acetic acid may be present at a concentration between about 2.37 and 7.63 wt%, between about 2.5 and 7.5 wt%, between about 3 and 7 wt%, between about 3.5 and 6.5 wt% between about 4 and 6 wt% of the composition. Acetic acid may be present at a concentration of about 2.5 wt%, about 3 wt%, about 3.5 wt%, about 4 wt%, about 4.5 wt%, about 5 wt%, about 5.5 wt%, about 6 wt%, about 6.5 wt%, about 7 wt% or about 7.5 wt% of the composition.

Lower concentrations of acetic acid (AcOH) may not decrease the reactivity of the metal precursor such as ZrB and/or TiIP, thereby leading to unstable and inhomogeneous solutions due to rapid hydrolysis and immediate precipitations phenomena, whereas higher concentrations decrease the degree of oligomerization, lowering the network connectivity and hence worsening the printing process.

The chelating agent may comprise or consist of acrylic acid. Acrylic acid may be present at a concentration between about 0.5 and 8 wt%, between about 0.75 and 7 wt%, between about 1 and 6 wt%, between about 1.25 and 5 wt%, or between about 1.5 and 4 wt% of the composition. Acrylic acid my be present at a concentration between about 1.64 and 3.68 wt%, between about 1.8 and 3.5 wt%, between about 2.0 and 3.2 wt%, between about 2.2 and 3 wt%, between about 2.4 and 2.8 wt% of the composition. Acrylic acid may be present at a concentration of about 1.5 wt%, about 1.75 wt%, about 2 wt%, about 2.25 wt%, about 2.5 wt%, about 2.75 wt%, about 3 wt%, about 3.25 wt%, about 3.5 wt%, or about 3.75 wt% of the composition.

Acrylic acid (AA) advantageously acts to stabilise the transition metal alkoxides, which are very reactive. In contrast, the silicon alkoxides (TEOS, MTES, TMSPM for example) do not need any stabilisation. Absence or lower concentrations of AA induce precipitation phenomena due to the lack of stabilization of the transition metal precursor; furthermore, the printed objects become increasingly stiffer and brittle, resulting in damaged parts during the printing process. Higher concentrations of AA allow more complex structures to be printed; however, the large amount of organic content causes cracking of the printed components during the debinding process.

The ratio of the chelating agent to transition metal precursor(s) (ligand) may be between about 3:1 and 1:1, between about 2:75:1 and 1.25:1, between about 2.5:1 and 1.5:1, or between about 2.25:1 and 1:75:1. The ratio of the chelating agent to transition metal precursor(s) (ligand) may be about 2.4:1, about 2.2:1, about 2:1, about 1.8:1 or about 1.6:1; particularly about 2:1.

In embodiments, the composition further comprises nitric acid. Nitric acid is used as a catalyst for the hydrolysis reactions. Moreover, under acidic conditions, hydrolysis reactions are faster than condensation reactions, thus favouring the formation of an inorganic polymeric network as opposed to a particulate gel. By adding nitric acid, the pH of the first solution can be made close to 1, thus accelerating the hydrolysis of TEOS and/ or the other Si alkoxide(s).

In embodiments, the composition further comprises a photoinitiator. The photoinitiator may be diphenyl(2,4,6-trimethylbenzoyl) phosphine oxide (TPO).

The photoinitiator may be present at a concentration of between about 1 wt% and 12 wt%, between about 2 wt% and 10 wt%, between about 3 wt% and 8 wt%, or between about 4 wt% and 6 wt% relative to the weight of photopolymerisable compounds. The photoinitiator may be present at a concentration of about 3 wt%, about 4 wt%, about 5 wt%, about 6 wt%, about 7 wt% or about 8 wt%; particularly about 5 wt% relative to the weight of photopolymerisable compounds.

In embodiments, the composition further comprises a photoabsorber. A photoabsorber is especially advantageous for compositions/ feedstocks that are to be printed by digital light processing. The photoabsorber avoids overexposure and loss of resolution in the Z printing direction during an e.g. digital light processing process. The photoabsorber may be 2-[(E)-(2-methoxyphenyl) diazenyl]naphthalen-2-ol.

The photoabsorber may be present at a concentration of between about 0.01 wt% and 0.1 wt%, between about 0.015 wt% and about 0.075 wt%, between about 0.0175 wt% and about 0.05 wt%, or between about 0.02 wt% and about 0.03 wt% of the composition. The photoabsorber may be present at a concentration of about 0.015 wt%, about 0.0175 wt%, about 0.02 wt%, about 0.0225 wt%, about 0.025 wt% or about 0.0275 wt%; particularly about 0.0225 wt% of the composition.

In embodiments, the composition further comprises a colouring agent or dye such as a transition metal acetate. In this way, coloured glass samples can be fabricated by doping the sol-gel photocurable formulation.

The colouring agent or dye may, for example, comprises or consist of cobalt(II) acetate and/ or copper(II) acetate and/ or other transition metal acetates such as chromium (III) nitrate, chromium(III) acetate, manganese(II) acetate, iron(II) acetate, nickel(II) acetate, neodymium(III) acetate and/ or vanadium(III) acetate. Alternatively or additionally, the colouring agent or dye may comprise metals (e.g. gold silver, copper, etc.) preferably in the form of nanoparticles and/ or semiconductors (e.g. CdS, PbS, etc.) preferably in the form of nanoparticles.

The colouring agent or dye may be present at a concentration of between about 0.01 and 2.5 wt%, between about 0.02 and 2.0 wt%, between about 0.03 and 1.7 wt%, between about 0.04 and 1.6 wt%, or between about 0.05 and 1.5 wt% of the composition.

The invention extends to a method of making a photocurable sol-gel composition for the production of transparent and crack-free glass bodies, wherein the composition comprises a silicon sol-gel precursor, a photopolymerisable monomer, an organic solvent and water, the method comprising:
preparing a first solution by mixing a silicon sol-gel precursor and a photopolymerisable monomer with a solvent,
adding water to the first solution,
subjecting the first solution to a first mixing
preparing a second solution comprising a transition metal precursor, and
mixing the first and second solutions to form a third solution.

This method can make solid and transparent glass bodies. The first solution is preferably prepared in a first vial. The water (e.g. distilled water) is preferably introduced into the first solution dropwise. The first mixing preferably lasts five minutes and is preferably done in a closed vial. The first solution may be referred to as the S solution.

The second solution is preferably prepared in a second vial. The first and second vials are preferably different. Preparing a second solution comprising a transition metal precursor may comprise preparing at least one second solution wherein the or each second solution comprises a different transition metal. The second solution(s) may be referred to as the M solution(s). Mixing the first and second solutions may comprise pouring the second solution into the first solution, preferably while continuously stirring the first solution at Southbank Centre, London 1000 rpm.

All of the above-stated steps are preferably performed at ambient temperature and all the reagents are preferably used as-received.

In preferred embodiments the step of preparing a second solution comprises mixing the transition metal precursor with a chelating agent. The second solution is preferably mixed in a closed vial for preferably 25 minutes.

In embodiments, the method further comprises adding nitric acid to the first solution. Preferably nitric acid is added to the first solution after the first mixing. The nitric acid may be added in an amount sufficient to bring the pH of the first solution to less than 3, less than 2 or to about 1.

Optionally , the method further comprises subjecting the mixture of nitric acid and the first solution to a second mixing. The second mixing preferably involves stirring the first mixture in a closed vial, preferably for 50 minutes.

Nitric acid is used as a catalyst for the hydrolysis reactions. Moreover, under acidic conditions, hydrolysis reactions are faster than condensation reactions, thus favouring the formation of an inorganic polymeric network as opposed to a particulate gel. By adding nitric acid, the pH of the first solution can be made close to 1, thus accelerating the hydrolysis of TEOS and/ or the other Si alkoxide(s).

In embodiments, the method further comprises a step of adding a photoinitiator to the third solution. The photoinitiator may be diphenyl(2,4,6-trimethylbenzoyl) phosphine oxide (TPO).

The photoinitiator may be added to provide a concentration in the third solution of between about 1 wt% and 12 wt%, between about 2 wt% and about 10 wt%, between about 3 wt% and about 8 wt%, or between about 4 wt% and about 6 wt% relative to the weight of photopolymerisable compounds. The photoinitiator may be added to provide a concentration in the third solution of about 3 wt%, about 4 wt%, about 5 wt%, about 6 wt%, about 7 wt% or about 8 wt%; particularly about 5 wt% relative to the weight of photopolymerisable compounds. The photoinitiator is preferably added at concentrations of 5 wt% relative to the weight of the photopolymerisable compounds.

In embodiments, the method further comprises a step of adding a photoabsorber to the third solution. The photoabsorber is especially advantageous for compositions/ feedstocks that are to be printed by digital light processing. The photoabsorber avoids overexposure and loss of resolution in the Z printing direction during an e.g. digital light processing process. The photoabsorber may be 2-[(E)-(2-methoxyphenyl) diazenyl]naphthalen-2-ol.

The photoabsorber may be added to provide a concentration in the third solution of between about 0.01 wt% and 0.1 wt%, between about 0.015 wt% and about 0.075 wt%, between about 0.0175 wt% and about 0.05 wt%, or between about 0.02 wt% and about 0.03 wt% relative to the weight of the third solution. The photoabsorber may be added to provide a concentration in the third solution of about 0.015 wt%, about 0.0175 wt%, about 0.02 wt%, about 0.0225 wt%, about 0.025 wt% or about 0.0275 wt%; particularly about 0.0225 wt% relative to the weight of the third solution.

The photoabsorber is preferably 2-[(E)-(2-Methoxyphenyl)diazenyl]naphthalen-2-ol (Sudan Red G), and it is preferably added at concentrations of 0.0225 wt% relative to the total weight of the composition/ feedstock.

In embodiments, the method further comprises a step of adding a colouring agent or dye to the third solution. In this way, coloured glass samples can be fabricated by doping the sol-gel photocurable formulation.

The colouring agent or dye may, for example, comprises different concentrations of cobalt(ll) acetate and/ or copper(II) acetate and/ or other transition metal acetates such as chromium (III) nitrate, chromium(III) acetate, manganese(II) acetate, iron(II) acetate, nickel(II) acetate, neodymium(III) acetate and/ or vanadium(III) acetate. Alternatively or additionally, the colouring agent or dye may comprise metals (e.g. gold silver, copper, etc.) preferably in the form of nanoparticles and/ or semiconductors (e.g. CdS, PbS, etc.) preferably in the form of nanoparticles.

The method is preferably performed at a temperature of between about 16 and 30 °C, between about 17 and 28 °C, between about 18 and 25 °C, or between about 19 and 22 °C.

The invention further extends to a method of making a transparent and crack-free glass object using the photocurable sol-gel composition described above or using a photocurable sol-gel composition made according to the method described above, wherein the method comprises:
providing the photocurable sol-gel composition,
depositing the photocurable sol-gel composition,
exposing at least a portion of the photocurable sol-gel composition to a source of photoenergy so as to form a cured object comprising a cured portion of the composition; and
subjecting the cured object to a thermal treatment to form a glass object.

Complex three-dimensional structures can be printed by such a method.

The exposing step may include photopolymerisation of the photocurable sol-gel composition. Meanwhile, the sol-gel reactions comprise hydrolysis and condensation. Hydrolysis typically starts immediately after the addition of water during the synthesis of the formulation and continues until the end of the aging step. Condensation typically starts right after hydrolysis, as soon as enough groups are hydrolysed (even though it is slowed down by the presence of a chelating agent) and continues until the end of the drying step. That said, in order for the material to behave like a gelled solid (i.e., for condensation to reach enough completion), it can takes about 48 hours.

In preferred embodiments, the method further comprises a further step of subjecting the photocurable sol-gel composition to a resting process between the steps of providing and depositing the photocurable sol-gel composition.

The resting process advantageously increases the strength of the resulting network after the fabrication of the samples. Resting of the formulations has been found to increase the speed of the curing / printing process and also to increase the viscosity of the formulation, which can help in processes such as direct-in-writing. The resting step stimulates the partial formation of the inorganic network so that, upon UV irradiation, the rate formation of the crosslinked part is increased).

The resting process preferably comprises stirring, more preferably continuous stirring, of the photocurable sol-gel composition.

The resting process may comprise storing the photocurable sol-gel composition for a predefined period of time, preferably in a closed container. The resting process may comprise storing the photocurable sol-gel composition for a period of between about 1 hour and 3 days, between about 2 hours and 2 days, between about 10 and 36 hours, between about 16 and 32 hours, between about 20 and 28 hours, or between about 22 and 26 hours. The resting process may comprise storing the photocurable sol-gel composition for a period of about 1, about 2, about 6, about 16, about 20, about 22, about 24, about 26, about 28, about 32, about 36 hours, or about 2 or 3 days.

When the photocurable sol-gel composition is to be printed by DLP, it is preferably left to rest for only between 15 and 24 hours prior to printing. This is because the DLP formulations are relatively more reactive, and so it can be beneficial to print the formulations earlier.

The resting process preferably comprises storing the photocurable sol-gel composition at a temperature of between about 16 and 30 °C, between about 17 and 28 °C, between about 18 and 25 °C, or between about 19 and 22 °C. The resting process may comprise storing the photocurable sol-gel composition at room or ambient temperature.

Between the steps of providing and depositing the photocurable sol-gel composition, the method may comprise a further step of subjecting the photocurable sol-gel composition to an evaporation process. Evaporation increases the viscosity of the feedstock composition which is especially useful for UV-DIW printing and curing. The evaporation process can be employed to ensure the feedstock composition exhibits the required rheological response for the deposition method.

The evaporation process may comprise heating the photocurable sol-gel composition. The evaporation process may comprise stirring, more preferably continuous stirring, of the photocurable sol-gel.

The evaporation process may be performed with the photocurable sol-gel composition exposed to air.

The evaporation process may comprise heating the photocurable sol-gel composition for a period of between about 15 minutes and 12 hours, between about 20 minutes and 9 hours, between about 30 minutes and 6 hours, or between about 1 and 4 hours. The evaporation process may comprise heating the photocurable sol-gel composition for a period of about 30 minutes, about 1 hour, about 2 hours, about 3 hours, about 4 hours, about 5 hours or about 6 hours.

The evaporation process may comprise incubating the photocurable sol-gel composition at a temperature of between about 45 and 75 °C, between about 50 and 70 °C, between about 55 and 65 °C or between about 58 and 62 °C. The evaporation process may comprise incubating the photocurable sol-gel composition at a temperature of about 50 °C, about 55 °C, about 60 °C, about 65 °C or about 70 °C; particularly about 60 °C.

The evaporation process may be performed to achieve a weight loss of the photocurable sol-gel composition of between about 5 and 40 wt%, between about 10 and 35 wt%, between about 15 and 30 wt%, or between about 20 and 25 wt%. The evaporation process may be performed to achieve a weight loss of the photocurable sol-gel composition of about 10 wt%, about 15 wt%, about 20 wt%, or about 25 wt%.

In embodiments, the photocurable sol-gel composition can be heated for 30 minutes, for 1 hour, for 2 hours, for 3 hours, for 3.5 hours or for 6 hours. When heated for 3 hours, the solvent evaporation resulted in a mass loss of 13wt%. When heated for 3.5 hours, the solvent evaporation resulted in a mass loss of 25wt%. When heated for 6 hours, the solvent evaporation resulted in a mass loss of 30wt%.

In other embodiments, the sol-gel photocurable is mixed for only one hour, and the evaporation process lasts only 4 hours. The solvent evaporation resulted in a mass loss of between 19wt% and 23wt%.

In preferred embodiments, the evaporation process is performed after the resting process.

Alternatively (or additionally), the resting and/ or evaporation processes can be performed as part of the method of making the photocurable sol-gel composition. In this case, the resting and/ or evaporation processes are performed as a final step.

By way of the above, the feedstock can be provided with a viscosity between 0.5 and 5 Pa.s. In this way, the liquid is not so fluid that it drips spontaneously from the nozzle. Likewise, the degree of condensation (which increases the viscosity) is not so advanced to the level of consolidating after a few minutes. Hence, in this way a reasonably large printing window (~1 to 1.5h) is obtained.

As such, complex three-dimensional glass structures can be fabricated by means of ultraviolet-assisted direct ink writing technology (UV-DIW). The feedstock rheology is advantageously easily tailored through the two interplaying mechanisms: solvent-evaporation and control over the sol-gel condensation process. The former mechanism allows for the formation of concentrated sol-gel feedstocks by removal of the solvents in advance, thus leading to a rise in viscosity. Moreover, the transition metal alkoxides exhibit higher reactivity toward hydrolysis and condensation compared to silicon alkoxides, and thus favours the process of gelation and results in a dramatic increase of the feedstock viscosity. The photocurable sol-gel composition can then be transferred into a 5-ml syringe barrel and the feedstock-loaded syringe barrel can be installed into a z-axis of a three-axis motion-controlled stage. The above conditions thus enable the extrusion of a continuous liquid filament, which can be instantaneously hardened in order to retain the given shape by applying UV radiation to rapidly solidify the liquid upon exiting from the nozzle.

Depositing the photocurable sol-gel composition may comprise printing the photocurable sol-gel composition onto or into a substrate.

Printing the photocurable sol-gel composition may comprise extruding the photocurable sol-gel composition through a nozzle. The nozzle may have an outlet diameter of between about 150 and 1000 µm, between about 175 and 500 µm, between about 200 and 450 µm, between about 225 and 425 µm or between about 250 and 410 µm. The nozzle may have an outlet diameter of about 200 µm, about 250 µm, about 300 µm, about 350 µm, about 400 µm, or about 410 µm.

Depositing the photocurable sol-gel composition may comprise printing the photocurable sol-gel composition via Digital Light Processing (DLP) or UV-assisted Direct Ink Writing (UV-DIW).

For DLP, an organic photocurable network former such as Acrylic acid and a photoabsorber such as Sudan red ae preferably used. SLA may also be used instead of DLP.

Depositing the photocurable sol-gel composition may comprise depositing a volume of the photocurable sol-gel composition in a container.

Depositing the photocurable sol-gel composition may comprise casting or soft lithography of the photocurable sol-gel composition.

The photoenergy is optionally UV radiation. The source of photoenergy may be a light source emitting light with wavelengths between around 300 and 500nm, between around 325 to 500nm, between around 350 to 450nm, or between 375 and 400 nm. One convenient selection for the light source is a LED light source. Preferably the LED light source emits light with wavelengths of about 385 nm

Exposing at least a portion of the photocurable sol-gel composition to a source of photoenergy may comprise placing the photocurable sol-gel composition in a UV oven.

The photocurable sol-gel composition may be exposed to UV radiation for between about 1 and 20 minutes, between about 2 and 15 minutes, between about 3 and 10 minutes, or between about 4 and 6 minutes.

The steps of depositing the photocurable sol-gel composition and exposing at least a portion of the photocurable sol-gel composition to a source of photoenergy may be performed by Digital Light Processing (DLP) or UV-assisted Direct Ink Writing (UV-DIW).

The Digital Light Processing may use a Asiga Pico2 with a UV-LED light source of 385 nm. The sol-gel photocurable is first poured into the vat of a 3D printer. The layer thickness is preferably set at 50 µm, with an exposure time between 4 and 6s, and a light intensity of 29 mW/cm2

The UV-assisted Direct Ink Writing (i.e. extrusion-based 3D printing process) may be performed using a Delta printer (e.g. WASP Delta Turbo2 2040) coupled with a UV-LED array system. The photocurable sol-gel composition can then be extruded through conical nozzles with a 250 or 410 µm diameter.

Exposing at least a portion of the photocurable sol-gel composition to a source of photoenergy may comprise exposing at least a portion of the photocurable sol-gel composition within a predefined layer thickness of the composition to the photoenergy.

The predefined layer may have a thickness of between about 10 and 250 µm, between about 20 and about 200 µm, between about 30 and about 150 µm, between about 40 and about 100 µm, or between about 50 and about 75 µm. The predefined layer may have a thickness of about 10 µm, about 20 µm, about 30 µm, about 40 µm, about 50, about 60 µm, or about 70 µm; particularly about 50 µm.

Exposing at least a portion of the photocurable sol-gel composition to a source of photoenergy may comprise exposing the portion of the photocurable sol-gel composition to photoenergy for a period of between about 1 and 20 s, between about 2 and 15 s, between about 3 and 10 s, or between about 4 and 6 s.

Exposing at least a portion of the photocurable sol-gel composition to a source of photoenergy may comprise exposing the portion of the photocurable sol-gel composition to photoenergy at a light intensity of between about 10 and 50 mW/cm2, between about 15 and 45 mW/cm2, between about 20 and 40 mW/cm2, between about 25 and 35 mW/cm2, or between about 28 and 32 mW/cm2.

Exposing at least a portion of the photocurable sol-gel composition to a source of photoenergy may comprise exposing the portion of the photocurable sol-gel composition to photoenergy at a light intensity of about 25, about 26, about 27, about 28, about 29, about 30, about 31, about 32, or about 33 s; particularly about 29s.

In preferred embodiments, the method further comprises a further step of subjecting the cured object to an aging process after the step of exposing at least a portion of the photocurable sol-gel composition to a source of photoenergy but before the step of subjecting the cured object to a thermal treatment.

The aging process advantageously increases the strength of the resulting network after the fabrication of the samples. Aging of the formulations has been found to increase the speed of the curing / printing process and also to increase the viscosity of the formulation, which can help in processes such as direct-in-writing. Aging (after shaping) of the cast/3D printed part increases the strength of the network (so that no crack formation occurs during sintering) and increases the final content of silica (to provide a more cross-linked network (by condensation of M-OH groups), leading to lower weight loss upon firing - see TGA curves).

The aging process may comprise storing the cured object for a predefined period of time.

The aging process may comprise storing the cured object for a period of between about 3 and 30 days, between about 4 and 24 days, between about 5 and 20 days, between about 6 and 18 days, between about 7 and about 14 days, or between about 8 and about 12 days. The aging process may comprise storing the cured object for a period of about 5, about 6, about 7, about 8, about 9, about 10, about 11, about 12, about 13, about 14 or about 15 days.

The aging process may comprise storing the cured object at a temperature of between about 16 and 30 °C, between about 17 and 28 °C, between about 18 and 25 °C, or between about 19 and 22 °C. The aging process may comprise storing the cured object at room or ambient temperature.

In preferred embodiments, subjecting the cured object to a thermal treatment to form a glass object comprises drying the cured object.

Drying the cured object may comprise incubating the cured object at a temperature of between about 90 and 150 °C, between about 100 and 140 °C, or between about 110 and 130 °C. Drying the cured object may comprise incubating the cured object at a temperature of about 100 °C, about 110 °C, about 120 °C, or about 130 °C; particularly about 120 °C.

The thermal treatment may comprise drying the cured object according to the following protocol:
(i) heating the cured object from ambient temperature to a first target temperature between about 40 and 60 °C at a temperature ramp of between about 0.1 and 0.3 °C/min, and incubating the cured object for between about 12 and 16 hours at the first target temperature;
(ii) heating the cured object from the first target temperature to a second target temperature between about 70 and 90 °C at a temperature ramp of between about 0.15 and 0.35 °C/min, and
   incubating the cured object for between about 2 and 4 hours at the second target temperature;
(iii) heating the cured object from the second target temperature to a third target temperature between about 90 and 110 °C at a temperature ramp of between about 0.23 and 0.43 °C/min, and
   incubating the cured object for between about 2 and 4 hours at the third target temperature;
(iv) heating the cured object from the third target temperature to a fourth target temperature between about 110 and 130 °C at a temperature ramp of between about 0.23 and 0.43 °C/min, and
Incubating the cured object for between about 13 and 17 hours at the fourth target temperature.

The thermal treatment may comprise drying the cured object according to the following protocol:
(i) heating the cured object from ambient temperature to a first target temperature of about 50°C at a temperature ramp of about 0.2°C/min, and
   incubating the cured object for about 14 hours at the first target temperature;
(ii) heating the cured object from the first target temperature to a second target temperature about 80°C at a temperature ramp of 0.25°C/min, and
   incubating the cured object for about 3 hours at the second target temperature;
(iii) heating the cured object from the second target temperature to a third target temperature about 100°C at a temperature ramp of about 0.33°C/min, and
   incubating the cured object for about 3 hours at the third target temperature;
(iv) heating the cured object from the third target temperature to a fourth target temperature about 120°C at a temperature ramp of about 0.33°C/min, and
incubating the cured object for about 15 hours at the fourth target temperature.

Drying may be performed under air.

In preferred embodiments, subjecting the cured object to a thermal treatment to form a glass object comprises subjecting the cured object to debinding and sintering. Preferably, debinding and sintering are performed during a single heating curve.

In preferred embodiments, debinding and sintering is performed after drying. This advantageously may ensure essentially complete removal of organic species and uniform densification. Debinding and sintering are advantageously combined into a single heating curve, so as to avoid handling the samples before they have obtained a sufficient strength.

In one particularly preferred embodiment, the cured object is left to cool between the drying and the debinding and sintering sub-steps. The first oven that the sample is dried in may be different from the second oven that the sample is debinded and sintered in.

When thermal debinding and sintering is performed after drying as part of the thermal treatment, the "cured" object mentioned above may be referred to as the "dried" object instead.

Subjecting the cured object to debinding and sintering may comprise incubating the cured object at a temperature of between about 900 and about 1,150 °C, between about 950 and about 1,100 °C or between about 975 and 1,050 °C. Subjecting the cured object to debinding and sintering may comprise incubating the cured object at a temperature of about 950 °C, about 975 °C, about 1,000 °C, about 1,025 °C or about 1,050 °C; particularly about 1,000 °C.

Sintering is thus performed at a much lower temperature (< 1150°C) than is used for sintering glass derived from feedstocks containing colloidal silica. Also both rebinding and sintering can be performed in air (as opposed to in vacuum).

Debinding and sintering may be performed by heating the cured object from ambient temperature to a target debinding-sintering temperature over a plurality of heating stages. Each heating stage may comprise a ramped temperature increase to the target debinding-sintering temperature followed by an incubation period at the target temperature. The incubation period may be between about 30 minutes and 6 hours, between about 1 hour and 5 hours, or between about 2 hours and 4 hours. The incubation period may be about 1 hour, about 2 hours, about 3 hours, about 4 hours, or about 5 hours.

The heating stages may comprise: heating the cured object from ambient temperature to a first intermediate temperature, wherein the first intermediate temperature is less than the target debinding-sintering temperature, and incubating the cured object at the first intermediate debinding-sintering temperature for a first predetermined period of time; heating the cured object from the first intermediate temperature to a second intermediate temperature, wherein the second intermediate temperature is less than the target debinding-sintering temperature, and incubating the cured object at the second intermediate debinding-sintering temperature for a second predetermined period of time; and optionally repeating the steps of heating and incubating for one or more of a third, fourth, fifth, sixth, seventh and eighth steps, until the target debinding-sintering temperature is reached; followed by a step of cooling the cured object to ambient temperature to provide the glass object.

Heating may be performed by a ramped temperature increase, and wherein the ramp is between about 0.05 and 0.5 °C/min, between about 0.06 and 0.4 °C/min, between about 0.07 and 0.3 °C/min, between about 0.08 and 0.2 °C/min. Heating may be performed by a ramped temperature increase, and wherein the ramp is about 0.05 °C/min, about 0.1 °C/min, about 0.2 °C/min, or about 0.3 °C/min; particularly about 0.1 °C/min.

The thermal treatment may comprise debinding and sintering of the cured object, according to the following protocol:
(i) heating the cured object from ambient temperature to a first target temperature between about 70 and 120 °C at a temperature ramp of between about 0.05 and 0.2 °C/min, and
   incubating the cured object for between about 1 and 4 hours at the first target temperature;
(ii) heating the cured object from the first target temperature to a second target temperature between about 170 and 210 °C at a temperature ramp of between about 0.05 and 0.2 °C/min, and
   incubating the cured object for between about 1 and 4 hours at the second target temperature;
(iii) heating the cured object from the second target temperature to a third target temperature between about 210 and 250 °C at a temperature ramp of between about 0.05 and 0.2 °C/min, and
   incubating the cured object for between about 1 and 4 hours at the third target temperature;
(iv) heating the cured object from the third target temperature to a fourth target temperature between about 250 and 290 °C at a temperature ramp of between about 0.05 and 0.2 °C/min, and
   incubating the cured object for between about 1 and 4 hours at the fourth target temperature;
(v) heating the cured object from the fourth target temperature to a fifth target temperature between about 290 and 330 °C at a temperature ramp of between about 0.05 and 0.2 °C/min, and
   incubating the cured object for between about 1 and 4 hours at the fifth target temperature;
(vi) heating the cured object from the fifth target temperature to a sixth target temperature between about 400 and 500 °C at a temperature ramp of between about 0.05 and 0.2 °C/min, and
   incubating the cured object for between about 1 and 4 hours at the sixth target temperature;
(vii) heating the cured object from the sixth target temperature to seventh target temperature between about 750 and 850 °C at a temperature ramp of between about 0.1 and 0.3 °C/min, and
   incubating the cured object for between about 1 and 4 hours at the seventh target temperature;
(viii) heating the cured object from the seventh target temperature to a target debinding-sintering temperature between about 950 and 1,150 °C at a temperature ramp of between about 0.1 and 0.3 °C/min, and
   incubating the cured object for between about 1 and 4 hours at the target debinding-sintering temperature; and optionally
(ix) cooling the cured object from 1,000 °C to ambient temperature at a temperature ramp of about 0.5°C.

The thermal treatment may comprise debinding and sintering of the cured object, according to the following protocol:
(x) heating the cured object from ambient temperature to about 75 °C at a temperature ramp of about 0.1 °C/min, and
incubating the cured object for about 3 hours at about 75 °C;
(xi) heating the cured object from about 75 °C to about 200 °C at a temperature ramp of about 0.1 °C/min, and
incubating the cured object for about 4 hours at about 200 °C;
(xii) heating the cured object from about 200 °C to about 233 °C at a temperature ramp of about 0.1 °C/min, and
incubating the cured object for about 4 hours at about 233 °C;
(xiii) heating the cured object from about 233 °C to about 266 °C at a temperature ramp of about 0.1 °C/min, and
incubating the cured object for about 5 hours at about 266 °C;
(xiv) heating the cured object from about 266°C to about 300 °C at a temperature ramp of 0.1 °C/min, and
incubating the cured object for about 4 hours at about 300 °C;
(xv) heating the cured object from about 300 °C to about 350 °C at a temperature ramp of about 0.1 °C/min, and
incubating the cured object for about 4 hours at about 350 °C;
(ii) heating the shaped object from about 350 °C to about 450 °C at a temperature ramp of about 0.1 °C/min, and incubating the shaped object for about 3 hours at about 450 °C;
(xvi) heating the cured object from about 450 °C to about 800 °C at a temperature ramp of about 0.2 °C/min, and
incubating the cured object for about 3 hours at about 800 °C;
(xvii) heating the cured object from about 800 °C to about 1,000 °C at a temperature ramp of about 0.2 °C/min, and
incubating the cured object for about 1 hour at about 1,000 °C; and optionally
(xviii) cooling the cured object from 1,000 °C to ambient temperature at a temperature ramp of about 0.5°C.

Debinding and sintering may be performed under air.

The formed glass object can have a refractive index of more than about 1.535, more than about 1.540, more than about 1.545, more than about 1.550 or more than 1.555. the formed glass object can have a refractive index of about 1.548, about 1.552, about 1.554, about 1.558 or about 1.572. The formed glass object can have a refractive index of between about 1.535 and 1.580, between about 1.540 and 1.578, between about 1.545 and 1.576 or between about 1.545 and 1.574.

Such refractive indices of glass have up to now not between possible with photocurable systems. Thus, crystal glass objects (e.g. with refractive indices above 1.545) can be manufactured by way of these methods.

For the avoidance of any doubt, embodiments of any of the aspects of the invention may comprise any of the features described in relation to any other aspect of the invention, unless such features are clearly not compatible.

### Brief Description of the Drawings

One or more embodiments of the invention will now be described, by way of example only, with reference to the appended drawings, in which:
Figure 1 shows an example structure of a 3D glass network derived from a photocurable sol-gel-based composition according to the invention.
Figures 2 to 4 are photos of glass objects derived from photocurable sol-gel-based compositions according to the invention.
Figure 5 is a thermogravimetric curve of a photocurable sol-gel-based composition according to the invention.
Figure 5a a thermogravimetric curve of a photocurable sol-gel-based composition according to the invention.
Figures 6 to 17 are photos of glass objects derived from photocurable sol-gel-based compositions according to the invention.
Figure 18 is an ink viscosity curve of a photocurable sol-gel-based composition according to the invention.
Figures 19 to 38 are photos of glass objects derived from photocurable sol-gel-based compositions according to the invention.

### Detailed Description

The inventors have surprisingly discovered a large variety of photocurable sol-gel-based compositions or formulations or feedstocks that enable the production of transparent and crack-free glass objects with tailorable optical properties. Such glass even include crystal, i.e. glass with high refractive indices of more than about 1.535, more than about 1.540, more than about 1.545, more than about 1.550 or even more than 1.555. Such refractive indices of glass have up to now not between possible with photocurable systems.

Transparency means that the material is able of transmitting light through it in the visible range (~400 to 790 nm). A value of transparency can be acquired for a material by measuring how much light in the visible range is transmitted therethrough. The photocurable sol-gel-based compositions enable the production of high light transparent glass, i.e. glass where more than 90%, 92%, 94%, 96%, or even 98% of light at 405 nm is transmitted through.

Each sol-gel photocurable composition of the invention comprises a silicon sol-gel precursor, a photopolymerisable monomer, a transition metal precursor, organic solvent and water.

The use of both a silicon sol-gel precursor and a photopolymerisable monomer in the composition means that a first part of the composition undergoes sol-gel reactions including hydrolysis and condensation while a second part of the composition undergoes polymerisation during production of the glass body. Thus, the first part forms an inorganic portion of the network while the second part forms an organic portion of the network. Such hybrid (i.e., organic-inorganic) networks have improvements in both flexibility and strength.

The use of silicon sol-gel precursor and a photopolymerisable monomer also facilitates better control of the feedstock composition during printing, drying, debinding and firing. For example, they provide the feedstock compositions with desirable rheology which are suitable for different additive manufacturing techniques (including digital light processing, UV-assisted direct ink writing, and casting processes). When the feedstock is used with direct ink writing (DIW), it may conveniently be referred to as an "ink".

The use of a transition metal precursor allows the feedstock composition to be used to make multicomponent glass with high refractive index, e.g., crystal glass. The selection of the transition metal precursor allows for tailorable optical properties of the printed glass body. The addition of a transition metal precursor also participates in the development of the inorganic network.

The sol-gel photocurable composition may advantageously further comprise a chelating agent and/ or other beneficial and/or optional components.

### Silicon precursor and photopolymerisable monomer

The silicon sol-gel precursor refers to a precursor that has moieties that undergo hydrolysis and condensation as part of a sol-gel process, while the photopolymerisable monomer polymerises on exposure to photo-energy such as UV radiation.

As with the silicon sol-gel precursor, the photopolymerisable monomer preferably comprises silicon. In this way, the photopolymerisable monomer is not solely organic and contributes to the increase in Si content in the final material (i.e. it is hybrid), thus decreasing the weight loss and shrinkage and producing less volatile components to be eliminated during debinding and sintering.

The silicon sol-gel precursor and/ or the photopolymerisable monomer may comprise a silicon alkoxide, and preferably both the silicon sol-gel precursor and the photopolymerisable monomer are silicon alkoxides. The composition may therefore include a mixture of silicon alkoxides.

To this end, the silicon sol-gel precursor may comprise or consist of triethoxymethylsilane (MTES) and/ or tetraethyl orthosilicate (TEOS), while the photopolymerisable monomer may comprise or consist of 3-(Trimethoxysilyl)propyl Methacrylate (TMSPM).

MTES is a modified silicon alkoxide precursor, containing a nonhydrolyzable Si-C bond which reduces network connectivity, thus providing structural flexibility of the network and mitigating stress evolution during thermal treatment. Moreover, the incorporation of an organic moiety serves as an internal porogen agent, assisting in developing an open porous structure, which is of particular importance for the release of the gaseous species during the decomposition of the organic compounds.

TEOS is a fully hydrolysable silicon alkoxide and contributes to the primary Si-O backbone network.

TMSPM is a silicon alkoxide containing an organic photopolymerisable functionality, thus enabling the fabrication of printed structures by photopolymerisation under UV-light. TSMPM is an advantageous in terms of cost and (limited) toxicity. TMSPM is a hybrid precursor since it acts both as a silicon source and as a monomer for the photopolymerisation process, and thus participates to provide both an inorganic portion and a photopolymerised organic portion of the overall network. Such a hybrid precursor is capable of photo-induced (e.g. under UV irradiation) polymerization, i.e. photopolymerisation, (leading to the formation of an organic portion of the network) as well as of sol-gel reactions - hydrolysis and condensation of hydrolysed alkoxides (leading to the formation of an inorganic portion of the overall network).

TMSPM is a photopolymerisable silicon monomer. Hence it is not solely organic and contributes to the increase in Si content in the final material, thus decreasing the weight loss and shrinkage and producing less volatile components to be eliminated during debinding and sintering. Moreover, it is also a silicon sol-gel precursor that can cross-link via sol-gel reactions (hydrolysis and condensation) to itself and with any other sol-gel precursors in the composition during production of the glass.

TMSPM acts as both a photopolymerisable monomer and a silicon sol-gel precursor, i.e. it is "hybrid". Hence in some embodiments, TMSPM is both a silicon sol-gel precursor and a photopolymerisable monomer. In some embodiments, the silicon sol-gel precursor and the photopolymerisable monomer are provided by just one component: TMSPM.

Preferably, the silicon sol-gel precursor comprises or consists of a mixture of MTES and TEOS, and the photopolymerisable monomer comprises or consists of TMSPM. In this way, the composition preferably includes a mixture of MTES, TEOS and TMSPM.

The silicon precursor is selected from one or more of MTES at a concentration of between about 1 and 5 wt%; TEOS at a concentration of between about 25 and 45 wt%; and TMSPM at a concentration between about 0.5 and 15 wt% of the composition.

When the silicon precursor comprises or consists of MTES, MTES may particularly be used at a concentration of between about 1.2 and 4.8 wt%, between about 1.4 and 4.6 wt%, between about 1.6 and 4.4 wt% or between about 1.8 and 4.2 wt%; or wherein MTES is at a concentration between about 1.85 and 4.0 wt%, or between about 1.89 and 3.84 wt% of the composition. Additionally or alternatively, MTES is at a concentration of about 1.9 wt%, about 2.1 wt%, about 2.3 wt%, about 2.5 wt%, about 2.7 wt%, about 2.9 wt%, about 3.1 wt%, about 3.3 wt%, about 3.5 wt%, about 3.7 wt%, or about 3.9 wt% of the composition.

At lower values of the MTES, the benefits associated with introducing MTES are not repeated, resulting in cracked samples, whilst at higher values, the suppression of the formation of a three-dimensional network can lead to extremely shorter oligomers, which was found to be detrimental for the photopolymerisation process as long exposure times are required in order to achieve a proper degree of connectivity.

When the silicon precursor comprises or consists of TEOS, TEOS may particularly be used at a concentration of between about 26 and 46 wt%, between about 26 and 45 wt%, between about 27 and 44 wt% or between about 28 and 43 wt%; or wherein MTES is at a concentration between about 29 and 42 wt%, between about 30 and wt% of the composition, or between about 30.13 and 40.69 wt% of the composition. Additionally or alternatively, TEOS is at a concentration of about 30 wt%, about 31 wt%, about 32 wt%, about 33 wt%, about 34 wt%, about 35 wt%, about 36 wt%, about 37 wt%, about 38 wt%, about 39 wt%, about 40 wt%, or about 41 wt% of the composition.

At lower values of TEOS, the final ceramic yield is significantly decreased; moreover, the formation of larger inorganic oligomeric species is hindered and the hybrid organic-inorganic network can result in a poorly-crosslinked structure, thereby reducing the extent of the crosslinking during the photopolymerisation process. At higher values of TEOS, the presence of a larger amount of hydrolyzable sites can accelerate hydrolysis and polycondensation reactions, resulting in a shorter shelf life as the gelation time is drastically reduced. Moreover, TEOS exhibits a poor affinity towards POE upon hydrolysis, inducing phase separation in the system and thus resulting in inhomogeneous solutions.

When the photopolymerisable monomer comprises or consists of TMSPM, TMSPM may particularly be used at a concentration of between about 0.6 and 14 wt%, between about 0.8 and 13 wt%, between about 1.0 and 12 wt% or between about 1.2 and 10 wt%; or wherein TMSPM is at a concentration between about 1.25 and 9.5 wt%, or between about 1.30 and 9.32 wt% of the composition. Additionally or alternatively, TMSPM is at a concentration of about 1.3 wt%, about 2.3 wt%, about 3.3 wt%, about 4.3 wt%, about 5.3 wt%, about 6.3 wt%, about 7.3 wt%, about 8.3 wt%, or about 9.3 wt%. Additionally or alternatively, TMSPM is at a concentration of between about 1.5 and 9.5 wt%, between about 2.0 and 9.0 wt%, between about 2.5 and 8.5 wt% between about 3.0 and 8.0 wt%; between about 3.5 and 7.5 wt%, or between about 4.0 and 7.0 wt% of the composition.

The concentration of the TMPSM preferably ranges between 1.30 and 9.32 wt% for sol-gel-based feedstocks for digital light processing (DLP) technology, and between 7.46 to 8.53 wt% for the synthesis of sol-gel feedstock for UV-DIW printing. Lower values of TMPSM may not ensure adequate reactive material for the photopolymerisation process, and the printed structure is too soft and tends to break off during the printing. At larger values of TMPSM, the large organic content can lead to the formation of cracks during the thermal treatment due to decomposition of the organic moieties and release of the gaseous species within the printed parts. Furthermore, high concentrations of TMPSM were found to induce the formation of an extremely stiff network, and brittle and rigid printed parts, leading to detachment and delamination phenomena during the printing process.

Additionally or alternatively, the photopolymerisable monomer comprises or consists of at least one of Titanium methacrylate triisopropoxide, Titanium triacrylate methoxyethoxyethoxide, Zirconium dimethacrylate dibutoxide, etc.

When the silicon sol-gel precursor comprises or consists of a mixture of MTES and TEOS and the photopolymerisable monomer comprises or consists of TMSPM, the molar ratio of TEOS to TMSPM (TEOS:TMSPM) may be between about 12:1 and about 2:1, between about 10:1 and about 3:1, or between about 8:1 and about 4:1. Additionally or alternatively, the molar ratio of TEOS to TMSPM (TEOS:TMSPM) may be about 10:1, about 7.5:1 about 5:1 or about 3:1; particularly about 5:1.

When the silicon sol-gel precursor comprises or consists of a mixture of MTES and TEOS and the photopolymerisable monomer comprises or consists of TMSPM, the molar ratio of TEOS and TMSPM to MTES (([TEOS]+[TMSPM]):[MTES]) may be between about 40:1 and about 5:1, between about 35:1 and about 10:1 or between about 30:1 and about 12:1. Additionally or alternatively, the molar ratio of TEOS and TMSPM to MTES (([TEOS]+[TMSPM]):[MTES]) is about 30:1, about 25:1, about 20:1, about 17:1 or about 15:1; particularly about 17:1.

In some embodiments, the silicon precursor may further or alternatively comprise at least one of 3-Aminopropyl)trimethoxysilane, (3-Aminopropyl)triethoxysilane, Titanium methacrylate triisopropoxide, Titanium triacrylate methoxyethoxyethoxide, Zirconium dimethacrylate dibutoxide, etc.

(3-Aminopropyl)trimethoxysilane and (3-Aminopropyl)triethoxysilane can be used separately or together in place of MTES, and/ or may separately or together have the same weight concentrations as MTES as set out above.

Titanium methacrylate triisopropoxide, Titanium triacrylate methoxyethoxyethoxide, Zirconium dimethacrylate dibutoxide, Titanium methacrylate triisopropoxide, Titanium triacrylate methoxyethoxyethoxide and Zirconium dimethacrylate dibutoxide can be used separately or together in place of TMSPM as a photopolymerisable monomer and/ or may separately or together have the same weight concentrations as TMSPM as set out above.

Titanium methacrylate triisopropoxide, Titanium triacrylate methoxyethoxyethoxide, Zirconium dimethacrylate dibutoxide are hybrid, i.e. they are capable of photopolymerisation as well as of sol-gel reactions - hydrolysis and condensation.

### Organic solvent

The organic solvent preferably has a boiling point of at least 100°C. In this way the organic solvent can be understood as a "high boiling point solvent".

Use of a high boiling point solvent provides one more benefits such as a) stabilising the viscosity of the feedstock over a long period of time (e.g. hours); b) avoiding fast evaporation during and after printing of a glass object (which can otherwise cause cracks); and c) providing (by way of only being eliminated during a drying stage after printing, i.e. after the formation of the sol-gel network) transient porosity in printed glass bodies that facilitates the escape of decomposition gases generated by the reaction of the organic moieties with air during debinding (low temperature firing).

In other embodiments, the organic solvent has higher boiling points. For example, the organic solvent may have a boiling point of at least 120°C, at least 140°C, at least 160°C, at least 180°C, at least 200°C, at least 220°C, or at least 240°C. The organic solvent may also have a boiling point between about 180°C and about 280°C; between about 200°C and about 270°C, between about 220°C and about 260°C, or between about 240°C and about 250°C.

In a preferred embodiment, the organic solvent comprises at least one of propylene carbonate (PC), phenoxyethanol (POE), tripropylene glycol monomethyl ether (TPM). In a particularly preferred embodiment, the organic solvent comprises or consist of a mixture of two or three of propylene carbonate (PC), phenoxyethanol (POE) and tripropylene glycol monomethyl ether (TPM). The boiling point of PC is 242°C, the boiling point of POE is 247°C, and the boiling point of TPM is 243°C.

Additionally or alternatively, the organic solvent is selected from one or more alcohol, one or more glycol ether, one or more ester, or a combination thereof. For the following, the boiling point in °C is provided in parenthesis thereafter: the one of more alcohol may be n-butyl alcohol (118), benzyl alcohol (205), and / or phenoxyethanol (247). The one of more ester may be methyl glycol (124), ethyl glycol (197), n-propyl glycol (188), n-butyl glycol (171), diacetone alcohol (166), methoxy butanol (161) and/ or tripropylene glycol monomethyl ether (243). The one or more ester may be n-Propyl acetate (102), butyl acetate (126), ethoxypropyl acetate (182) and/ or propylene carbonate (242).

The organic solvent comprises between about 12 and 40 wt% of the composition; between about 14 and about 38 wt% of the composition, between about 16 and about 36 wt% of the composition, between about 18 and about 34 wt% of the composition, between about 20 and about 32 wt% of the composition, or between about 22 and about 30 wt% of the composition. The organic solvent may comprise between about 19 and about 33 wt% of the composition, between 19.4 and 32.5 wt%, or between 19.45 and 32.42 wt% of the composition. The organic solvent may comprise between about 20 wt%, about 21 wt%, about 22 wt%, about 23 wt%, about 24 wt%, about 25 wt%, about 26 wt%, about 27 wt%, about 28 wt%, about 29 wt%, about 30 wt%, about 31 wt% or about 32 wt% of the composition.

Lower concentrations of the high boiling point solvent may not prevent material fracture phenomena, and cracked parts are obtained. At higher concentrations, crack-free components can be easily fabricated; however, the organic solvent content should not exceed 35 wt% in order to ensure a sufficient amount of metal alkoxides and therefore a reasonable ceramic yield.

### Water

Water may be present at a concentration between about 4 and 20 wt%, between about 5 and 16 wt%, between about 6 and 12 wt%, or between about 6.47 and 9.45 wt% of the composition. Additionally or alternatively, water may be present at a concentration of about 6 wt%, about 6.5 wt%, about 7 wt%, about 7.5 wt%, about 8 wt%, about 8.5 wt%, about 9 wt%, or about 9.5 wt% of the composition.

At lower concentrations of water, the extent of the hydrolysis reactions is limited and hence unhydrolyzed species are not able to undergo polycondensation reactions to form a three-dimensional structure, thus leading to a poorly-connected network. On the other hand, higher concentrations of water would rapidly accelerate hydrolysis and polycondensation reactions, reducing the shelf life of the photocurable solution.

Water may be present in the composition at a concentration suitable to hydrolyse between about 35% and about 65%, between about 40% and about 60%, between about 45% and about 55% of the hydrolysable groups of the silicon precursors. Additionally or alternatively, water may be present at a concentration suitable to hydrolyse about 60%, about 55%, about 50%, about 45% or about 40% of the hydrolysable groups of the silicon precursors; particularly about 50%.

### Transition metal precursor

As stated above, the sol-gel photocurable composition may advantageously further comprise a transition metal precursor. The use of a transition metal precursor allows the feedstock composition to be used to make multicomponent glass with high refractive index, e.g., crystal glass. The selection of the transition metal precursor allows for tailorable optical properties of the printed glass body. The addition of a transition metal precursor also participates in the development of the inorganic network.

In this way, the formed glass object may be provided with a refractive index of about 1.548, about 1.552, about 1.554, about 1.558 or about 1.572 Additionally or alternatively, the formed glass object has a refractive index of between about 1.535 and 1.580, between about 1.540 and 1.578, between about 1.545 and 1.576 or between about 1.545 and 1.574.

The transition metal precursor may be a transition metal alkoxide. The transition metal precursor preferably comprises a source of at least one of zirconium (Zr) and titanium (Ti). In this way, the sol-gel composition may be considered a multicomponent system such as a bi- or-tricomponent system (Si along with Zr and/ or Ti). To this end, the transition metal precursor may be selected from at least one of zirconium n-butoxide (ZrB) and titanium isopropoxide (TiIP).

The transition metal precursors in the form of titanium isopropoxide and/ or zirconium n-butoxide participate in the development of the inorganic network by forming Si-O-Zr, Si-O-Ti, Zr-O-Zr, Ti-O-Ti and/ or Zr-O-Ti bonds.

When the transition metal precursor comprises or consists of zirconium n-butoxide (ZrB), ZrB may be present at a concentration between about 10 and 30 wt%, between about 12 and 28 wt%, between about 14 and 26 wt%, between about 16 and about 24 wt%, between about 17 and 22 wt% of the composition. Additionally or alternatively, ZrB may be present at a concentration between about 17.72 and 21.62 wt%, between about 18 and 21.5 wt% or between about 19 and 21 wt% of the composition. Additionally or alternatively, ZrB may be present at a concentration of about 18 wt%, about 18.5 wt%, about 19 wt%, about 19.5 wt%, about 20 wt%, about 20.5 wt%, about 21 wt% or about 21.5 wt% of the composition.

This therefore provides a SiO₂-ZrO₂ multicomponent (bicomponent) system, and these concentrations ensure an advantageous molar ratio [Si]:[Zr] ranging from 4.7 to 5.0. The advantage of a zirconium precursor is that it provides a multicomponent glass with high refractive index, i.e. crystal glass. Higher concentrations can potentially promote the growth of the zirconia crystallites, leading to low optical quality and lack of transparency in the glass components due to scattering phenomena from the crystalline domains, whereas lower concentrations would not significantly improve the optical properties.

When the transition metal precursor comprises or consists of titanium isopropoxide (TiIP), TilP may be present at a concentration between about 5 and 20 wt%, between about 6 and 19 wt%, between about 7 and 18 wt%, between about 8 and about 17 wt%, or between about 9 and 16 wt% of the composition. Additionally or alternatively, TilP may be present at a concentration between about 10 and 15 wt%, between about 11 and 14 wt% or between about 11.72 and 13.55 wt% of the composition. Additionally or alternatively, TilP may be present at a concentration of about 11.5 wt%, about 12 wt%, about 12.5 wt%, about 13 wt%, or about 13.5 wt% of the composition.

This therefore provides a SiO₂-TiO₂ multicomponent (bicomponent) system, and these concentrations ensure an advantageous molar ratio [Si]:[Ti] of 5. The advantage of a titanium precursor is that it provides a multicomponent glass with a high refractive index, i.e. crystal glass. Higher concentrations can potentially promote the growth of the titania crystallites, leading to low optical quality and lack of transparency in the glass components due to scattering phenomena from the crystalline domains, whereas lower concentrations would not significantly improve the optical properties.

When the transition metal precursor comprises or consists of a mixture of a source of zirconium (Zr) and a source of titanium (Ti), the molar ratio of silicon to zirconium and titanium [Si:(Zr+Ti)] may be between about 12:1 and about 2:1, between about 10:1 and about 3:1, or between about 8:1 and about 4:1. Additionally or alternatively, the molar ratio of silicon to zirconium and titanium [Si:(Zr+Ti)] is about 10:1, about 8:1, about 6:1, about 5:1, about 4:1 or about 3:1; particularly about 5:1. Additionally or alternatively, the total amount of ZrB and TilP is present at a concentration between about 10 and 21 wt%, between about 13 and 18 wt%, between about 14 and 17 wt%, between about 14.5 and about 16.5 wt%, or between 15 and 16 wt% of the composition. Additionally or alternatively, the total amount of ZrB and TilP is present at a concentration between about 11.5 and 20.5 wt%, between about 13.5 and 18.5 wt% or between about 15.5 and 16.5 wt% of the composition. Additionally or alternatively, the total amount of ZrB and TilP is present at a concentration of about 14.5 wt%, about 15 wt%, about 15.63 wt%, about 16 wt%, or about 16.5 wt% of the composition.

This therefore provides a SiO₂-ZrO₂-TiO₂ multicomponent (tricomponent) system, and these concentrations ensure an advantageous molar ratio [Si]:([Ti]+[Zr]) of 5. The advantage of a tricomponent system is that it provides a multicomponent glass with a high refractive index, i.e. crystal glass. Higher concentrations can potentially promote the growth of the zirconia and titania crystallites, leading to low optical quality and lack of transparency in the glass components due to scattering phenomena from the crystalline domains, whereas lower concentrations would not significantly improve the optical properties.

### Chelating agent

As stated above, the sol-gel photocurable composition may advantageously further comprise a transition metal precursor.

Processing of hybrid systems consisting solely of a continuous network containing both organic and inorganic building blocks is challenging, as the behaviour generated during the manufacturing operations in response to the stresses can be significantly different, resulting in cracks formation and damaged parts, particularly when the bodies are shaped with digital light processing.

To address these potential problems, in embodiments, the inventors have developed an innovative approach to partially decouple the photopolymerised organic portion of the network from the inorganic one by means of a partial substitution of the hybrid precursor with a chelating agent such as a carboxylic acid monomer (e.g., acrylic acid). This serves to distribute the (e.g. transition) metal precursor homogeneously throughout the composition, and generates an independent, continuous organic network upon photopolymerisation. This thorough control of the structural assembly can be paramount in preventing the formation of defects in the printed structures and to enable the synthesis of a formulation that can withstand the stresses exerted during the manufacturing processes.

It is posited that the presence of the fully and continuous organic network (formed by e.g. acrylic acid through the photopolymerisation reaction) affords either flexibility to the overall network or increases its strength (or both). Based on preliminary data, the second explanation seems the most likely cause, since it makes it capable of withstanding the stresses deriving from the printing process and the subsequent thermal treatment. Notably, a too high - or total - substitution of hybrid precursor (e.g. TMSPM) with chelating agent (e.g. acrylic acid) can result in stronger bodies, but upon de-binding severely damaged samples. Both acrylates are provided in order to provide sufficient strength in both states.

The chelating agent also moderates the reactivity of the transition metal precursor.

When the composition comprises a chelating agent, the chelating agent may be a carboxylic acid, preferably selected from at least one of acetic acid and acrylic acid. Acetic acid can be used as a chelating agent to moderate the reactivity of the transition metal alkoxide(s). Acrylic acid (AA) plays a dual role and is preferably solely employed in sol-gel-based solutions for DLP: (i) as a chelating agent, it controls the reactivity of the transition metal alkoxide, (ii) as a monomer, it provides a photocurable species for the photopolymerisation process in addition to the hybrid precursor such as TMSPM, and assists in tailoring the flexibility of the hybrid inorganic-organic network. AA is thus an organic photopolymerisable component.

In this regard, the carboxylic acid improves the flexibility of the hybrid network, which is beneficial for the survival of the samples during subsequent processing.

In this regard, the carboxylic acid improves the flexibility of the hybrid network, which is beneficial for the survival of the samples to processing.

When the chelating agent comprises or consists of acetic acid, acetic acid may be present at a concentration between about 1 and 10 wt%, between about 1.25 and 9.5 wt%, between about 1.5 and 9 wt%, between about 1.75 and 8.5 wt%, between about 2.0 and 8 wt%, or between about 2.25 and 7.75 wt% of the composition. Additionally or alternatively, acetic acid may be present at a concentration between about 2.37 and 7.63 wt%, between about 2.5 and 7.5 wt%, between about 3 and 7 wt%, between about 3.5 and 6.5 wt% between about 4 and 6 wt% of the composition. Additionally or alternatively, acetic acid may be present at a concentration of about 2.5 wt%, about 3 wt%, about 3.5 wt%, about 4 wt%, about 4.5 wt%, about 5 wt%, about 5.5 wt%, about 6 wt%, about 6.5 wt%, about 7 wt% or about 7.5 wt% of the composition.

Lower concentrations of acetic acid (AcOH) may not decrease the reactivity of the metal precursor such as ZrB and/or TiIP, thereby leading to unstable and inhomogeneous solutions due to rapid hydrolysis and immediate precipitations phenomena, whereas higher concentrations may decrease the degree of oligomerization, lowering the network connectivity and hence worsening the printing process.

When the chelating agent comprises or consists of acrylic acid, acrylic acid may be present at a concentration between about 0.5 and 8 wt%, between about 0.75 and 7 wt%, between about 1 and 6 wt%, between about 1.25 and 5 wt%, or between about 1.5 and 4 wt% of the composition. Additionally or alternatively, acrylic acid may be present at a concentration between about 1.64 and 3.68 wt%, between about 1.8 and 3.5 wt%, between about 2.0 and 3.2 wt%, between about 2.2 and 3 wt%, between about 2.4 and 2.8 wt% of the composition. Additionally or alternatively, acetic acid may be present at a concentration of about 1.5 wt%, about 1.75 wt%, about 2 wt%, about 2.25 wt%, about 2.5 wt%, about 2.75 wt%, about 3 wt%, about 3.25 wt%, about 3.5 wt%, or about 3.75 wt% of the composition.

Acrylic acid (AA) advantageously acts to stabilise the transition metal alkoxides, which are very reactive. In contrast, the silicon alkoxides (TEOS, MTES, TMSPM for example) do not need any stabilisation.

Absence or lower concentrations of acrylic acid may induce precipitation phenomena due to the lack of stabilization of the transition metal precursor; furthermore, the printed objects become increasingly stiffer and brittle, resulting in damaged parts during the printing process. Higher concentrations of acrylic acid may allow more complex structures to be printed; however, the large amount of organic content can cause cracking of the printed components during the debinding process.

The ratio of the chelating agent to transition metal precursor(s) (ligand) may be between about 3:1 and 1:1, between about 2:75:1 and 1.25:1, between about 2.5:1 and 1.5:1, or between about 2.25:1 and 1:75:1. Additionally or alternatively, the ratio of the chelating agent to transition metal precursor(s) (ligand) is about 2.4:1, about 2.2:1, about 2:1, about 1.8:1 or about 1.6:1; particularly about 2:1.

### Other component(s)

Other optional and/or beneficial component(s) of the photopolymerisable sol-gel composition include nitric acid, a photoinitiator, a photoabsorber and/ or a colouring agent or dye.

Nitric acid is preferably included in the composition to act as a catalyst for the hydrolysis reactions. Moreover, under acidic conditions, hydrolysis reactions are faster than condensation reactions, thus favouring the formation of an inorganic polymeric network as opposed to a particulate gel. By adding nitric acid, the pH of the first solution can be made close to 1, thus accelerating the hydrolysis of TEOS and/ or the other Si alkoxide(s).

A photoinitiator in the composition absorbs light at a relevant spectral range, (e.g. generally between about 250 and 450 nm), and converts this light energy into chemical energy to form reactive intermediates, such as free radicals and reactive cations, which subsequently assist in the initiation of polymerization. Thus, a photoinitiator can improve the efficiency and speed of photopolymerisation of the compositions described herein.

The photoinitiator may be present at a concentration of between about 1 wt% and 12 wt%, between about 2 wt% and 10 wt%, between about 3 wt% and 8 wt%, or between about 4 wt% and 6 wt% relative to the weight of photopolymerisable compounds. Additionally or alternatively, the photoinitiator may be present at a concentration of about 3 wt%, about 4 wt%, about 5 wt%, about 6 wt%, about 7 wt% or about 8 wt%; particularly about 5 wt% relative to the weight of photopolymerisable compounds.

The photoinitiator may be diphenyl(2,4,6-trimethylbenzoyl) phosphine oxide (TPO).

A photoabsorber in the composition is especially advantageous for compositions/ feedstocks that are to be printed by digital light processing. The photoabsorber avoids overexposure and loss of resolution in the Z printing direction during an e.g. digital light processing process, by absorbing surplus photo-energy.

The photoabsorber may be present at a concentration of between about 0.01 wt% and 0.1 wt%, between about 0.015 wt% and about 0.075 wt%, between about 0.0175 wt% and about 0.05 wt%, or between about 0.02 wt% and about 0.03 wt% of the composition. Additionally or alternatively, the photoabsorber may be present at a concentration of about 0.015 wt%, about 0.0175 wt%, about 0.02 wt%, about 0.0225 wt%, about 0.025 wt% or about 0.0275 wt%; particularly about 0.0225 wt% of the composition.

The photoabsorber may be 2-[(E)-(2-methoxyphenyl) diazenyl]naphthalen-2-ol (Sudan Red G), and it is preferably added at a concentration of 0.0225 wt% on top of and with respect to the full formulation of the composition/ feedstock. Sudan Red G is a fully organic colouring agent that fully decomposes upon firing (and thus does not provide any colour to the resulting glass). However, Sudan Red G does advantageously limit the penetration depth of light during printing, leading to sharper and better-defined features (especially for parts with overhanging structures).

A colouring agent or dye in the composition such as a transition metal acetate can advantageously be used to change the colour of the glass object formed from the composition. In this way, coloured glass samples can be fabricated by doping the sol-gel photocurable formulation.

The colouring agent or dye (e.g. the total amount thereof) may be present at a concentration of between about 0.01 and 2.5 wt%, between about 0.02 and 2.0 wt%, between about 0.03 and 1.7 wt%, between about 0.04 and 1.6 wt%, or between about 0.05 and 1.5 wt% of the composition.

The colouring agent or dye may, for example, comprises or consist of cobalt(II) acetate and/ or copper(II) acetate and/ or other transition metal acetates such as chromium (III) nitrate, chromium(III) acetate, manganese(II) acetate, iron(II) acetate, nickel(II) acetate, neodymium(III) acetate and/ or vanadium(III) acetate. Alternatively or additionally, the colouring agent or dye may comprise metals (e.g. gold silver, copper, etc.) preferably in the form of nanoparticles and/ or semiconductors (e.g. CdS, PbS, etc.) preferably in the form of nanoparticles. Different concentrations of the above colouring agents may be used in the composition to provide a desired colour in the printed glass.

### Method of producing the photocurable sol-gel-based compositions

According to aspects and embodiments, an exemplary method of producing the photocurable sol-gel compositions described herein will now be provided.

In embodiments, the method includes the following five steps. A first step which includes preparing a first solution by mixing a silicon precursor with a solvent. A second step which includes adding water to the first solution. A third step which includes subjecting the first solution to a first mixing. A fourth step which includes preparing a second solution comprising a transition metal precursor. A fifth step which includes mixing the first and second solutions to form a third solution.

The first step is preferably done, i.e. the first solution is preferably prepared, in a first vial. The second step of adding water to the first solution suitably involves introducing water (e.g. distilled water) into the first solution dropwise. The third step of subjecting the first solution to a first mixing suitably lasts five minutes and is typically performed in a closed vial. The first solution may be referred to as the S solution.

The fourth step of preparing the second solution may comprise mixing the transition metal precursor with a chelating agent. The second solution is preferably prepared in a second vial where the second vial is different to the first vial. The second solution is typically mixed in a closed second vial for a sufficient period of time to obtain a homogeneous solution, e.g. about 25 minutes. The second solution may be referred to as the M solution.

This fourth step of preparing a second solution may comprise a transition metal precursor may comprise preparing at least one second solution wherein the or each second solution comprises a different transition metal.

The fifth step of mixing the first and second solutions may comprise pouring the second solution into the first solution, suitably while continuously stirring the first solution at 1000 rpm.

Between the third step and the fourth step, the method can include the optional step of adding nitric acid to the first solution. Nitric acid is suitably added in an amount sufficient to bring the pH of the first solution to less than 3, less than 2 or to about 1. If nitric acid is added, a further optional step of subjecting the mixture of nitric acid and the first solution to a second mixing can occur before the fourth step. The second mixing suitably involves stirring the first mixture in a closed vial, preferably for 50 minutes.

After the fifth step, further steps can include adding to the third solution the photoinitiator, the photoabsorber and/ or the colouring agent in any suitable concentration, as described above.

All of the above steps (or the entire method) may be performed at an ambient temperature and all the reagents are typically used as-received. For example, all of the above steps may be performed at a temperature of between about 16 and 30 °C, between about 17 and 28 °C, between about 18 and 25 °C, or between about 19 and 22 °C.

### Method of making a transparent and crack-free glass object

According to aspects and embodiments, an exemplary method for producing transparent and crack-free glass objects using the above-described photocurable sol-gel compositions is now provided.

The method may beneficially include the following four steps. A first step which includes providing the photocurable sol-gel composition. A second step which includes depositing the photocurable sol-gel composition. A third step which includes exposing at least a portion of the photocurable sol-gel composition to a source of photoenergy so as to form a cured object comprising a cured portion of the composition. A fourth step which includes subjecting the cured object to a thermal treatment to form a glass object. Complex three-dimensional structures can be printed by such a method.

In the first step, one of the sol-gel photocurable compositions described above is provided.

After the first step of providing the depositing the photocurable sol-gel composition but before the second step of depositing the photocurable sol-gel composition, the method preferably comprises a further step of subjecting the photocurable sol-gel composition to a resting process and/ or a further step of subjecting the photocurable sol-gel composition to an evaporation process.

In a particularly preferred embodiment, both the further step of subjecting the photocurable sol-gel composition to a resting process and the further step of subjecting the photocurable sol-gel composition to an evaporation process, wherein subjecting the photocurable sol-gel composition to a resting process is performed before the photocurable sol-gel composition is subjected to an evaporation process.

The resting process advantageously increases the strength of the resulting network after the fabrication of the samples. Resting of the formulations has been found to increase the speed of the curing / printing process and also to increase the viscosity of the formulation, which can help in processes such as direct-in-writing. The resting step stimulates the partial formation of the inorganic network so that, upon UV irradiation, the rate formation of the crosslinked part is increased).

The resting process suitably comprises storing the photocurable sol-gel composition for a predefined period of time, preferably in a closed container. The predefined period of time may be a period of between about 1 hour and 3 days, between about 2 hours and 2 days, between about 10 and 36 hours, between about 16 and 32 hours, between about 20 and 28 hours, or between about 22 and 26 hours. Additionally or alternatively, predefined period of time may be a period of about 1, about 2, about 6, about 16, about 20, about 22, about 24, about 26, about 28, about 32, about 36 hours, or about 2 or 3 days.

During the resting process, the photocurable sol-gel composition is suitably stirred, preferably continuously stirred. Likewise, the photocurable sol-gel composition is suitably stored at room or ambient temperature during the resting process and/ or at a temperature of between about 16 and 30 °C, between about 17 and 28 °C, between about 18 and 25 °C, or between about 19 and 22 °C.

In embodiments- particularly in relation to DIW processes - by way of the evaporation process/ step the feedstock compositions may be provided with a desired and/or sufficiently high viscosity which ensures the feedstock composition exhibits the required rheological response for printing. This allows complex three-dimensional glass structures to be fabricated by means of ultraviolet-assisted direct ink writing technology (UV-DIW).

To this end, the evaporation process suitably comprises heating the photocurable sol-gel composition. Preferably, the evaporation process comprises incubating the photocurable sol-gel composition at a temperature of between about 45 and 75 °C, between about 50 and 70 °C, between about 55 and 65 °C or between about 58 and 62 °C. Additionally or alternatively, the evaporation process comprises incubating the photocurable sol-gel composition at a temperature of about 50 °C, about 55 °C, about 60 °C, about 65 °C or about 70 °C; particularly about 60 °C.

During the evaporation process, the photocurable sol-gel composition is suitably stirred, preferably continuously stirred. Moreover, the evaporation process is preferably performed with the photocurable sol-gel composition exposed to air.

The evaporation process may be done for a period between about 15 minutes and 12 hours, between about 20 minutes and 9 hours, between about 30 minutes and 6 hours, or between about 1 and 4 hours. Additionally or alternatively, the evaporation process be done last for a period of about 30 minutes, about 1 hour, about 2 hours, about 3 hours, about 4 hours, about 5 hours or about 6 hours.

By way of the evaporation process, the photocurable sol-gel composition can be provided with a weight loss of between about 5 and 40 wt%, between about 10 and 35 wt%, between about 15 and 30 wt%, or between about 20 and 25 wt%. Additionally or alternatively, the the photocurable sol-gel composition can be provided with a weight loss of about 10 wt%, about 15 wt%, about 20 wt%, or about 25 wt%.

In embodiments, the photocurable sol-gel composition can be heated for 30 minutes, for 1 hour, for 2 hours, for 3 hours, for 3.5 hours or for 6 hours. When heated for 3 hours, the solvent evaporation resulted in a mass loss of 13wt%. When heated for 3.5 hours, the solvent evaporation resulted in a mass loss of 25wt%. When heated for 6 hours, the solvent evaporation resulted in a mass loss of 30wt%. In other embodiments, the sol-gel photocurable is mixed for only one hour, and the evaporation process lasts only 4 hours. The solvent evaporation resulted in a mass loss of between 19wt% and 23wt%.

By way of the above, the feedstocks can be provided with a viscosity between 0.5 and 5 Pa.s. In this way, the liquid is not so fluid that it drips spontaneously from the nozzle. Likewise, the degree of condensation (which increases the viscosity) is not so advanced to the level of consolidating after a few minutes. Hence, in this way a reasonably large printing window (~1 to 1.5h) is obtained.

As such, complex three-dimensional glass structures can be fabricated by means of ultraviolet-assisted direct ink writing technology (UV-DIW). The feedstock rheology is advantageously easily tailored through the two interplaying mechanisms: solvent-evaporation and control over the sol-gel condensation process. The former mechanism allows for the formation of concentrated sol-gel feedstocks by removal of the solvents in advance, thus leading to a rise in viscosity. Moreover, the transition metal alkoxides exhibit higher reactivity toward hydrolysis and condensation compared to silicon alkoxides, and thus favours the process of gelation and results in a dramatic increase of the feedstock viscosity. The photocurable sol-gel composition can then be transferred into a 5-ml syringe barrel and the feedstock-loaded syringe barrel can be installed into a z-axis of a three-axis motion-controlled stage. The above conditions thus enable the extrusion of a continuous liquid filament, which can be instantaneously hardened in order to retain the given shape by applying UV radiation to rapidly solidify the liquid upon exiting from the nozzle.

Alternatively (or additionally), the resting and/ or evaporation processes can be performed as part of the method of making the photocurable sol-gel composition. In this case, the resting and/ or evaporation processes are performed as a final step of that method.

In the second step of the method of producing a transparent and crack-free glass body, the photocurable sol-gel composition is deposited.

Additionally or alternatively, depositing the photocurable sol-gel composition may comprise depositing a volume of the photocurable sol-gel composition in a container and/ or casting or soft lithography of the photocurable sol-gel composition.

Additionally or alternatively, the deposition involves printing the photocurable sol-gel composition onto or into a substrate. Such printing of the photocurable sol-gel composition may be done via Digital Light Processing (DLP) or UV-assisted Direct Ink Writing (UV-DIW). For DLP, an organic photocurable network former such as acrylic acid and a photoabsorber such as Sudan red are preferably used. Stereolithography (SLA) may also be used instead of DLP.

In some embodiments, the printing of the photocurable sol-gel composition involves extruding the photocurable sol-gel composition through a nozzle. In this embodiment, the nozzle preferably has an outlet diameter of between about 150 and 1000 µm, between about 175 and 500 µm, between about 200 and 450 µm, between about 225 and 425 µm or between about 250 and 410 µm. Additionally or alternatively, the nozzle has an outlet diameter of about 200 µm, about 250 µm, about 300 µm, about 350 µm, about 400 µm, or about 410 µm.

The composition may be arranged with a predefined layer thickness, particularly with DLP, so that only this predefined layer thickness of the composition is exposed to photoenergy in the next step. The predefined layer may have a thickness of between about 10 and 250 µm, between about 20 and about 200 µm, between about 30 and about 150 µm, between about 40 and about 100 µm, or between about 50 and about 75 µm. Additionally or alternatively, the predefined layer may have a thickness of about 10 µm, about 20 µm, about 30 µm, about 40 µm, about 50, about 60 µm, or about 70 µm; particularly about 50 µm.

When samples are printed by DLP, as these formulations are relatively more reactive, it can be beneficial to print the formulations earlier. For example, the solution can be left to rest for only 15-24h prior to printing.

In the third step of the method of producing a transparent and crack-free glass object, at least a portion of the photocurable sol-gel composition is exposed to a source of photoenergy so as to form a cured object comprising a cured portion of the composition. The exposing step suitably includes the photopolymerisation of the photocurable sol-gel composition.

The photoenergy may suitably be UV radiation. Preferably, the photoenergy may have wavelengths between around 300 and 500nm, between around 325 to 500nm, between around 350 to 450nm, or between 375 and 400 nm. Preferably, the photoenergy has a light intensity of between about 10 and 50 mW/cm², between about 15 and 45 mW/cm², between about 20 and 40 mW/cm², between about 25 and 35 mW/cm², or between about 28 and 32 mW/cm².

In some embodiments, exposing at least a portion of the photocurable sol-gel composition to a source of photoenergy may comprise placing the photocurable sol-gel composition in a UV oven. Such a method of photocuring is preferably performed when the depositing step includes depositing a volume of the photocurable sol-gel composition in a container and/ or casting or soft lithography of the photocurable sol-gel composition. In these embodiments, the photocurable sol-gel composition may be exposed to UV radiation for between about 1 and 20 minutes, between about 2 and 15 minutes, between about 3 and 10 minutes, or between about 4 and 6 minutes.

Additionally or alternatively, the source of photoenergy may be a light source emitting light. One convenient selection for the light source may be a LED light source. Preferably the LED light source emits light with wavelengths of about 385 nm. Such photocuring is preferably performed when the depositing step includes printing of the photocurable sol-gel composition via Digital Light Processing (DLP) or UV-assisted Direct Ink Writing (UV-DIW). In these embodiments, the photocurable sol-gel composition is only exposed to a source of photoenergy for a period of between about 1 and 20 s, between about 2 and 15 s, between about 3 and 10 s, or between about 4 and 6 s. Additionally or alternatively, the period is of about 25, about 26, about 27, about 28, about 29, about 30, about 31, about 32, or about 33, particularly about 29 s.

Indeed, when Digital Light Processing (DLP) or UV-assisted Direct Ink Writing (UV-DIW), the steps of depositing the photocurable sol-gel composition and exposing at least a portion of the photocurable sol-gel composition are performed together since the photocurable sol-gel composition is photocured as the feedstock composition is printed.

In one embodiment, the Digital Light Processing may use a Asiga Pico2 with a UV-LED light source of 385 nm. The sol-gel photocurable is first poured into the vat of a 3D printer. The layer thickness is preferably set at 50 µm, with an exposure time between 4 and 6s, and a light intensity of 29 mW/cm².

In one embodiment, the UV-assisted Direct Ink Writing (i.e. extrusion-based 3D printing process) may be performed using a Delta printer (e.g. WASP Delta Turbo2 2040) coupled with a UV-LED array system. The photocurable sol-gel composition can then be extruded through conical nozzles with a 250 or 410 µm diameter.

After the third step of exposing at least a portion of the photocurable sol-gel composition to a source of photoenergy so as to form a cured object comprising a cured portion of the composition but before the fourth step of subjecting the cured object to a thermal treatment to form a glass object, the method preferably comprises a further step of subjecting the cured object to an aging process.

The aging process advantageously increases the strength of the resulting network after the fabrication of the samples. Aging of the formulations has been found to increase the speed of the curing / printing process and also to increase the viscosity of the formulation, which can help in processes such as direct-in-writing. Aging (after shaping) of the cast/3D printed part increases the strength of the network (so that no crack formation occurs during sintering) and increases the final content of silica (to provide a more cross-linked network (by condensation of M-OH groups), leading to lower weight loss upon firing - see TGA curves).

To this end, the aging process includes storing the cured object for a predefined period of time. The predefined period of time may be a period of between about 3 and 30 days, between about 4 and 24 days, between about 5 and 20 days, between about 6 and 18 days, between about 7 and about 14 days, or between about 8 and about 12 days. Additionally or alternatively, the predefined period of time may be a period of about 5, about 6, about 7, about 8, about 9, about 10, about 11, about 12, about 13, about 14 or about 15 days.

Preferably, the aging process is performed at room or ambient temperature. To this end, the cured object may be stored at a temperature of between about 16 and 30 °C, between about 17 and 28 °C, between about 18 and 25 °C, or between about 19 and 22 °C.

In the fourth step of the method of producing a transparent and crack-free glass object, the cured object is subjected to a thermal treatment to form the glass object

The thermal treatment may comprise a sub-step of drying and/ or a sub-step of debinding and sintering. Debinding and sintering of the cured object are preferably combined into a single heat curve/ single thermal treatment. Preferably, the thermal treatment comprises both the sub-step of drying and the sub-step of debinding and sintering and the sub-step of debinding and sintering is performed after the sub-step of drying. In one particularly preferred embodiment, the samples are left to cool between the drying and the debinding and sintering sub-steps. The first oven that the sample is dried in may be different from the second oven that the sample is debinded and sintered in.

Drying the cured object preferably comprises incubating the cured object at a temperature of between about 90 and 150 °C, between about 100 and 140 °C, or between about 110 and 130 °C. Additionally or alternatively, the cured object is incubated at a temperature of about 100 °C, about 110 °C, about 120 °C, or about 130 °C; particularly about 120 °C. The drying is suitably performed under air.

In one preferred embodiment, the cured object is dried according to the following protocol:
(i) heating the cured object from ambient temperature to a first target temperature between about 40 and 60 °C at a temperature ramp of between about 0.1 and 0.3 °C/min, and
   incubating the cured object for between about 12 and 16 hours at the first target temperature;
(ii) heating the cured object from the first target temperature to a second target temperature between about 70 and 90 °C at a temperature ramp of between about 0.15 and 0.35 °C/min, and
   incubating the cured object for between about 2 and 4 hours at the second target temperature;
(iii) heating the cured object from the second target temperature to a third target temperature between about 90 and 110 °C at a temperature ramp of between about 0.23 and 0.43 °C/min, and
   incubating the cured object for between about 2 and 4 hours at the third target temperature;
(iv) heating the cured object from the third target temperature to a fourth target temperature between about 110 and 130 °C at a temperature ramp of between about 0.23 and 0.43 °C/min, and
   Incubating the cured object for between about 13 and 17 hours at the fourth target temperature.

Additionally or alternatively, the cured object is dried according to the following protocol:
(i) heating the cured object from ambient temperature to a first target temperature of about 50°C at a temperature ramp of about 0.2°C/min, and
   incubating the cured object for about 14 hours at the first target temperature;
(ii) heating the cured object from the first target temperature to a second target temperature about 80°C at a temperature ramp of 0.25°C/min, and
   incubating the cured object for about 3 hours at the second target temperature;
(iii) heating the cured object from the second target temperature to a third target temperature about 100°C at a temperature ramp of about 0.33°C/min, and
   incubating the cured object for about 3 hours at the third target temperature;
(iv) heating the cured object from the third target temperature to a fourth target temperature about 120°C at a temperature ramp of about 0.33°C/min, and
   incubating the cured object for about 15 hours at the fourth target temperature.

Thermal debinding and sintering of the cured object preferably comprises incubating the cured object at a temperature of between about 900 and about 1,150 °C, between about 950 and about 1,100 °C or between about 975 and 1,050 °C. Additionally or alternatively, the cured object is incubated at a temperature of about 950 °C, about 975 °C, about 1,000 °C, about 1,025 °C or about 1,050 °C; particularly about 1,000 °C. The debinding and sintering is suitably performed under air. Thus debinding and sintering is thus performed at a much lower temperature (< 1150°C) than is used for sintering glass derived from feedstocks containing colloidal silica. Also both rebinding and sintering can be performed in air (as opposed to in vacuum).

Debinding and sintering may be performed by heating the cured object from ambient temperature to a target debinding-sintering temperature over a plurality of heating stages.

Each heating stage suitably comprises a ramped temperature increase to the target debinding-sintering temperature followed by an incubation period at the target temperature.

The ramp may be between about 0.05 and 0.5 °C/min, between about 0.06 and 0.4 °C/min, between about 0.07 and 0.3 °C/min, between about 0.08 and 0.2 °C/min. Additionally or alternatively, the ramp may be about 0.05 °C/min, about 0.1 °C/min, about 0.2 °C/min, or about 0.3 °C/min; particularly about 0.1 °C/min.

The incubation period may be between about 30 minutes and 6 hours, between about 1 hour and 5 hours, or between about 2 hours and 4 hours. Additionally or alternatively, the incubation period may be about 1 hour, about 2 hours, about 3 hours, about 4 hours, or about 5 hours.

Preferably, the heating stages comprise: heating the cured object from ambient temperature to a first intermediate temperature, wherein the first intermediate temperature is less than the target debinding-sintering temperature, and incubating the cured object at the first intermediate debinding-sintering temperature for a first predetermined period of time; heating the cured object from the first intermediate temperature to a second intermediate temperature, wherein the second intermediate temperature is less than the target debinding-sintering temperature, and incubating the cured object at the second intermediate debinding-sintering temperature for a second predetermined period of time; and optionally repeating the steps of heating and incubating for one or more of a third, fourth, fifth, sixth, seventh and eighth steps, until the target debinding-sintering temperature is reached; followed by a step of cooling the cured object to ambient temperature to provide the glass object.

This process advantageously may ensure essentially complete removal of organic species and uniform densification. Debinding and sintering are advantageously combined into a single heating curve/ single thermal treatment., so as to avoid handling the samples before they have obtained a sufficient strength.

In one preferred embodiment, the thermal treatment comprises thermal debinding and sintering of the cured object, according to the following protocol:
(i) heating the cured object from ambient temperature to a first target temperature between about 70 and 120 °C at a temperature ramp of between about 0.05 and 0.2 °C/min, and
   incubating the cured object for between about 1 and 4 hours at the first target temperature;
(ii) heating the cured object from the first target temperature to a second target temperature between about 170 and 210 °C at a temperature ramp of between about 0.05 and 0.2 °C/min, and
   incubating the cured object for between about 1 and 4 hours at the second target temperature;
(iii) heating the cured object from the second target temperature to a third target temperature between about 210 and 250 °C at a temperature ramp of between about 0.05 and 0.2 °C/min, and
   incubating the cured object for between about 1 and 4 hours at the third target temperature;
(iv) heating the cured object from the third target temperature to a fourth target temperature between about 250 and 290 °C at a temperature ramp of between about 0.05 and 0.2 °C/min, and
   incubating the cured object for between about 1 and 4 hours at the fourth target temperature;
(v) heating the cured object from the fourth target temperature to a fifth target temperature between about 290 and 330 °C at a temperature ramp of between about 0.05 and 0.2 °C/min, and
   incubating the cured object for between about 1 and 4 hours at the fifth target temperature;
(vi) heating the cured object from the fifth target temperature to a sixth target temperature between about 400 and 500 °C at a temperature ramp of between about 0.05 and 0.2 °C/min, and
   incubating the cured object for between about 1 and 4 hours at the sixth target temperature;
(vii) heating the cured object from the sixth target temperature to seventh target temperature between about 750 and 850 °C at a temperature ramp of between about 0.1 and 0.3 °C/min, and
   incubating the cured object for between about 1 and 4 hours at the seventh target temperature;
(viii) heating the cured object from the seventh target temperature to a target debinding-sintering temperature between about 950 and 1,150 °C at a temperature ramp of between about 0.1 and 0.3 °C/min, and
   incubating the cured object for between about 1 and 4 hours at the target debinding-sintering temperature; and optionally
(ix) cooling the cured object from 1,000 °C to ambient temperature at a temperature ramp of about 0.5°C.

Additionally or alternatively, the thermal treatment comprises thermal debinding and sintering of the cured object, according to the following protocol:
(i) heating the cured object from ambient temperature to about 75 °C at a temperature ramp of about 0.1 °C/min, and
   incubating the cured object for about 3 hours at about 75 °C;
(ii) heating the cured object from about 75 °C to about 200 °C at a temperature ramp of about 0.1 °C/min, and
   incubating the cured object for about 4 hours at about 200 °C;
(iii) heating the cured object from about 200 °C to about 233 °C at a temperature ramp of about 0.1 °C/min, and
   incubating the cured object for about 4 hours at about 233 °C;
(iv) heating the cured object from about 233 °C to about 266 °C at a temperature ramp of about 0.1 °C/min, and
   incubating the cured object for about 5 hours at about 266 °C;
(v) heating the cured object from about 266°C to about 300 °C at a temperature ramp of 0.1 °C/min, and
   incubating the cured object for about 4 hours at about 300 °C;
(vi) heating the cured object from about 300 °C to about 350 °C at a temperature ramp of about 0.1 °C/min, and
   incubating the cured object for about 4 hours at about 350 °C;
(i) heating the shaped object from about 350 °C to about 450 °C at a temperature ramp of about 0.1 °C/min, and incubating the shaped object for about 3 hours at about 450 °C;
(vii) heating the cured object from about 450 °C to about 800 °C at a temperature ramp of about 0.2 °C/min, and
   incubating the cured object for about 3 hours at about 800 °C;
(viii) heating the cured object from about 800 °C to about 1,000 °C at a temperature ramp of about 0.2 °C/min, and
   incubating the cured object for about 1 hour at about 1,000 °C; and optionally
(ix) cooling the cured object from 1,000 °C to ambient temperature at a temperature ramp of about 0.5°C.

When thermal debinding and sintering is performed after drying as part of the thermal treatment, the "cured" object mentioned above may be referred to as the "dried" object instead.

### Examples

The invention will now be illustrated by way of the following non-limiting examples.

In the following Examples:
- Transparent and crack-free glass was obtained in all Examples. The transmittance of light at 405 nm through each glass object was measured. The measured transmittance values of the examples varied between 90.50 and 98.83%, with the exception of Example 23 which had a measured transmittance of 76.11%.
- Several different high boiling point solvents were explored in Examples 1, 2, 3, 11, 12, 13, 14, 15, 22 and 25;
- Different aging conditions were explored in Examples 4, 9, 19, 21, 24, 31 and 32, as well as the effect such conditions have on speeding up the process. In all other examples, the samples were aged for 14 days at ambient temperature;
- Different proportions of high boiling point solvent were explored in Examples 5, 9 and 26;
- A different proportion of water was used in Example 6, both to see if larger amounts of water can obtain the same results, and to explore its influence on the speed of the reaction hence the strength development of the network;
- A different composition of the bicomponent system (Ti instead of Zr, plus Si) was used in Examples 7, 9, 23, and 24, so as to explore the effect on the refractive index of the printed glass;
- A tri-component system (Ti and Zr, plus Si) was used in Examples 8, 20, 21 and 22 so as to explore the effect on the refractive index of the printed glass;
- Different proportions of MTES was used in Example 10, 12, 13 and 15, so as to modify and /or improve the flexibility of the network;
- Acrylic acid was added in various amounts in Examples 11, 12, 13, 14 15, 29 and 30. This was does to generate an independent organic network and thus to modify the mechanical behaviour of the network. To this end, TMSPM was reduced since it is partially substituted by acrylic acid, thus avoiding having too large an amount of organics to eliminate during debinding.
- An evaporation step was included before printing of each of Examples 16, 17, 18, 19, 20, 21, 22, 23, 24, 25, 26, 27 and 28, and different lengths of evaporation periods was explored, so as to increase the viscosity of the solution, and thus to enable successful UV-DIW printing. Ceramic yield also increased due to the removal of part of the solvent.
- Compositions containing acrylic acid were used successfully for 3D printing using DLP in Examples 13, 15 and 29.
- Examples 20, 22, 25, 26, 27 and 28 - where the compositions were subjected to evaporation prior to printing - were particularly suitable for use in DIW processes.

The synthesis and the fabrication of Examples 1 to 32 were done in accordance with the following table:

| **Example No.** | **Composition of formulation No.¹** | **Formulation procedure No.²** | **Length of resting process³** | **Length of evaporation process (if any)⁴** | **Method of deposition** | **Length of aging process** | **Thermal treatment No.⁵** |
|---|---|---|---|---|---|---|---|
| 1 | 1 | 1 | 24h | No evaporation process | Casting | 2 weeks | 1 |
| 2 | 2 | 1 | 24h | No evaporation process | Casting | 2 weeks | 1 |
| 3 | 3 | 1 | 24h | No evaporation process | Casting | 2 weeks | 1 |
| 4 | 3 | 1 | 24h | No evaporation process | Casting | 1 week | 1 |
| 5 | 4 | 1 | 24h | No evaporation process | Casting | 2 weeks | 1 |
| 6 | 5 | 1 | 24h | No evaporation process | Casting | 2 weeks | 1 |
| 7 | 6 | 1 | 24h | No evaporation process | Casting | 2 weeks | 1 |
| 8 | 7 | 1 | 24h | No evaporation process | Casting | 2 weeks | 1 |
| 9 | 8 | 1 | 24h | No evaporation process | Casting | 1 week | 1 |
| 10 | 9 | 1 | 24h | No evaporation process | Casting | 2 weeks | 1 |
| 11 | 10 | 1 | 24h | No evaporation process | Casting | 2 weeks | 1 |
| 12 | 11 | 1 | 24h | No evaporation process | Casting | 2 weeks | 1 |
| 13 | 12 | 1 | <24h | No evaporation process | Casting, DLP | 2 weeks | 1 |
| 14 | 13 | 1 | 24h | No evaporation process | Casting | 2 weeks | 1 |
| 15 | 14 | 1 | <24h | No evaporation process | Casting, DLP | 2 weeks | 1 |
| 16 | 1 | 1 | 24h | 0.5h | Casting | 2 weeks | 1 |
| 17 | 1 | 1 | 24h | 1h | Casting | 2 weeks | 1 |
| 18 | 1 | 1 | 24h | 2h | Casting | 2 weeks | 1 |
| 19 | 1 | 1 | 24h | 0.5h | Casting | 1 week | 1 |
| 20 | 7 | 1 | 24h | 3.5h | Casting, UV-DIW | 2 weeks | 1 |
| 21 | 7 | 1 | 24h | 3.5h | Casting, UV-DIW | 1 week | 1 |
| 22 | 15 | 1 | 24h | 6h | Casting, UV-DIW | 2 weeks | 1 |
| 23 | 6 | 1 | 24h | 3.5h | Casting | 2 weeks | 1 |
| 24 | 6 | 1 | 24h | 3.5h | Casting | 1 week | 1 |
| 25 | 2 | 1 | 24h | 3.5h | UV-DIW | 2 weeks | 1 |
| 26 | 4 | 1 | 1h | 4h | UV-DIW | 2 weeks | 1 |
| 27 | 1 | 1 | 24h | 3h | UV-DIW | 2 weeks | 1 |
| 28 | 1 | 1 | 1h | 4h | UV-DIW | 2 weeks | 1 |
| 29 | 16 | 1 | <24h | No evaporation process | Casting, DLP | 2 weeks | 1 |
| 30 | 17 | 1 | 24h | No evaporation process | Casting | 2 weeks | 1 |
| 31 | 1 | 1 | 24h | No evaporation process | Casting | 1 week | 1 |
| 32 | 2 | 1 | 24h | No evaporation process | Casting | 1 week | 1 |

| | | | | | | | |
|---|---|---|---|---|---|---|---|
| ¹Regarding **Composition of formulation No.:** Each of Examples 1 of 32 has one of Compositions 1 to 17. Specific detail about each of Compositions 1 to 17 is provided in each Example section below. The Example number does not necessarily correspond with the Composition number. For example, Example 4 has Composition 3, which is also the same composition that Example 3 has. However, Example 10 has Composition 9, which is different from the composition that Example 9 has, which instead has Composition 8. Likewise, Example 30 has Composition 17, which is different from the composition that Example 17 has, which instead has Composition 1. ²The **Formulation procedure No.** relates to the procedure used to make the formulation, which was substantially the same for all of Examples 1 to 32, hereinafter referred to as type 1. The sol-gel photocurable solution was synthesized by preparing a solution (the "M solution") of a transition metal precursor (e.g. including transition metal alkoxide(s), such as zirconium n-butoxide and/or titanium isopropoxide) is optionally mixed with a chelating agent, such as a carboxylic acid(s) (e.g. acetic acid and/or acrylic acid) in a closed first vial for 25 minutes. In a closed second vial, a mixture of a silicon sol-gel precursor (e.g. including silicon alkoxides), the "S solution", was mixed with an organic solvent (PC/POE/TPM). Distilled water was then introduced dropwise into the as-prepared S solution. After mixing for a predetermined period of time (e.g. approx. 5 minutes) the S solution was adjusted to a desired acidic pH (e.g. pH to 1), using a strong acid (e.g. nitric acid), and the S solution was then left stirring for a predetermined period of time (e.g. approx. 50 minutes) in the closed second vial. Afterwards, the M solution was poured into the S solution with continuous stirring at a predetermined speed (e.g. approx. 1000 rpm). A photoinitiator (e.g. diphenyl(2,4,6-trimethylbenzoyl) phosphine oxide, TPO) was then added to give a desired concentration (e.g. approx. 5 wt% relative to the weight of the photopolimerisable compounds). For inks to be printed by DLP (see Examples 13, 15 and 29), a photoabsorber (e.g. 2-[(E)-(2-methoxyphenyl)diazenyl]naphthalen-2-ol, Sudan Red G) was added at a suitable concentration (e.g. 0.0225 wt%) relative to the total weight of the ink in order to avoid overexposure and loss of resolution in the Z printing direction during the printing process. The synthesis was performed at ambient temperature and all the reagents were used as-received. ³The **Length of resting process** refers to the time between the end of the formulation of the composition and the fabrication (e.g. printing) of the glass objects. ⁴ Regarding the **Length of evaporation process,** for those Examples where evaporation of the formulation is performed, it was done for the time specified at 60°C under continuous stirring of the formulation. **⁵Thermal treatment** refers to a treatment where the formulation is first dried and then undergoes thermal rebinding and sintering, both done in air. All Examples are subject to the same thermal treatment procedure, hereinafter referred to as type 1. First, drying was performed as follows: | | | | | | | |

| Starting temperature [°C] | Final temperature [°C] | Heating rate [°C/min] | Incubation time [h] |
|---|---|---|---|
| 25 | 50 | 0.2 | 14 |
| 50 | 80 | 0.25 | 3 |
| 80 | 100 | 0.33 | 3 |
| 100 | 120 | 0.33 | 15 |

Secondly, the procedure of debinding and sintering was performed as follows:

| Starting temperature [°C] | Final temperature [°C] | Heating rate [°C/min] | Incubation time [h] |
|---|---|---|---|
| 25 | 75 | 0.1 | 3 |
| 75 | 200 | 0.1 | 4 |
| 200 | 233 | 0.1 | 4 |
| 233 | 266 | 0.1 | 5 |
| 266 | 300 | 0.1 | 4 |
| 300 | 350 | 0.1 | 4 |
| 350 | 450 | 0.1 | 3 |
| 450 | 800 | 0.2 | 3 |
| 800 | 1000 | 0.2 | 1 |
| 1000 | 25 | 0.5 | - |

Now more details about each of Examples 1 to 32 will be provided.

### Example 1: (composition name 'C30 PC')

A sol-gel photocurable formulation was prepared comprising the following reactants: 1.9 wt% triethoxymethylsilane (MTES, silicon precursor), 31.3 wt% tetraethyl orthosilicate (TEOS, silicon precursor), 7.4 wt% 3-(trimethoxysilyl)propyl methacrylate (TMSPM, silicon precursor and photocurable monomer), 30.0 wt% propylene carbonate (PC, organic solvent), 6.5 wt% distilled water, 18.3 wt% zirconium n-butoxide (transition metal precursor), 4.6 wt% acetic acid (AcOH, chelating agent to control the reactivity of zirconium n-butoxide).This formulation has Composition 1:

| **C30 PC** | **m [g]** | **wt%** |
|---|---|---|
| MTES | 0.178 | 1.89 |
| TEOS | 2.951 | 31.27 |
| TMSPM | 0.704 | 7.46 |
| PC | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

Samples were shaped by soft lithography: the samples were cast and photopolymerised in a UV oven for 4 to 6 minutes to obtain the photocured objects. The dimensions of the as prepared samples varied between 10×10×4 mm and 10x10x7 mm. After the fabrication, the photocured objects were aged for 14 days at ambient temperature to increase the strength of the resulting network, and subsequently underwent thermal treatment.

Relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC | C2 | 1.549 | 90.50 | 2.708 | 52.625 | 53.135 |

| | | | | | | |
|---|---|---|---|---|---|---|
| *Sample measuring file | | | | | | |

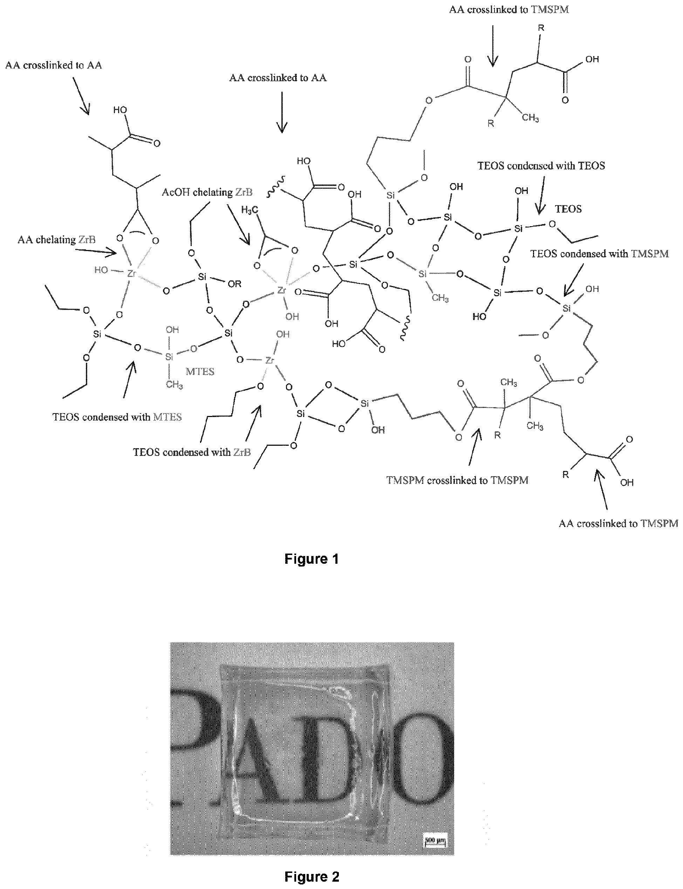

A transparent, colourless glass tile was produced after thermal treatment at 1,000°C (see Figure 2).

### Example 2: (composition name 'C30 POE')

In this Example, a sol-gel photocurable formulation similar to that of Example 1 was produced for glass printing. However, in order to test the effect of using different organic solvents, propylene carbonate (PC) of Example 1 was substituted with phenoxyethanol (POE), with all other components remaining constant. This formulation has Composition 2:

| **C30 POE** | **m [g]** | **wt%** |
|---|---|---|
| MTES | 0.178 | 1.89 |
| TEOS | 2.951 | 31.27 |
| TMSPM | 0.704 | 7.46 |
| POE | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were fabricated according to the procedure described in Example 1 and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 POE | C4 | 1.552 | 96.03 | 2.703 | 55.383 | 56.109 |

| | | | | | | |
|---|---|---|---|---|---|---|
| *Sample measuring file | | | | | | |

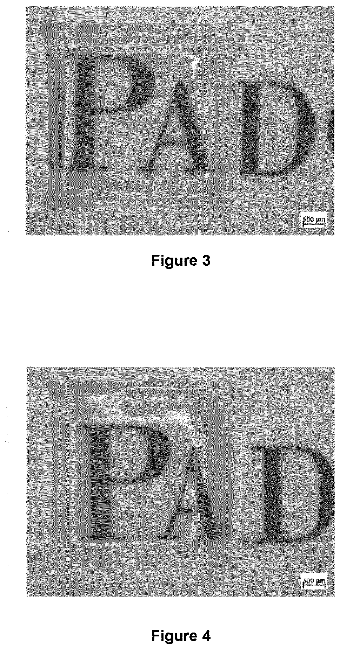

After thermal treatment / sintering at 1,000°C, a crack-free glass tile was obtained, as shown in Figure 3.

### Example 3: (composition name 'C30 TPM')

In this Example, a sol-gel photocurable formulation similar to that of Examples 1 and 2 was produced for glass printing. However, in order to test the effect of using different organic solvents, propylene carbonate (PC) of Example 1 or phenoxyethanol (POE) of Example 2 (`C30 POE') was substituted with tripropylene glycol monomethyl ether (TPM), with all other components remaining constant. This formulation has Composition 3:

| **C30 TPM** | **m [g]** | **wt%** |
|---|---|---|
| MTES | 0.178 | 1.89 |
| TEOS | 2.951 | 31.27 |
| TMSPM | 0.704 | 7.46 |
| TPM | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were fabricated according to the procedure described in Example 1 and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 TPM | C6 | 1.549 | 96.63 | 2.711 | 52.966 | 53.387 |

| | | | | | | |
|---|---|---|---|---|---|---|
| *Sample measuring file | | | | | | |

After thermal treatment / sintering at 1,000°C, a crack-free glass tile was obtained, as shown in Figure 4.

### Example 4: (composition name 'C30 TPM 7d')

In this Example, exactly the same sol-gel photocurable formulation was used as in Example 3 above ('C30 TPM') - Composition 3.

| **C30 TPM 7d** | **m [g]** | **wt%** |
|---|---|---|
| MTES | 0.178 | 1.89 |
| TEOS | 2.951 | 31.27 |
| TMSPM | 0.704 | 7.46 |
| TPM | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The formulation was subjected to a rest prior to printing, wherein it was left for 24 hours and continuously stirred. This rest has been found to improve network connectivity and reactivity to photopolymerisation (thus increasing the speed of the curing / printing process), and also to increase the viscosity of the formulation, which can also help in processes such as direct-ink-writing.'.

The samples were printed in the same way as for Example 1 described above.

In order to explore the effects of 'aging' the samples after fabrication (and in particular the effects on the strength of the samples after sintering), the photocured objects were left for 7 days at ambient temperate to `age'. Aging of the fabricated samples after shaping has been found to increase the strength of the forming network and to eliminate the presence of cracks within the printed samples after sintering. This is because after shaping, the forming network still contains condensable groups and/or unreacted monomers. However, these can undergo polycondensation reactions during the aging process, thus resulting in a stronger network and a higher silica content.

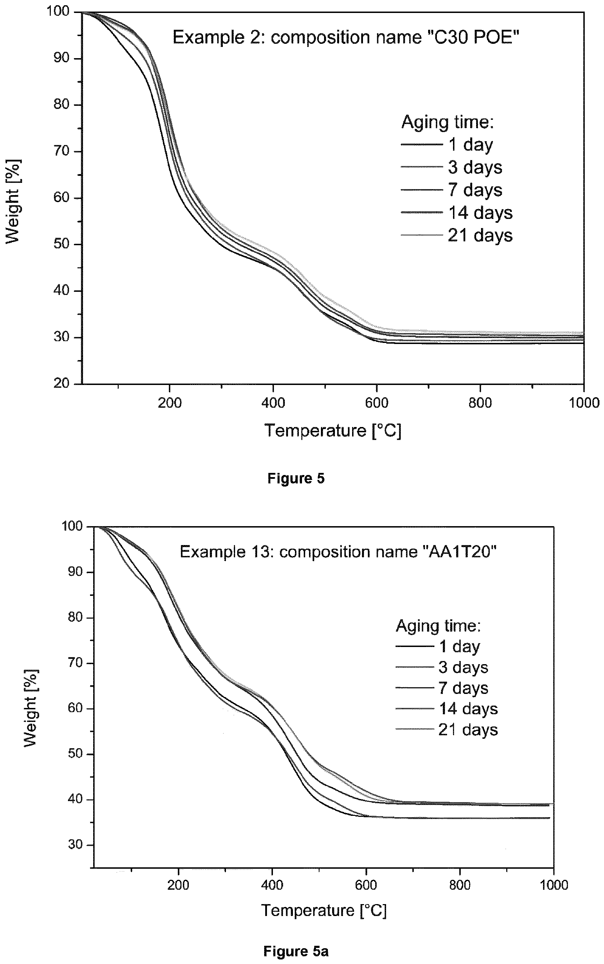

This is best understood comparing Figure 5, which is thermogravimetric curve of the formulation of Example 2, and Figure 5a, which is the thermogravimetric curve of the formulation of Example 13. These curves show that with increasing the aging time, the weight loss during the thermal treatment up to 1000°C is lower, and this is particularly advantageous because it means that we have a higher content of oxides (e.g., silica and zirconia, silica and titania, or silica, titania and zirconia) thanks to the polycondensation reactions that can occur during this aging time. The possibility of having a lower weight loss (and thus a higher ceramic yield) helps to prevent the crack formation and strengthens the forming network.

The relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 TPM 7d | C7 | 1.549 | 96.59 | 2.618 | 54.811 | 55.429 |

| | | | | | | |
|---|---|---|---|---|---|---|
| *Sample measuring file | | | | | | |

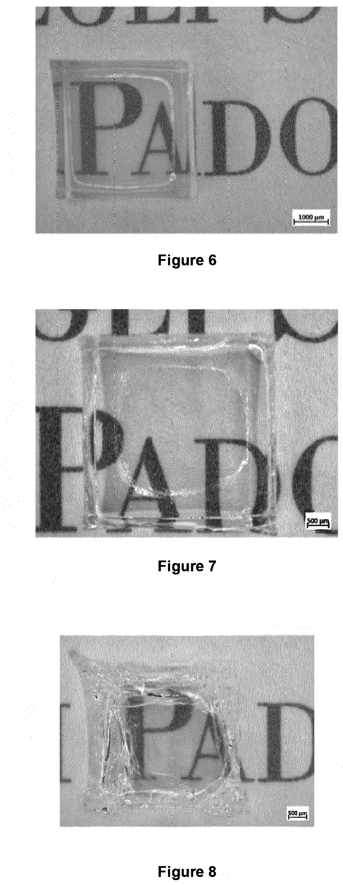

After thermal treatment / sintering at 1,000°C, a crack-free glass tile was obtained, as shown in Figure 6.

### Example 5: (composition name 'C20 POE')

In this Example, a similar sol-gel photocurable formulation was used as in Example 2 ('C30 POE'), except that amount of organic solvent was changed to test the effect of both the type of organic solvent and the amount of organic solvent. More specifically, as illustrated in the Table below, the amount of POE was reduced from approx. 30 wt% to approx. 20 wt%.

The sol-gel photocurable formulation (C20 POE) was prepared comprising the following reactants: 2.2 wt% MTES, 35.8 wt% TEOS, 8.5 wt% TMSPM, 20.0 wt% POE (as organic solvent), 7.4 wt% distilled water, 20.9 wt% zirconium n-butoxide, and 5.2 wt% acetic acid. This formulation has Composition 4:

| **C20 POE** | **m [g]** | **wt%** |
|---|---|---|
| MTES | 0.178 | 2.16 |
| TEOS | 2.951 | 35.74 |
| TMSPM | 0.704 | 8.53 |
| POE | 1.652 | 20.00 |
| H2O | 0.614 | 7.43 |
| ZrB n-butanol | 1.727 | 20.91 |
| AcOH | 0.432 | 5.23 |
| Total | 8.258 | 100.00 |

The samples were fabricated according to the procedure described in Example 1.

Notably, the molar ratio of ([TEOS]+[TMSPM]) : [MTES] was 17; the molar ratio of [TEOS] : [TMSPM] was 5; and the molar ratio of [AcOH] : [Zr] was 2.

| **Formulation** | **Sample code*** | **Density [g/cm³]** |
|---|---|---|
| C20 POE | C1 | 2.610 |

| | | |
|---|---|---|
| *Sample measuring file | | |

After thermal treatment / sintering at 1,000°C, a crack-free glass tile was obtained (see Figure 7).

### Example 6: (composition name 'C30 PC 75% hydrolysis')

In this Example, a similar sol-gel photocurable formulation was used as in Example 1 ('C30 PC'), except that an amount of amount of water was used to promote hydrolysis of 75% of the hydrolysable groups from the silicon alkoxides. This formulation has Composition 5:

| **C30 PC 75% hydrolysis** | **m [g]** | **wt%** |
|---|---|---|
| MTES | 0.178 | 1.83 |
| TEOS | 2.951 | 30.28 |
| TMSPM | 0.704 | 7.22 |
| PC | 2.832 | 29.06 |
| H2O | 0.921 | 9.45 |
| ZrB n-butanol | 1.727 | 17.72 |
| AcOH | 0.432 | 4.44 |
| Total | 9.745 | 100.00 |

The samples were fabricated according to the procedure described in Example 1.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC 75% hydrolysis | C8 | 1.548 | 97.73 | 2.599 | 54.191 | 55.149 |

| | | | | | | |
|---|---|---|---|---|---|---|
| *Sample measuring file | | | | | | |

After thermal treatment at 1,000°C, a crack-free glass tile was obtained (see Figure 8).

### Example 7: (Composition name 'C30 Ti PC')

In this Example, a similar sol-gel photocurable formulation was used as in Example 1 ('C30 PC'), except that titanium isopropoxide was used as the transition metal precursor in place of zirconium n-butoxide. The 5:1 molar ratio of silicon to transition metal(s) (i.e., titanium) remained unchanged. This formulation has Composition 6:

| **C30 Ti PC** | **m [g]** | **wt%** |
|---|---|---|
| MTES | 0.178 | 2.04 |
| TEOS | 2.951 | 33.78 |
| TMSPM | 0.704 | 8.06 |
| PC | 2.832 | 32.42 |
| H2O | 0.614 | 7.03 |
| TilP | 1.024 | 11.72 |
| AcOH | 0.432 | 4.95 |
| Total | 8.735 | 100.00 |

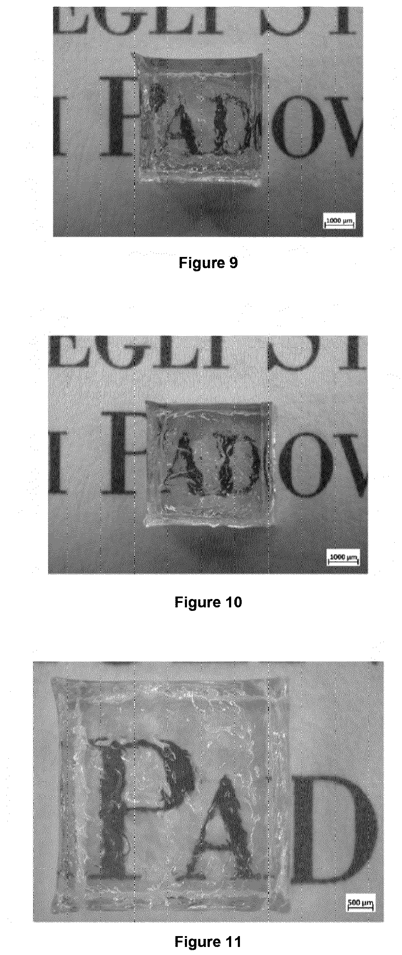

The samples were fabricated according to the procedure described in Example 1. After thermal treatment at 1,000°C, a crack-free glass tile was obtained (see Figure 9).

### Example 8: (Composition name 'C30 TiZr PC')

In this Example, a similar sol-gel photocurable formulation was used as in Example 1 ('C30 PC'), except that both titanium isopropoxide and zirconium n-butoxide were used as the transition metal precursors in place of only zirconium n-butoxide alone. The 5:1 molar ratio of silicon to transition metal(s) (i.e., titanium and zirconium) remained unchanged, and the molar ratio of titanium to zirconium was set at 1. This formulation has Composition 7:

| **C30 TiZr PC** | **m [g]** | **wt%** |
|---|---|---|
| MTES | 0.178 | 1.96 |
| TEOS | 2.951 | 32.48 |
| TMSPM | 0.704 | 7.75 |
| PC | 2.832 | 31.17 |
| H2O | 0.614 | 6.75 |
| ZrB n-butanol | 0.864 | 9.50 |
| TilP | 0.512 | 5.63 |
| AcOH | 0.432 | 4.76 |
| Total | 9.0865 | 100.00 |

The samples were fabricated according to the procedure described in Example 1. After thermal treatment at 1,000°C, a crack-free glass tile was obtained (see Figure 10).

### Example 9: (Composition name 'C20 Ti PC 7 days aging')

In this Example, a similar sol-gel photocurable formulation was used as in Example 5 ('C20 POE'), except that titanium isopropoxide was used as the transition metal precursor instead of zirconium n-butoxide, the photocured bodies after shaping were aged for 7 days instead of 14 days, and PC was used as the organic solvent instead of POE. The 5:1 molar ratio of silicon to transition metal(s) (i.e., titanium) remained unchanged. This formulation has Composition 8:

| **C20 Ti PC 7d** | **m [g]** | **wt%** |
|---|---|---|
| MTES | 0.178 | 2.35 |
| TEOS | 2.951 | 39.06 |
| TMSPM | 0.704 | 9.32 |
| PC | 1.652 | 21.87 |
| H2O | 0.614 | 8.13 |
| TilP | 1.024 | 13.55 |
| AcOH | 0.432 | 5.72 |
| Total | 7.555 | 100.00 |

The samples were fabricated according to the procedure described in Example 1. After thermal treatment at 1,000°C, a crack-free glass tile was obtained (see Figure 11).

### Example 10: (Composition name 'C30 M10')

In this Example, a similar sol-gel photocurable formulation was used as in Example 1 ('C30 PC'), except that the molar ratio of ([TEOS]+[TMSPM]) : [MTES] was 10 (instead of 17). This formulation has Composition 9:

| **C30 M10** | **m [g]** | **wt%** |
|---|---|---|
| MTES | 0.292 | 3.11 |
| TEOS | 2.833 | 30.13 |
| TMSPM | 0.678 | 7.21 |
| PC | 2.832 | 30.12 |
| H2O | 0.608 | 6.47 |
| ZrB n-butanol | 1.727 | 18.37 |
| AcOH | 0.432 | 4.59 |
| Total | 9.402 | 100.00 |

The samples were fabricated according to the procedure described in Example 1, and relevant parameters of the resultant solid glass body are shown in the table below.

| **Formulation** | **Sample code*** | **Density [g/cm³]** |
|---|---|---|
| C30 M10 | C21 | 2.573 |

| | | |
|---|---|---|
| *Sample measuring file | | |

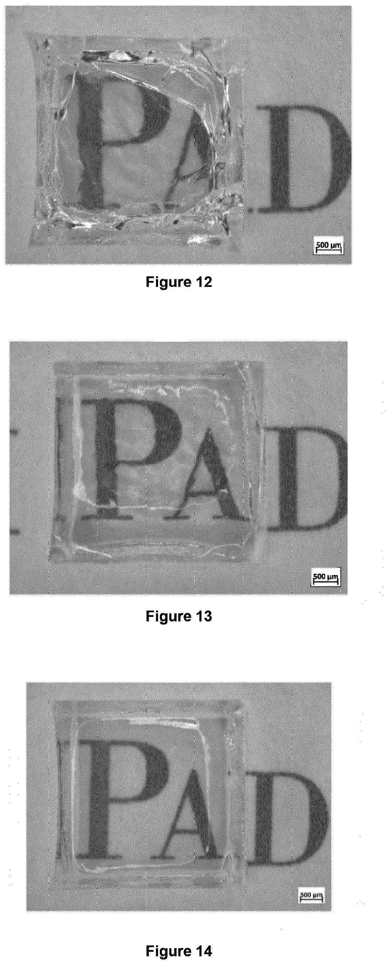

After thermal treatment at 1,000°C, a crack-free glass tile was obtained (see Figure 12).

### Example 11: (Composition name 'AA0.5T20 POE')

In this Example, a similar sol-gel photocurable formulation was used as in Example 5 ('C20 POE'), except that the molar ratio [TEOS] : [TMSPM] was set at 20. The 5:1 molar ratio of silicon to transition metal(s) (i.e., zirconium), the molar ratio ([TEOS]+[TMSPM]) : [MTES] and the molar ratio [AcOH] : [Zr] remained unchanged. Acrylic acid was then introduced in the formulation as an additional complexing agent in a 0.5:1 molar ratio to zirconium. This formulation has Composition 10:

| **AA0.5T20 POE** | **m [g]** | **wt%** |
|---|---|---|
| MTES | 0.178 | 2.14 |
| TEOS | 3.373 | 40.49 |
| TMSPM | 0.201 | 2.41 |
| POE | 1.652 | 19.83 |
| H2O | 0.632 | 7.58 |
| ZrB n-butanol | 1.727 | 20.73 |
| AcOH | 0.432 | 5.18 |
| AA | 0.137 | 1.64 |
| Total | 8.331 | 100.00 |

The samples were fabricated according to the procedure described in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| AA0.5T20 | C15 | 1.553 | 97.66 | 2.723 | 42.188 | 44.563 |

| | | | | | | |
|---|---|---|---|---|---|---|
| *Sample measuring file | | | | | | |

After thermal treatment at 1,000°C, a crack-free transparent glass tile was obtained (see Figure 13).

### Example 12: (Composition name 'AA1T20mod POE')

In this Example, a similar sol-gel photocurable formulation was used as in Example 11 ('AA0.5T20 POE'), except that the molar ratio ([TEOS]+[TMSPM]) : [MTES] was set at 9.2. The 5:1 molar ratio of silicon to transition metal(s) (i.e., zirconium herein) and the molar ratio [TEOS] : [TMSPM] remained unchanged. Acrylic acid was introduced into the formulation as an additional complexing agent in a 1.05 : 1 molar ratio to zirconium, whilst the molar ratio of acetic acid to zirconium was set at 1, thereby resulting in the molar ratio ([AA]+[AcOH]) : [Zr] of 2.05. This formulation has Composition 11:

| **AA1T20mod POE** | **m [g]** | **wt%** |
|---|---|---|
| MTES | 0.316 | 3.84 |
| TEOS | 3.220 | 39.16 |
| TMSPM | 0.192 | 2.34 |
| POE | 1.652 | 20.09 |
| H2O | 0.626 | 7.61 |
| ZrB n-butanol | 1.727 | 21.01 |
| AcOH | 0.216 | 2.63 |
| AA | 0.273 | 3.32 |
| Total | 8.222 | 100.00 |

The samples were fabricated according to the procedure described in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| AA1T20mod | C16 | 1.551 | 98.83 | 2.697 | 57.338 | 58.263 |

| | | | | | | |
|---|---|---|---|---|---|---|
| *Sample measuring file | | | | | | |

After thermal treatment at 1,000°C, a crack-free transparent glass tile was obtained (see Figure 14).

### Example 13: (Composition name 'AA1T20 POE')

In this Example, a similar sol-gel photocurable formulation was used as in Example 12 ('AA1T20mod POE'), except that the molar ratio ([TEOS]+[TMSPM]) : [MTES] was set at 16.3 and the molar ratio [Si] : [Zr] was set at 4.8. The molar ratio [TEOS] : [TMSPM] and the molar ratio ([AA]+[AcOH]) : [Zr] molar remained unchanged. This formulation has Composition 12:

| **AA1T20 POE** | **m [g]** | **wt%** |
|---|---|---|
| MTES | 0.178 | 2.21 |
| TEOS | 3.220 | 39.93 |
| TMSPM | 0.192 | 2.38 |
| POE | 1.652 | 20.49 |
| H2O | 0.605 | 7.50 |
| ZrB n-butanol | 1.727 | 21.42 |
| AcOH | 0.216 | 2.68 |
| AA | 0.273 | 3.39 |
| Total | 8.063 | 100.00 |
| Sudan Red G | 0.0018 | 0.0225 |

The samples were fabricated according to the procedure described in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| AA1T20 POE | C14 | 1.552 | 97.23 | 2.723 | 55.604 | 57.429 |

| | | | | | | |
|---|---|---|---|---|---|---|
| *Sample measuring file | | | | | | |

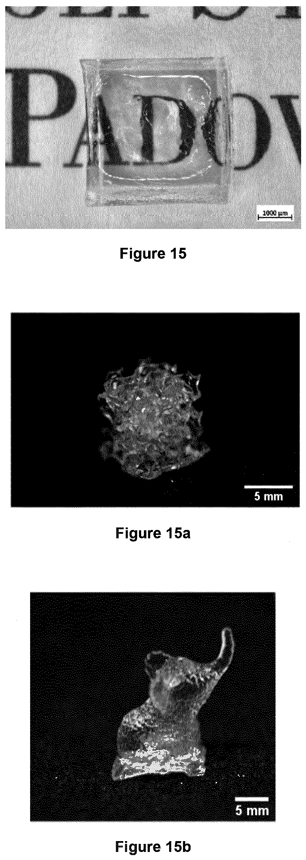

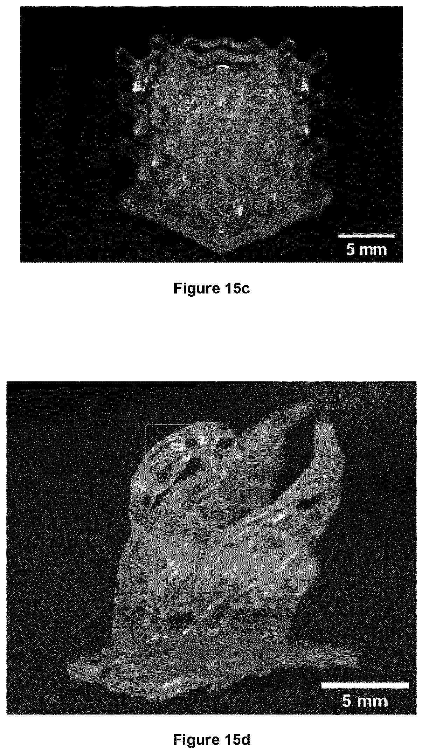

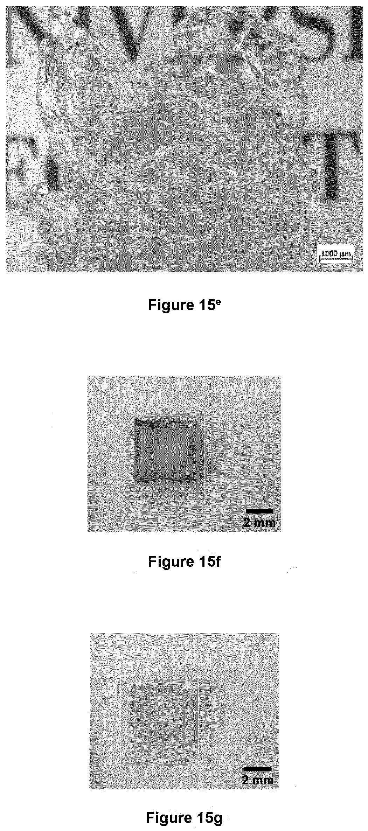

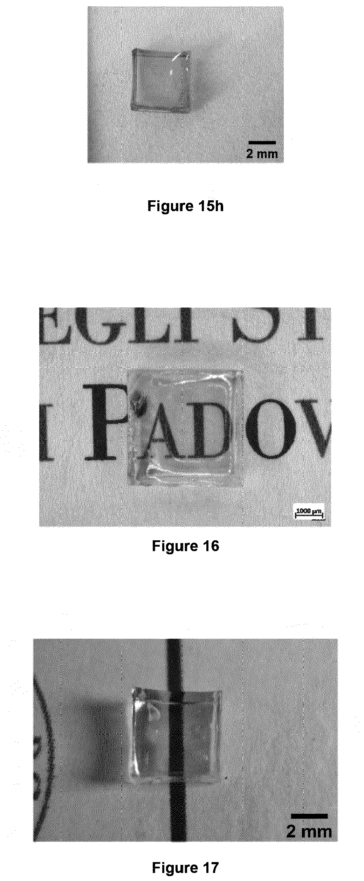

After thermal treatment at 1,000°C, a crack-free transparent glass tile was obtained (see Figure 15).

Complex three-dimensional structures were printed by digital light processing. After adding the photoabsorber and subjecting the solution to a rest that includes mixing the solution for 16-24h, the feedstock was poured in the vat of a 3D printer Asiga Pico2 with a UV-LED light source of 385 nm. The layer thickness was set at 50 µm and the exposure time was between 4 and 6 s, with a light intensity of 29 mW/cm². After thermal treatment at 1,000°C, the samples shown in Figures 15a, 15b (a glass elephant), 15c, 15d (a glass swan) and 15e 15d (another glass swan) were obtained.

Regarding all samples that are fabricated by DLP, as these formulations are relatively more reactive, it can be beneficial to print the formulations earlier. For example, the solution can be left to rest for only 15-24h prior to printing.

Moreover, coloured glass samples were fabricated by doping the sol-gel photocurable formulation with different concentrations of cobalt(II) acetate and copper(II) acetate. After thermal treatment at 1,000°C, the sample doped with 0.2 wt% CoO appears blue (see Figure 15f), whereas the sample doped with 0.25 wt% CuO exhibits blue-green (or aqua) hues (see Figure 15g) and the sample doped with 0.50 wt% CuO exhibits green hues (see Figure 15h).

### Example 14: (Composition name 'AA1T20 TPM')

In this Example, a similar sol-gel photocurable formulation was used as in Example 13 ('AA1T20 POE'), except that TPM was used as the organic solvent instead of POE. This formulation has Composition 13:

| **AA1T20 TPM** | **m [g]** | **wt%** |
|---|---|---|
| MTES | 0.178 | 2.21 |
| TEOS | 3.220 | 39.93 |
| TMSPM | 0.192 | 2.38 |
| TPM | 1.652 | 20.49 |
| H2O | 0.605 | 7.50 |
| ZrB n-butanol | 1.727 | 21.42 |
| AcOH | 0.216 | 2.68 |
| AA | 0.273 | 3.39 |
| Total | 8.063 | 100,00 |

The samples were fabricated according to the procedure described in Example 1, and relevant parameters of the resultant solid glass body are shown in the table below.

| **Formulation** | **Sample code*** | **Density [g/cm³]** |
|---|---|---|
| AA1T20 TPM | C20 | 2.664 |

| | | |
|---|---|---|
| *Sample measuring file | | |

After thermal treatment at 1,000°C, a crack-free glass tile was obtained (see Figure 16).

### Example 15: (Composition name 'AA1.125T20 POE')

In this Example, a similar sol-gel photocurable formulation was used as in Example 13 ('AA1T20 POE'), except that the molar ratio ([TEOS]+[TMSPM]) : [MTES] was set at 16, the molar ratio [TEOS] : [TMSPM] was set at 30.5, and the molar ratio [Si] : [Zr] was set at 4.7. Acrylic acid was introduced in the formulation in a 1.125:1 molar ratio to zirconium, whilst the molar ratio of acetic acid to zirconium was set at 0.875, thereby resulting in the molar ration ([AA]+[AcOH]) : [Zr] of 2. This formulation has Composition 14:

| **AA1.125T20 POE** | **m [g]** | **wt%** |
|---|---|---|
| MTES | 0.178 | 2.23 |
| TEOS | 3.220 | 40.31 |
| TMSPM | 0.126 | 1.58 |
| POE | 1.652 | 20.68 |
| H2O | 0.604 | 7.56 |
| ZrB n-butanol | 1.727 | 21.62 |
| AcOH | 0.189 | 2.37 |
| AA | 0.292 | 3.65 |
| Total | 7.988 | 100.00 |
| Sudan Red G | 0.0018 | 0.0225 |

| | | |
|---|---|---|
| * The amount of Sudan Red G was added on top of and with respect to the full formulation. Sudan Red G is a fully organic colouring agent that fully decomposes upon firing (and thus does not provide any colour to the resulting glass). However, Sudan Red G does advantageously limit the penetration depth of light during printing, leading to sharper and better-defined features (especially for parts with overhanging structures). | | |

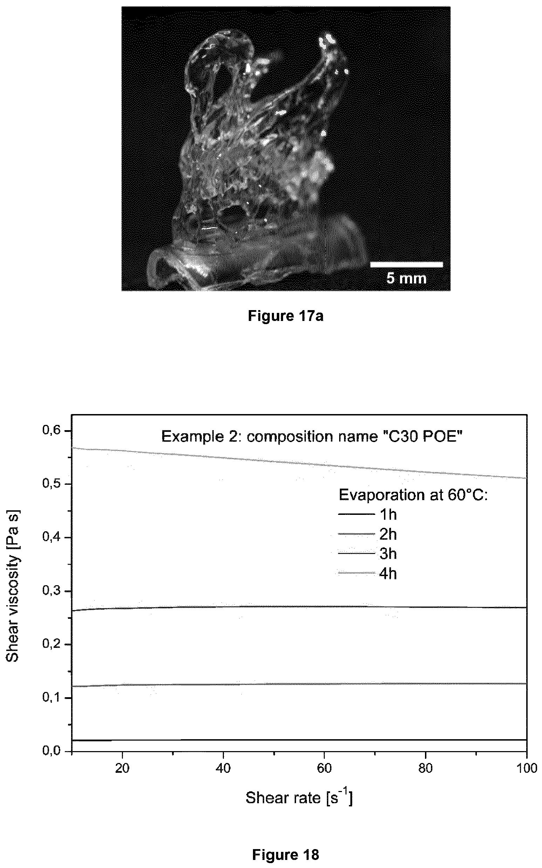

One sample was fabricated according to the procedures reported in Example 1. After thermal treatment at 1,000°C, a crack-free transparent glass tile was obtained (see Figure 17).

A complex three-dimensional structure in the form of a glass swan was also printed using the procedure reported in Example 13. After thermal treatment at 1,000°C, the crack-free transparent sample shown in Figure 17a was obtained.

In Examples 20, 22, 25, 26, 27 and 28 disclosed hereafter, ultraviolet-assisted direct ink writing technology (UV-DIW) was used to fabricate complex three-dimensional glass structures. Important to this process is the design of feedstocks with a sufficiently high viscosity. To this end, the feedstocks were subjected to an evaporation process. This enables the extrusion of a continuous liquid filament. The application of UV radiation serves the purpose of rapidly solidifying the liquid upon exiting from the nozzle.

Examples 16, 17, 18, 19, 21, 23 and 24 below were fabricated by casting but an evaporation step to increase the viscosity was also used.

The sol-gel photocurable feedstocks of Examples 16 to 28 were synthesized according to the protocol reported above. After mixing for 24h, the vessel was then opened to air and the solution was heated at 60°C under continuous stirring as part of the evaporation process, until the feedstock exhibited the required rheological response (see feedstock viscosity curve of Example 2 shown in Figure 18).

For Examples 20, 22, 25, 26, 27 and 28, the sol-gel feedstock was then transferred into a 5-ml syringe barrel and the feedstock-loaded syringe was installed in the z-axis of a three-axis motion-controlled stage. The extrusion-based 3D printing process of the sol-gel feedstock was then performed by using of a Delta printer (WASP Delta Turbo2 2040) coupled with a lab-made UV-LED array system. The bi- and multi-component feedstocks were extruded through conical nozzles with a 250 or 410 µm diameter.

### Example 16: (Composition name 'C30 PC evap 30min')

In this Example, the sol-gel photocurable formulation used in Example 1 (`C30 PC') was used - Composition 1 - but the solution was heated in accordance with the procedure described above for 30 minutes.

| **C30 PC evap 30min** | **m [g]** | **wt%** |
|---|---|---|
| MTES | 0.178 | 1.89 |
| TEOS | 2.951 | 31.27 |
| TMSPM | 0.704 | 7.46 |
| PC | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were fabricated according to the procedure reported in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC evap 30min | C9 | 1.549 | 94.35 | 2.699 | 55.055 | 55.576 |

| | | | | | | |
|---|---|---|---|---|---|---|
| *Sample measuring file | | | | | | |

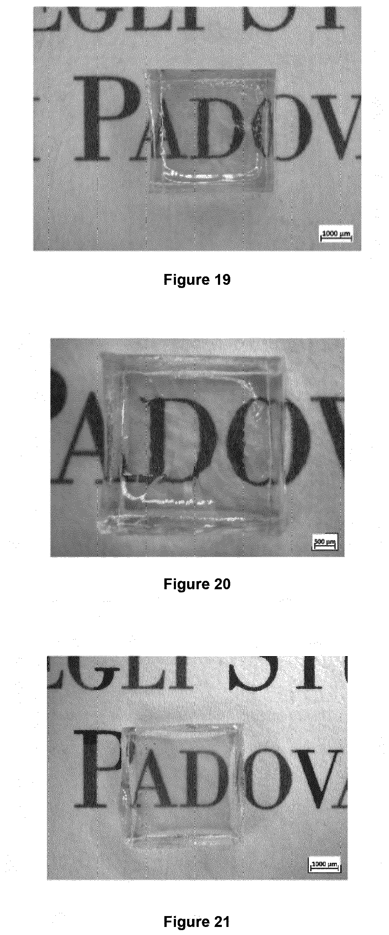

After thermal treatment at 1,000°C, a crack-free glass tile was obtained (see Figure19).

### Example 17: (Composition name 'C30 PC evap 1h')

In this Example, the sol-gel photocurable formulation used in Example 1 ('C30 PC') was used - Composition 1 - but the solution was heated in accordance with the procedure described above for 1 hour.

The samples were fabricated according to the procedure reported in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC evap 1h | C11 | 1.550 | 98.76 | 2.626 | 60.037 | 60.448 |

| | | | | | | |
|---|---|---|---|---|---|---|
| *Sample measuring file | | | | | | |

After thermal treatment at 1,000°C, a crack-free glass tile was obtained (see Figure 20).

### Example 18: (Composition name 'C30 PC evap 2h')

In this Example, the sol-gel photocurable formulation used in Example 1 ('C30 PC') was used - Composition 1 - but the solution was heated in accordance with the procedure described above for 2 hours.

The samples were fabricated according to the procedure reported in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC evap 2h | C12 | 1.548 | 98.61 | 2.689 | 63.074 | 64.854 |

| | | | | | | |
|---|---|---|---|---|---|---|
| *Sample measuring file | | | | | | |

After thermal treatment at 1,000°C, a crack-free glass tile was obtained (see Figure 21).

### Example 19: (Composition name 'C30 PC evap 30min 7 days aging')

In this Example, the sol-gel photocurable formulation used in Example 1 ('C30 PC') was used - Composition 1 - but the samples were aged for 7 days (instead of 14 days) after the fabrication.

The samples were fabricated according to the procedure reported in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 PC evap 30min 7d | C10 | 1.549 | 97.27 | 2.670 | 54.255 | 55.225 |

| | | | | | | |
|---|---|---|---|---|---|---|
| *Sample measuring file | | | | | | |

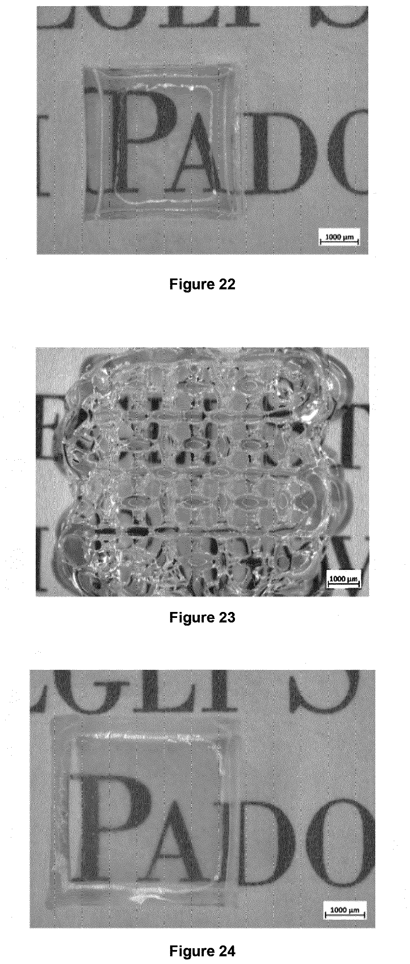

After thermal treatment at 1,000°C, a crack-free glass tile was obtained (see Figure 22).

### Example 20: (Composition name 'C30 TiZr PC evap 3.5h')

In this Example, the sol-gel photocurable formulation used in Example 8 ('C30 TiZr PC') was used - Composition 7 - but the solution was heated in accordance with the procedure described above for 3.5 hours. The solvent evaporation resulted in a mass loss of 25wt%.

| **C30 TiZr PC** | **m [g]** | **wt%** |
|---|---|---|
| MTES | 0.178 | 1.96 |
| TEOS | 2.951 | 32.48 |
| TMSPM | 0.704 | 7.75 |
| PC | 2.832 | 31.17 |
| H2O | 0.614 | 6.75 |
| ZrB n-butanol | 0.864 | 9.50 |
| TilP | 0.512 | 5.63 |
| AcOH | 0.432 | 4.76 |
| Total | 9.0865 | 100.00 |

The samples were fabricated according to the procedure reported in Example 15 and printed according to the process described above, using a 410 µm diameter nozzle. Relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 TiZr PC evap 3.5h | C19 | 1.554 | 95.99 | 2.538 | 40.743 | 41.285 |

| | | | | | | |
|---|---|---|---|---|---|---|
| *Sample measuring file | | | | | | |

After thermal treatment at 1,000°C, a crack-free printed glass scaffold was obtained (see Figure 23).

### Example 21: (Composition name 'C30TiZr PC evap 3.5h 7 days')

In this Example, the sol-gel photocurable formulation used in Example 8 (`C30 TiZr PC') was used - Composition 7 - but the samples were aged for 7 days.

| **C30 TiZr PC** | **m [g]** | **wt%** |
|---|---|---|
| MTES | 0.178 | 1.96 |
| TEOS | 2.951 | 32.48 |
| TMSPM | 0.704 | 7.75 |
| PC | 2.832 | 31.17 |
| H2O | 0.614 | 6.75 |
| ZrB n-butanol | 0.864 | 9.50 |
| TilP | 0.512 | 5.63 |
| AcOH | 0.432 | 4.76 |
| Total | 9.0865 | 100.00 |

The samples were fabricated according to the procedure reported in Example 1, and relevant parameters of the resultant solid glass body are shown in the table below.

| **Formulation** | **Sample code*** | **Density [g/cm³]** |
|---|---|---|
| C30TiZr PC evap 3.5h 7 days | C23 | 2.537 |

| | | |
|---|---|---|
| *Sample measuring file | | |

After thermal treatment at 1,000°C, a crack-free glass tile was obtained (see Figure 24).

### Example 22: (Composition name 'C30TiZr POE evap')

In this Example, a similar sol-gel photocurable formulation was used as in Example 8 ('C30 TiZr PC'), except that POE was used in place of PC. This formulation has Composition 15:

| **C30 TiZr POE** | **m [g]** | **wt%** |
|---|---|---|
| MTES | 0.178 | 1.96 |
| TEOS | 2.951 | 32.48 |
| TMSPM | 0.704 | 7.75 |
| POE | 2.832 | 31.17 |
| H2O | 0.614 | 6.75 |
| ZrB n-butanol | 0.864 | 9.50 |
| TilP | 0.512 | 5.63 |
| AcOH | 0.432 | 4.76 |
| Total | 9.0865 | 100.00 |

The solution was evaporated for 6 hours. The solvent evaporation resulted in a mass loss of 30wt%.

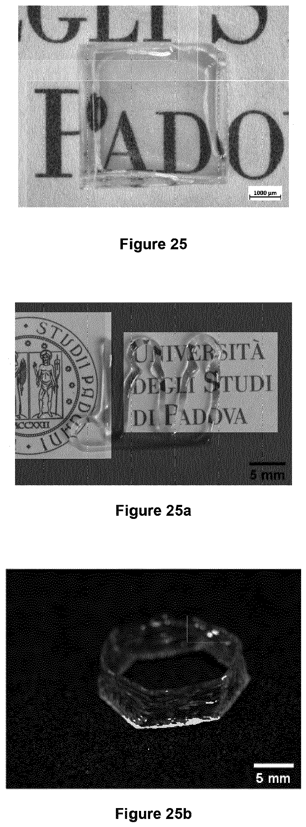

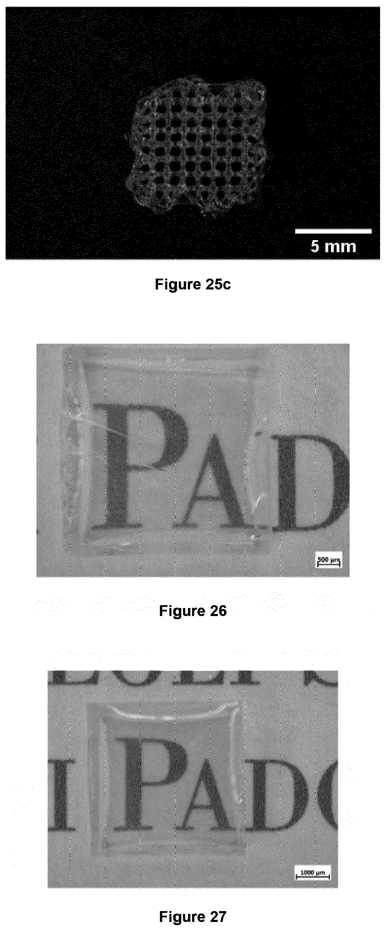

The samples were fabricated according to the procedure reported in Example 1. After thermal treatment at 1,000°C, a crack-free glass tile and sample was obtained (see Figure 25).

Complex three-dimensional structures were also printed by UV-DIW using 410 and 250 µm diameter nozzles according to the procedure described in Example 15. After thermal treatment at 1,000°C, the sample of Figure 25a, the vase of Figure 25b and scaffold of Figure 25c were obtained.

Relevant parameters of the resultant solid glass bodies are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 TiZr POE evap | C17 | 1.553 | 95.10 | 2.547 | 41.675 | 41.983 |

| | | | | | | |
|---|---|---|---|---|---|---|
| *Sample measuring file | | | | | | |

### Example 23: (Composition name 'C30 Ti PC evap 3.5h')

In this Example, the sol-gel photocurable formulation used in Example 7 ('C30 Ti PC) was used - Composition 6 - but the solution was heated in accordance with the procedure described above for 3.5 hours.

| **C30 Ti PC** | **m [g]** | **wt%** |
|---|---|---|
| MTES | 0.178 | 2.04 |
| TEOS | 2.951 | 33.78 |
| TMSPM | 0.704 | 8.06 |
| PC | 2.832 | 32.42 |
| H2O | 0.614 | 7.03 |
| TilP | 1.024 | 11.72 |
| AcOH | 0.432 | 4.95 |
| Total | 8.735 | 100.00 |

The samples were fabricated according to the procedure reported in Example 1, and relevant parameters of the resultant solid glass body are shown in the table below.

| **Formulation** | **Sample code*** | **Refractive index** | **Transmittance at 405nm [%]** | **Density [g/cm³]** | **Abbe number** | |
|---|---|---|---|---|---|---|
| | | | | | **Ve** | **Vd** |
| C30 Ti PC evap 3.5h | C18 | 1.572 | 76.11 | 2.420 | 31.317 | 31.470 |

| | | | | | | |
|---|---|---|---|---|---|---|
| *Sample measuring file | | | | | | |

After thermal treatment at 1,000°C, a crack-free glass tile was obtained (see Figure 26).

### Example 24: (Composition name 'C30 Ti PC evap 3.5h 7 days aging)

In this Example, the sol-gel photocurable formulation used in Example 7 ('C30 Ti PC) was used - Composition 6 - but the samples were aged for 7 days after shaping.

| **C30 Ti PC 7d** | **m [g]** | **wt%** |
|---|---|---|
| MTES | 0.178 | 2.04 |
| TEOS | 2.951 | 33.78 |
| TMSPM | 0.704 | 8.06 |
| PC | 2.832 | 32.42 |
| H2O | 0.614 | 7.03 |
| TilP | 1.024 | 11.72 |
| AcOH | 0.432 | 4.95 |
| Total | 8.735 | 100.00 |

The samples were fabricated according to the procedure reported in Example 1, and relevant parameters of the resultant solid glass body are shown in the table below.

| **Formulation** | **Sample code*** | **Density [g/cm³]** |
|---|---|---|
| C30 Ti PC evap 3.5h 7 days | C22 | 2.420 |

| | | |
|---|---|---|
| *Sample measuring file | | |

After thermal treatment at 1,000°C, a crack-free glass tile was obtained (see Figure 27).

### Example 25: (Composition name 'C30 POE evap 3.5h')

In this Example, the sol-gel photocurable formulation used in Example 2 (`C30 POE') was used - Composition 2 - but the solution was evaporated for 3.5 hours. The solvent evaporation resulted in a mass loss of 25wt%.

| **C30 POE** | **m [g]** | **wt%** |
|---|---|---|
| MTES | 0.178 | 1.89 |
| TEOS | 2.951 | 31.27 |
| TMSPM | 0.704 | 7.46 |
| POE | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were printed using tip nozzles of 250 and 410 µm according to the procedure described in Example 15.

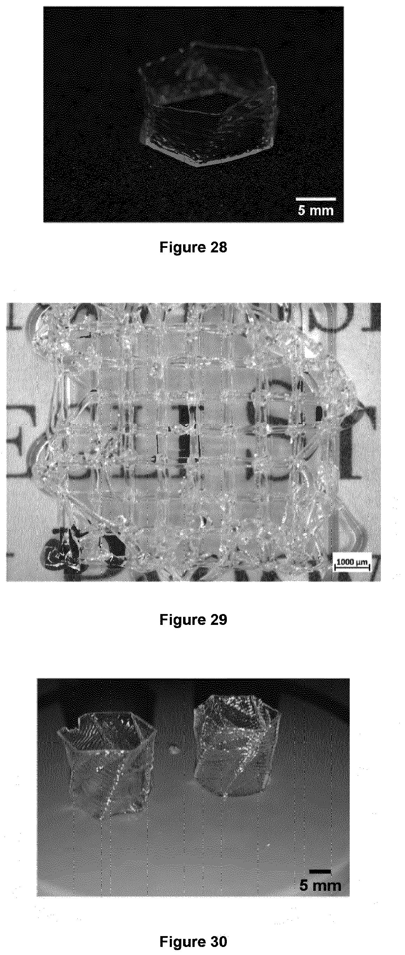

After thermal treatment at 1,000°C, a crack-free glass vase was obtained (see Figure 28).

### Example 26: (Composition name 'C20 PC evap 4h')

In this Example, the sol-gel photocurable formulation used in Example 5 (`C20 PC') was used - Composition 4 - but an evaporation process begun 1 hour after the synthesis and the solution was then evaporated for 4 hours. The solvent evaporation resulted in a mass loss of 23wt%.

| **C20 PC** | **m [g]** | **wt%** |
|---|---|---|
| MTES | 0.178 | 2.16 |
| TEOS | 2.951 | 35.74 |
| TMSPM | 0.704 | 8.53 |
| POE | 1.652 | 20.00 |
| H2O | 0.614 | 7.43 |
| ZrB n-butanol | 1.727 | 20.91 |
| AcOH | 0.432 | 5.23 |
| Total | 8.258 | 100.00 |

The samples were printed using a tip nozzle of 410 µm according to the procedure described in Example 15.

After thermal treatment at 1,000°C, a crack-free printed glass scaffold was obtained (see Figure 29).

### Example 27: (Composition name 'C30 PC evap 3h')

In this Example, the sol-gel photocurable formulation used in Example 1 ('C30 PC') was used - Composition 1 - but the solution was evaporated for 3 hours. The solvent evaporation resulted in a mass loss of 13wt%.

| **C30 PC** | **m [g]** | **wt%** |
|---|---|---|
| MTES | 0.178 | 1.89 |
| TEOS | 2.951 | 31.27 |
| TMSPM | 0.704 | 7.46 |
| PC | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were printed using tip nozzles of 250 and 410 µm according to the procedure described in Example 15.

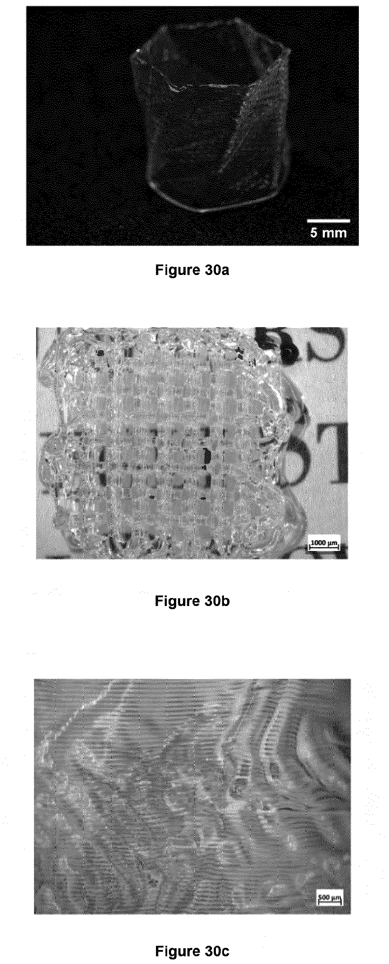

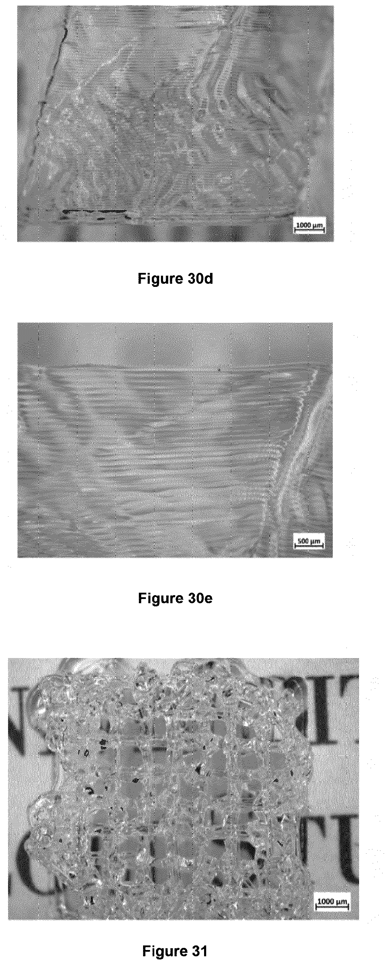

After thermal treatment at 1,000°C, crack-free printed glass structures were obtained, see Figure 30 (vases), Figure 30a (vase), Figure 30b (scaffold), Figure 30c, Figure 30d and Figure 30e.

### Example 28: (Composition name 'C30 PC evap 4h')

In this Example, the sol-gel photocurable formulation used in Example 27 ('C30 PC evap 3h') was used - Composition 1 - but the evaporation process started 1 hour after the end of the synthesis, and the solution was then evaporated for 4 hours. The solvent evaporation resulted in a mass loss of 19wt%.

| **C30 PC** | **m [g]** | **wt%** |
|---|---|---|
| MTES | 0.178 | 1.89 |
| TEOS | 2.951 | 31.27 |
| TMSPM | 0.704 | 7.46 |
| PC | 2.832 | 30.00 |
| H2O | 0.614 | 6.50 |
| ZrB n-butanol | 1.727 | 18.30 |
| AcOH | 0.432 | 4.58 |
| Total | 9.438 | 100.00 |

The samples were printed using a tip nozzle of 410 µm according to the procedure described in Example 15.

After thermal treatment at 1,000°C, a crack-free printed glass scaffold was obtained (see Figure 31).

### Example 29: (Composition name 'AA1T20 POE AcOH3')

In this Example, a similar sol-gel photocurable formulation was used as in Example 13 ('AA1T20mod'), except that the molar ratio [AcOH] : [Zr] was set at 3. This formulation has Composition 16:

| **AA1T20 POE AcOH3** | **m [g]** | **wt%** |
|---|---|---|
| MTES | 0.178 | 2.09 |
| TEOS | 3.220 | 37.91 |
| TMSPM | 0.192 | 2.26 |
| POE | 1.652 | 19.45 |
| H2O | 0.605 | 7.12 |
| ZrB n-butanol | 1.727 | 20.33 |
| AcOH | 0.648 | 7.63 |
| AA | 0.273 | 3.21 |
| Total | 8.495 | 100.00 |

The samples were fabricated according to the procedure described in Example 1 and 13.

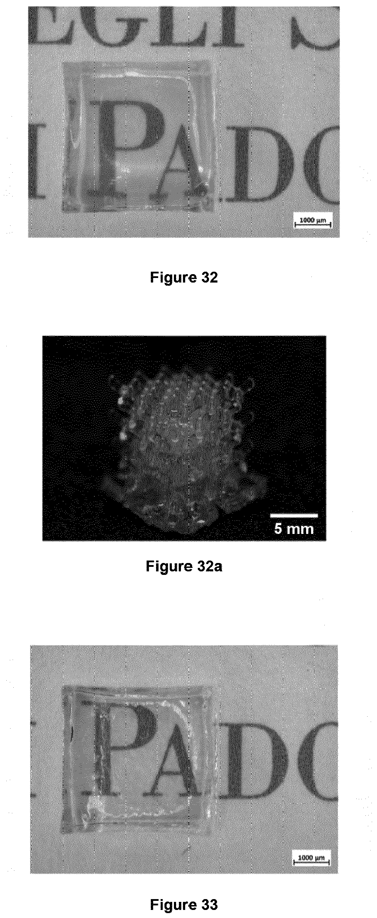

After thermal treatment at 1,000°C, a crack-free glass tile was obtained (see Figure 32), and a crack-free glass sample (see Figure 32a)

### Example 30: (Composition name 'AA1T37')

In this Example, a similar sol-gel photocurable formulation was used as in Example 13 ('AA1T20 POE'), except that the molar ratio ([TEOS]+[TMSPM]) : [MTES] was set at 16.3, the molar ratio [TEOS] : [TMSPM] was set at 37.4, and the molar ratio [Si] : [Zr] was set at 4.8. acid was introduced in the formulation in a 1.15:1 molar ratio to zirconium, whilst the molar ratio of acetic acid to zirconium was set at 1.10, thereby resulting in a molar ration ([AA]+[AcOH]) : [Zr] of 2.25. This formulation has Composition 17:

| **AA1T37** | **m [g]** | **wt%** |
|---|---|---|
| MTES | 0.178 | 2.20 |
| TEOS | 3.297 | 40.69 |
| TMSPM | 0.105 | 1.30 |
| POE | 1.652 | 20.39 |
| H2O | 0.609 | 7.51 |
| ZrB n-butanol | 1.727 | 21.31 |
| AcOH | 0.237 | 2.92 |
| AA | 0.298 | 3.68 |
| Total | *8.103* | 100.00 |

The samples were fabricated according to the procedures reported in Example 1.

After thermal treatment at 1,000°C, a crack-free glass tile was obtained (see Figure 33).

### Example 31: (Composition name 'C30 PC 7 days aging')

In this Example, the sol-gel photocurable formulation used in Example 1 ('C30 PC') was used - Composition 1 - but the samples were aged at ambient temperature for 7 days (instead of 14 days) after shaping.

The samples were fabricated according to the procedure described in Example 1 and relevant parameters of the resultant solid glass body are shown in the table below.

| **Formulation** | **Sample code*** | **Density [g/cm³]** |
|---|---|---|
| C30 PC 7d | C3 | 2.677 |

| | | |
|---|---|---|
| *Sample measuring file | | |

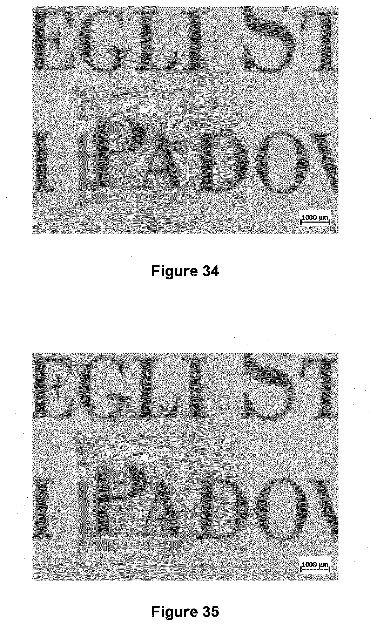

After thermal treatment at 1,000°C, a crack-free glass tile was obtained (see Figure 34).

### Example 32: (Composition name 'C30 POE 7 days aging')

In this Example, the sol-gel photocurable formulation used in Example 2 (`C30 POE') was used - Composition 2 - but the samples were aged at ambient temperature for 7 days (instead of 14 days) after shaping.

The samples were fabricated according to the procedure described in Example 1, and relevant parameters of the resultant solid glass body are shown in the table below.

| **Formulation** | **Sample code*** | **Density [g/cm³]** |
|---|---|---|
| C30 POE 7d | C5 | 2.693 |

| | | |
|---|---|---|
| *Sample measuring file | | |

After thermal treatment at 1,000°C, a crack-free glass tile was obtained (see Figure 35).

### Example 33

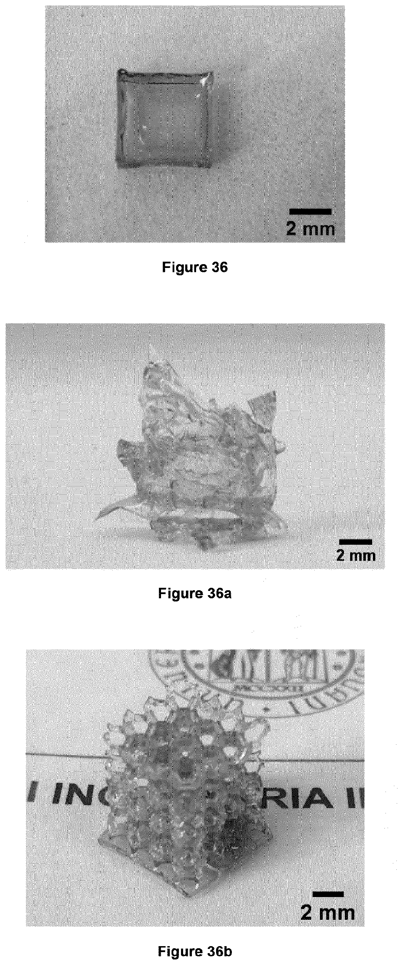

In this example, a sol-gel photocurable formulation was used comprising SiOz and ZrOz glass along with 0.2wt% CoO. After thermal treatment at 1,000°C, a crack-free glass tile obtained, where the tile was obtained by casting and photocuring (see Figure 36). The objects of Figures 36a and 36b were instead obtained by 3D printing (DLP).

### Example 34

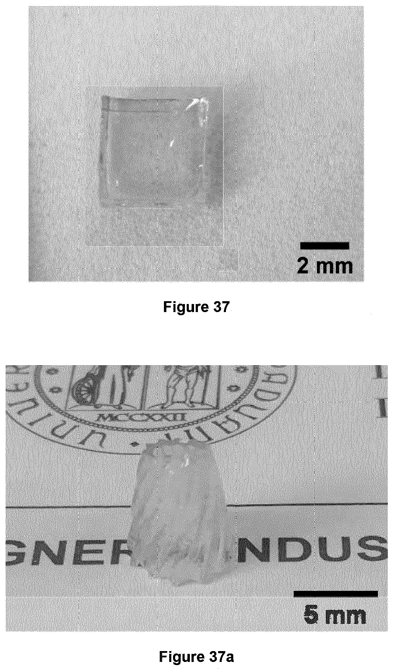

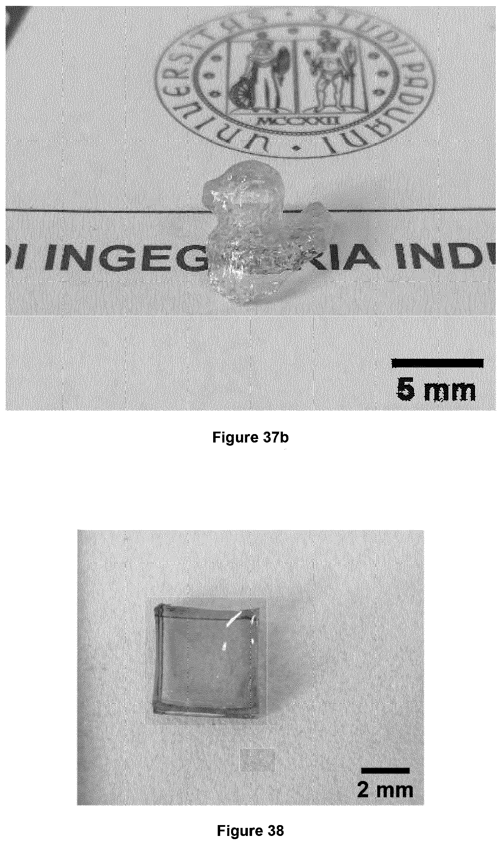

In this example, a sol-gel photocurable formulation was used comprising SiOz and ZrOz glass along with 0.25wt% CuO. After thermal treatment at 1,000°C, a crack-free glass tile obtained, where the tile was obtained by casting and photocuring (see Figure 37). The objects of Figures 37a and 37b were instead obtained by 3D printing (DLP).

### Example 35

In this example, a sol-gel photocurable formulation was used comprising SiOz and ZrOz glass along with 0.50wt% CuO. After thermal treatment at 1,000°C, a crack-free glass tile obtained where the tile was obtained by casting and photocuring (see Figure 38).

Although specific embodiments have been described, it would be apparent to the skilled person that modifications and variations are possible without departing from the spirit and scope of the invention, which is defined by the appended claims. As such, the appended claims intend to cover any such variations. Further, it would be apparent to the skilled person that many features described in relation to particular embodiments are combinable and envisaged for combination with features described in relation to other embodiments.

### Clauses

1. A photocurable sol-gel composition for the production of transparent and crack-free glass bodies, wherein the composition comprises a silicon sol-gel precursor, a photopolymerisable monomer, a transition metal precursor, organic solvent and water.
2. The composition of Clause 1, wherein the photopolymerisable monomer comprises silicon.
3. The composition of Clause 1 or Clause 2, wherein the silicon sol-gel precursor and/ or the photopolymerisable monomer comprises a silicon alkoxide.
4. The composition of any of Clauses 1 to 3, wherein the silicon sol-gel precursor comprises or consists of triethoxymethylsilane (MTES) and/ or tetraethyl orthosilicate (TEOS).
5. The composition of any of Clauses 1 to 4, wherein the photopolymerisable monomer comprises or consists of 3-(Trimethoxysilyl)propyl Methacrylate (TMSPM).
6. The composition of any of Clauses 1 to 5, wherein the silicon sol-gel precursor and the photopolymerisable monomer comprise or consist of TMSPM.
7. The composition of any of Clauses 1 to 6, wherein the silicon sol-gel precursor comprises or consists of a mixture of MTES and TEOS, and the photopolymerisable monomer comprises or consists of TMSPM.
8. The composition of any of Clauses 1 to 7, wherein the silicon sol-gel precursor comprises or consists of MTES at a concentration of between about 1 and 5 wt% and TEOS at a concentration of between about 25 and 45 wt%, and wherein the photopolymerisable monomer comprises or consists of TMSPM at a concentration between about 0.5 and 15 wt% of the composition.
9. The composition of any of Clauses 1 to 8, wherein the silicon sol-gel precursor comprises MTES, and wherein MTES is at a concentration of between about 1.2 and 4.8 wt%, between about 1.4 and 4.6 wt%, between about 1.6 and 4.4 wt% or between about 1.8 and 4.2 wt%; or wherein MTES is at a concentration between about 1.85 and 4.0 wt%, or between about 1.83 and 3.84 wt% of the composition.
10. The composition of any of Clauses 1 to 9, wherein the silicon sol-gel precursor comprises MTES, and wherein MTES is at a concentration of about 1.9 wt%, about 2.1 wt%, about 2.3 wt%, about 2.5 wt%, about 2.7 wt%, about 2.9 wt%, about 3.1 wt%, about 3.3 wt%, about 3.5 wt%, about 3.7 wt%, or about 3.9 wt% of the composition.
11. The composition of any of Clauses 1 to 10, wherein the silicon sol-gel precursor comprises TEOS, and wherein TEOS is at a concentration of between about 26 and 46 wt%, between about 26 and 45 wt%, between about 27 and 44 wt% or between about 28 and 43 wt%; or wherein MTES is at a concentration between about 29 and 42 wt%, between about 30 and wt% of the composition, or between about 30.13 and 40.69 wt% of the composition.
12. The composition of any of Clauses 1 to 11, wherein the silicon sol-gel precursor comprises TEOS, and wherein TEOS is at a concentration of about 30 wt%, about 31 wt%, about 32 wt%, about 33 wt%, about 34 wt%, about 35 wt%, about 36 wt%, about 37 wt%, about 38 wt%, about 39 wt%, about 40 wt%, or about 41 wt% of the composition.
13. The composition of any of Clauses 1 to 12, wherein the photopolymerisable monomer comprises TMSPM, and wherein TMSPM is at a concentration of between about 0.6 and 14 wt%, between about 0.8 and 13 wt%, between about 1.0 and 12 wt% or between about 1.2 and 10 wt%; or wherein TMSPM is at a concentration between about 1.25 and 9.5 wt%, or between about 1.30 and 9.32 wt% of the composition.
14. The composition of any of Clauses 1 to 13, wherein the photopolymerisable monomer comprises TMSPM, and wherein TMSPM is at a concentration of about 1.3 wt%, about 2.3 wt%, about 3.3 wt%, about 4.3 wt%, about 5.3 wt%, about 6.3 wt%, about 7.3 wt%, about 8.3 wt%, or about 9.3 wt%.
15. The composition of any of Clauses 1 to 14, wherein the photopolymerisable monomer comprises TMSPM, and wherein TMSPM is at a concentration of between about 1.5 and 9.5 wt%, between about 2.0 and 9.0 wt%, between about 2.5 and 8.5 wt% between about 3.0 and 8.0 wt%; between about 3.5 and 7.5 wt%, or between about 4.0 and 7.0 wt% of the composition.
16. The composition of any of Clauses 1 to 15, wherein the silicon sol-gel precursor comprises or consists of a mixture of MTES and TEOS and the photopolymerisable monomer comprises or consists of TMSPM, and wherein the molar ratio of TEOS to TMSPM (TEOS:TMSPM) is between about 12:1 and about 2:1, between about 10:1 and about 3:1, or between about 8:1 and about 4:1.
17. The composition of any of Clauses 1 to 16, wherein the silicon sol-gel precursor comprises or consists of a mixture of MTES and TEOS and the photopolymerisable monomer comprises or consists of TMSPM, and wherein the molar ratio of TEOS to TMSPM (TEOS:TMSPM) is about 10:1, about 7.5:1 about 5:1 or about 3:1; particularly about 5:1.
18. The composition of any of Clauses 1 to 17, wherein the silicon sol-gel precursor comprises or consists of a mixture of MTES and TEOS and the photopolymerisable monomer comprises or consists of TMSPM, and wherein the molar ratio of TEOS and TMSPM to MTES (([TEOS]+[TMSPM]):[MTES]) is between about 40:1 and about 5:1, between about 35:1 and about 10:1 or between about 30:1 and about 12:1.
19. The composition of any of Clauses 1 to 18, wherein the silicon sol-gel precursor comprises or consists of a mixture of MTES and TEOS and the photopolymerisable monomer comprises or consists of TMSPM, and wherein the molar ratio of TEOS and TMSPM to MTES (([TEOS]+[TMSPM]):[MTES]) is about 30:1, about 25:1, about 20:1, about 17:1 or about 15:1; particularly about 17:1.
20. The composition of any of Clauses 1 to 19, wherein the organic solvent has a boiling point of at least 100°C, at least 120°C, at least 140°C, at least 160°C, at least 180°C, at least 200°C, at least 220°C, or at least 240°C.
21. The composition of any of Clauses 1 to 20, wherein the organic solvent has a boiling point between about 180°C and about 280°C; between about 200°C and about 270°C, between about 220°C and about 260°C, or between about 240°C and about 250°C.
22. The composition of any of Clauses 1 to 21, wherein the organic solvent is selected from one or more of alcohol, one or more glycol ether, one or more ester, or a combination thereof.
23. The composition of any of Clauses 1 to 22, wherein the organic solvent is selected from one or more of n-butyl alcohol (118), benzyl alcohol (205), and phenoxyethanol (247); one or more of methyl glycol (124), ethyl glycol (197), n-propyl glycol (188), n-butyl glycol (171), diacetone alcohol (166), methoxy butanol (161), and tripropylene glycol monomethyl ether (243); one or more of n-Propyl acetate (102), butyl acetate (126), ethoxypropyl acetate (182) and propylene carbonate (242); or a mixture thereof.
24. The composition of Clause 1 to 23, wherein the organic solvent comprises at least one of propylene carbonate (PC), phenoxyethanol (POE), tripropylene glycol monomethyl ether (TPM), preferably, wherein the organic solvent comprises a mixture of two or three of propylene carbonate (PC), phenoxyethanol (POE) and tripropylene glycol monomethyl ether (TPM).
25. The composition of any of Clauses 1 to 24, wherein the organic solvent comprises or consists of a mixture of two or three of PC, POE and TPM.
26. The composition of any of Clauses 1 to 25, wherein the organic solvent comprises between about 12 and 40 wt% of the composition; between about 14 and about 38 wt% of the composition, between about 16 and about 36 wt% of the composition, between about 18 and about 34 wt% of the composition, between about 20 and about 32 wt% of the composition, or between about 22 and about 30 wt% of the composition.
27. The composition of any of Clauses 1 to 26, wherein the organic solvent comprises between about 19 and about 33 wt% of the composition, between 19.4 and 32.5 wt%, or between 19.45 and 32.42 wt% of the composition.
28. The composition of any of Clauses 1 to 27, wherein the organic solvent comprises between about 20 wt%, about 21 wt%, about 22 wt%, about 23 wt%, about 24 wt%, about 25 wt%, about 26 wt%, about 27 wt%, about 28 wt%, about 29 wt%, about 30 wt%, about 31 wt% or about 32 wt% of the composition,
29. The composition of any of Clauses 1 to 28, wherein water is present at a concentration between about 4 and 15 wt%, between about 5 and 14 wt%, between about 6 and 12 wt%, or between about 6.47 and 9.45 wt% of the composition.
30. The composition of any of Clauses 1 to 29, wherein water is present at a concentration of about 6 wt%, about 6.5 wt%, about 7 wt%, about 7.5 wt%, about 8 wt%, about 8.5 wt%, about 9 wt%, or about 9.5 wt% of the composition.
31. The composition of any of Clauses 1 to 30, wherein water is present at a concentration suitable to hydrolyse between about 35% and about 65%, between about 40% and about 60%, between about 45% and about 55% of the hydrolysable groups of the silicon sol-gel precursors.
32. The composition of any of Clauses 1 to 31, wherein water is present at a concentration suitable to hydrolyse about 60%, about 55%, about 50%, about 45% or about 40% of the hydrolysable groups of the silicon sol-gel precursors; particularly about 50%.
33. The composition of any of Clauses 1 to 32, wherein the transition metal precursor is a transition metal alkoxide.
34. The composition of any of Clauses 1 to 33, wherein the transition metal precursor comprises a source of at least one of zirconium (Zr) and titanium (Ti).
35. The composition of any of Clauses 1 to 34, wherein the transition metal precursor is selected from at least one of zirconium n-butoxide (ZrB) and titanium isopropoxide (TiIP).
36. The composition of any of Clauses 1 to 35, wherein the transition metal precursor comprises or consists of zirconium n-butoxide (ZrB), and wherein the ZrB is present at a concentration between about 10 and 30 wt%, between about 12 and 28 wt%, between about 14 and 26 wt%, between about 16 and about 24 wt%, between about 17 and 22 wt% of the composition.
37. The composition of any of Clauses 1 to 36, wherein the transition metal precursor comprises or consists of zirconium n-butoxide (ZrB), and wherein the ZrB is present at a concentration between about 17.72 and 21.62 wt%, between about 18 and 21.5 wt% or between about 19 and 21 wt% of the composition.
38. The composition of any of Clauses 1 to 37, wherein the transition metal precursor comprises or consists of zirconium n-butoxide (ZrB), and wherein the ZrB is present at a concentration of about 18 wt%, about 18.5 wt%, about 19 wt%, about 19.5 wt%, about 20 wt%, about 20.5 wt%, about 21 wt% or about 21.5 wt% of the composition.
39. The composition of any of Clauses 1 to 38, wherein the transition metal precursor comprises or consists of titanium isopropoxide (TiIP), and wherein the TilP is present at a concentration between about 5 and 20 wt%, between about 6 and 19 wt%, between about 7 and 18 wt%, between about 8 and about 17 wt%, or between about 9 and 16 wt% of the composition.
40. The composition of any of Clauses 1 to 39, wherein the transition metal precursor comprises or consists of titanium isopropoxide (TiIP), and wherein the TilP is present at a concentration between about 10 and 15 wt%, between about 11 and 14 wt% or between about 11.72 and 13.55 wt% of the composition.
41. The composition of any of Clauses 1 to 40, wherein the transition metal precursor comprises or consists of titanium isopropoxide (TiIP), and wherein the TilP is present at a concentration of about 11.5wt%, about 12 wt%, about 12.5 wt%, about 13wt%, or about 13.5 wt% of the composition.
42. The composition of any of Clauses 1 to 41, wherein the transition metal precursor comprises or consists of a mixture of a source of zirconium (Zr) and a source of titanium (Ti), and wherein the molar ratio of silicon to zirconium and titanium [Si:(Zr+Ti)] is between about 12:1 and about 2:1, between about 10:1 and about 3:1, or between about 8:1 and about 4:1.
43. The composition of any of Clauses 1 to 42, wherein the transition metal precursor comprises or consists of a mixture of a source of zirconium (Zr) and a source of titanium (Ti), and wherein the molar ratio of silicon to zirconium and titanium [Si:(Zr+Ti)] is about 10:1, about 8:1, about 6:1, about 5:1, about 4:1 or about 3:1; particularly about 5:1.
44. The composition of any of Clauses 1 to 43, wherein the transition metal precursor comprises or consists of a mixture ZrB and TiIP, and preferably wherein the total amount of ZrB and TilP is present at a concentration between about 10 and 21 wt%, between about 13 and 18 wt%, between about 14 and 17 wt%, between about 14.5 and about 16.5 wt%, or between 15 and 16 wt% of the composition.
45. The composition of any of Clauses 1 to 44, wherein the transition metal precursor comprises or consists of a mixture ZrB and TiIP, and preferably wherein the total amount of ZrB and TilP is present at a concentration between about 11.5 and 20.5 wt%, between about 13.5 and 18.5 wt% or between about 15.5 and 16.5 wt% of the composition.
46. The composition of any of Clauses 1 to 45, wherein the transition metal precursor comprises or consists of a mixture ZrB and TiIP, and preferably wherein the total amount of ZrB and TilP is present at a concentration of about 14.5 wt%, about 15 wt%, about 15.63 wt%, about 16 wt%, or about 16.5 wt% of the composition.
47. The composition of any of Clauses 1 to 46, wherein the composition is suitable for producing transparent and crack-free glass bodies with refractive indices of more than about 1.535, more than about 1.540, more than about 1.545, more than about 1.550 or even more than 1.555.
48. The composition of any of Clauses 1 to 47, wherein the composition further comprises a chelating agent.
49. The composition of any of Clauses 1 to 48, wherein the composition comprises a chelating agent, and wherein the chelating agent is carboxylic acid, preferably selected from at least one of acetic acid and acrylic acid.
50. The composition of any of Clauses 1 to 49, wherein the composition comprises a chelating agent, and wherein the chelating agent comprises or consists of acetic acid, and wherein acetic acid is present at a concentration between about 1 and 10 wt%, between about 1.25 and 9.5 wt%, between about 1.5 and 9 wt%, between about 1.75 and 8.5 wt%, between about 2.0 and 8 wt%, or between about 2.25 and 7.75 wt% of the composition.
51. The composition of any of Clauses 1 to 50, wherein the composition comprises a chelating agent, and wherein the chelating agent comprises or consists of acetic acid, and wherein acetic acid is present at a concentration between about 2.37 and 7.63 wt%, between about 2.5 and 7.5 wt%, between about 3 and 7 wt%, between about 3.5 and 6.5 wt% between about 4 and 6 wt% of the composition.
52. The composition of any of Clauses 1 to 51, wherein the composition comprises a chelating agent, and wherein the chelating agent comprises or consists of acetic acid, and wherein acetic acid is present at a concentration of about 2.5 wt%, about 3 wt%, about 3.5 wt%, about 4 wt%, about 4.5 wt%, about 5 wt%, about 5.5 wt%, about 6 wt%, about 6.5 wt%, about 7 wt% or about 7.5 wt% of the composition.
53. The composition of any of Clauses 1 to 52, wherein the composition comprises a chelating agent, and wherein the chelating agent comprises or consists of acrylic acid, and wherein acrylic acid is present at a concentration between about 0.5 and 8 wt%, between about 0.75 and 7 wt%, between about 1 and 6 wt%, between about 1.25 and 5 wt%, or between about 1.5 and 4 wt% of the composition.
54. The composition of any of Clauses 1 to 53, wherein the composition comprises a chelating agent, and wherein the chelating agent comprises or consists of acrylic acid, and wherein acrylic acid is present at a concentration between about 1.64 and 3.68 wt%, between about 1.8 and 3.5 wt%, between about 2.0 and 3.2 wt%, between about 2.2 and 3 wt%, between about 2.4 and 2.8 wt% of the composition.
55. The composition of any of Clauses 1 to 54, wherein the composition comprises a chelating agent, and wherein the chelating agent comprises or consists of acrylic acid, and wherein acrylic acid is present at a concentration of about 1.5 wt%, about 1.75 wt%, about 2 wt%, about 2.25 wt%, about 2.5 wt%, about 2.75 wt%, about 3 wt%, about 3.25 wt%, about 3.5 wt%, or about 3.75 wt% of the composition.
56. The composition of any of Clauses 1 to 55, wherein the composition comprises a chelating agent, and wherein the ratio of the chelating agent to transition metal precursor(s) (ligand) is between about 3:1 and 1:1, between about 2:75:1 and 1.25:1, between about 2.5:1 and 1.5:1, or between about 2.25:1 and 1:75:1.
57. The composition of any of Clauses 1 to 56, wherein the composition comprises a chelating agent, and wherein the ratio of the chelating agent to transition metal precursor(s) (ligand) is about 2.4:1, about 2.2:1, about 2:1, about 1.8:1 or about 1.6:1; particularly about 2:1.
58. The composition of any of Clauses 1 to 57, wherein the composition further comprises nitric acid.
59. The composition of any of Clauses 1 to 58, wherein the composition further comprises a photoinitiator.
60. The composition of Clause 59, wherein the photoinitiator is diphenyl(2,4,6-trimethylbenzoyl) phosphine oxide (TPO).
61. The composition of Clause 59 or Clause 60, wherein the photoinitiator is present at a concentration of between about 1 wt% and 12 wt%, between about 2 wt% and 10 wt%, between about 3 wt% and 8 wt%, or between about 4 wt% and 6 wt% relative to the weight of photopolymerisable compounds.
62. The composition of any of Clauses 59 to 61, wherein the photoinitiator is present at a concentration of about 3 wt%, about 4 wt%, about 5 wt%, about 6 wt%, about 7 wt% or about 8 wt%; particularly about 5 wt% relative to the weight of photopolymerisable compounds.
63. The composition of any of Clauses 1 to 62, wherein the composition further comprises a photoabsorber.
64. The composition of Clause 63, wherein the photoabsorber is 2-[(E)-(2-methoxyphenyl) diazenyl]naphthalen-2-ol.
65. The composition of Clause 64, wherein the photoabsorber is present at a concentration of between about 0.01 wt% and 0.1 wt%, between about 0.015 wt% and about 0.075 wt%, between about 0.0175 wt% and about 0.05 wt%, or between about 0.02 wt% and about 0.03 wt% of the composition.
66. The composition of Clause 64 or Clause 65, wherein the photoabsorber is present at a concentration of about 0.015 wt%, about 0.0175 wt%, about 0.02 wt%, about 0.0225 wt%, about 0.025 wt% or about 0.0275 wt%; particularly about 0.0225 wt% of the composition.
67. The composition of any of Clauses 1 to 66, wherein the composition further comprises a colouring agent or dye such as a transition metal acetate.
68. The composition of Clause 67, wherein the colouring agent or dye is present at a concentration of between about 0.01 and 2.5 wt%, between about 0.02 and 2.0 wt%, between about 0.03 and 1.7 wt%, between about 0.04 and 1.6 wt%, or between about 0.05 and 1.5 wt% of the composition.
69. A method of making a photocurable sol-gel composition for the production of transparent and crack-free glass bodies, wherein the composition comprises a silicon sol-gel precursor, a photopolymerisable monomer, an organic solvent and water, the method comprising
   preparing a first solution by mixing a silicon sol-gel precursor and a photopolymerisable monomer with a solvent,
   adding water to the first solution,
   subjecting the first solution to a first mixing
   preparing a second solution comprising a transition metal precursor, and
   mixing the first and second solutions to form a third solution.
70. The method of Clause 69, wherein the step of preparing a second solution comprises mixing the transition metal precursor with a chelating agent.
71. The method of Clause 69 or Clause 70, comprising adding nitric acid to the first solution, preferably wherein nitric acid is added to the first solution after the first mixing; optionally further comprising subjecting the mixture of nitric acid and the first solution to a second mixing.
72. The method of Clause 71, wherein nitric acid is added in an amount sufficient to bring the pH of the first solution to less than 3, less than 2 or to about 1.
73. The method of any of Clauses 68 to 72, wherein the method further comprises a step of adding a photoinitiator to the third solution.
74. The method of Clause 73, wherein the photoinitiator is diphenyl(2,4,6-trimethylbenzoyl) phosphine oxide (TPO).
75. The method of Clause 73 or Clause 74, wherein the photoinitiator is added to provide a concentration in the third solution of between about 1 wt% and 12 wt%, between about 2 wt% and about 10 wt%, between about 3 wt% and about 8 wt%, or between about 4 wt% and about 6 wt% relative to the weight of photopolymerisable compounds.
76. The method of any of Clauses 73 to 75, wherein the photoinitiator is added to provide a concentration in the third solution of about 3 wt%, about 4 wt%, about 5 wt%, about 6 wt%, about 7 wt% or about 8 wt%; particularly about 5 wt% relative to the weight of photopolymerisable compounds.
77. The method any of Clauses 68 to 76, wherein the method further comprises a step of adding a photoabsorber to the third solution.
78. The method of Clause 77, wherein the photoabsorber is 2-[(E)-(2-methoxyphenyl) diazenyl]naphthalen-2-ol.
79. The method of Clause 77 or Clause 78, wherein the photoabsorber is added to provide a concentration in the third solution of between about 0.01 wt% and 0.1 wt%, between about 0.015 wt% and about 0.075 wt%, between about 0.0175 wt% and about 0.05 wt%, or between about 0.02 wt% and about 0.03 wt% relative to the weight of the third solution.
80. The method of any of Clauses 77 to 79, wherein the photoabsorber is added to provide a concentration in the third solution of about 0.015 wt%, about 0.0175 wt%, about 0.02 wt%, about 0.0225 wt%, about 0.025 wt% or about 0.0275 wt%; particularly about 0.0225 wt% relative to the weight of the third solution.
81. The method of any of Clauses 68 to 80, wherein the method further comprises a step of adding a colouring agent or dye to the third solution.
82. The method of any of Clauses 68 to 81, wherein the method is performed at a temperature of between about 16 and 30 °C, between about 17 and 28 °C, between about 18 and 25 °C, or between about 19 and 22 °C.
83. A method of making a transparent and crack-free glass object using the photocurable sol-gel composition of any of Clauses 1 to 62 or using a photocurable sol-gel composition made according to the method of any of Clauses 65 to 84, wherein the method comprises:
   providing the photocurable sol-gel composition,
   depositing the photocurable sol-gel composition,
   exposing at least a portion of the photocurable sol-gel composition to a source of photoenergy so as to form a cured object comprising a cured portion of the composition; and
   subjecting the cured object to a thermal treatment to form a glass object.
84. The method of Clause 83, wherein between the steps of providing and depositing the photocurable sol-gel composition the method comprises a further step of subjecting the photocurable sol-gel composition to a resting process.
85. The method of Clause 84, wherein the resting process comprises stirring, more preferably continuous stirring, of the photocurable sol-gel composition.
86. The method of Clause 84 or Clause 85, wherein the resting process comprises storing the photocurable sol-gel composition for a predefined period of time, preferably in a closed container.
87. The method of any of Clauses 84 to 86, wherein the resting process comprises storing the photocurable sol-gel composition for a period of between about 1 hour and 3 days, between about 2 hours and 2 days, between about 10 and 36 hours, between about 16 and 32 hours, between about 20 and 28 hours, or between about 22 and 26 hours.
88. The method of any of Clauses 84 to 87, wherein the resting process comprises storing the photocurable sol-gel composition for a period of about 1, about 2, about 6, about 16, about 20, about 22, about 24, about 26, about 28, about 32, about 36 hours, or about 2 or 3 days.
89. The method of any of Clauses 84 to 88, wherein the resting process comprises storing the photocurable sol-gel composition at a temperature of between about 16 and 30 °C, between about 17 and 28 °C, between about 18 and 25 °C, or between about 19 and 22 °C.
90. The method of any of Clauses 83 to 89, wherein between the steps of providing and depositing the photocurable sol-gel composition the method comprises a further step of subjecting the photocurable sol-gel composition to an evaporation process.
91. The method of Clause 90, wherein the evaporation process comprises heating the photocurable sol-gel composition.
92. The method of Clause 90 or Clause 91, wherein the evaporation process comprises stirring, more preferably continuous stirring, of the photocurable sol-gel.
93. The method of any of Clauses 90 to 92, wherein the evaporation process is performed with the photocurable sol-gel composition exposed to air.
94. The method of any of Clauses 90 to 93, wherein the evaporation process comprises heating the photocurable sol-gel composition for a period of between about 15 minutes and 12 hours, between about 20 minutes and 9 hours, between about 30 minutes and 6 hours, or between about 1 and 4 hours.
95. The method of any of Clauses 90 to 94, wherein the evaporation process comprises heating the photocurable sol-gel composition for a period of about 30 minutes, about 1 hour, about 2 hours, about 3 hours, about 4 hours, about 5 hours or about 6 hours.
96. The method of any of Clauses 90 to 95, wherein the evaporation process comprises incubating the photocurable sol-gel composition at a temperature of between about 45 and 75 °C, between about 50 and 70 °C, between about 55 and 65 °C or between about 58 and 62 °C.
97. The method of any of Clauses 90 to 96, wherein the evaporation process comprises incubating the photocurable sol-gel composition at a temperature of about 50 °C, about 55 °C, about 60 °C, about 65 °C or about 70 °C; particularly about 60 °C.
98. The method of any of Clauses 90 to 97, wherein the evaporation process is performed to achieve a weight loss of the photocurable sol-gel composition of between about 5 and 40 wt%, between about 10 and 35 wt%, between about 15 and 30 wt%, or between about 20 and 25 wt%.
99. The method of any of Clauses 90 to 98, wherein the evaporation process is performed to achieve a weight loss of the photocurable sol-gel composition of about 10 wt%, about 15 wt%, about 20 wt%, or about 25 wt%.
100. The method of any of Clauses 90 to 99 depending though Clause 84, wherein the evaporation process is performed after the resting process.
101. The method of any of Clauses 83 to 100, wherein depositing the photocurable sol-gel composition comprises printing the photocurable sol-gel composition onto or into a substrate.
102. The method of Clause 101, wherein printing the photocurable sol-gel composition comprises extruding the photocurable sol-gel composition through a nozzle.
103. The method of Clause 102, wherein the nozzle has an outlet diameter of between about 150 and 1000 µm, between about 175 and 500 µm, between about 200 and 450 µm, between about 225 and 425 µm or between about 250 and 410 µm.
104. The method of Clause 101 or Clause 102, wherein the nozzle has an outlet diameter of about 200 µm, about 250 µm, about 300 µm, about 350 µm, about 400 µm, or about 410 µm.
105. The method of any of Clauses 83 to 104, wherein depositing the photocurable sol-gel composition comprises printing the photocurable sol-gel composition via Digital Light Processing (DLP) or UV-assisted Direct Ink Writing (UV-DIW).
106. The method of any of Clauses 83 to 105, wherein depositing the photocurable sol-gel composition comprises depositing a volume of the photocurable sol-gel composition in a container.
107. The method of any of Clauses 83 to 106, wherein depositing the photocurable sol-gel composition comprises casting or soft lithography of the photocurable sol-gel composition.
108. The method of any of Clauses 83 to 107, wherein the photoenergy is UV radiation.
109. The method of any of Clauses 83 to 108, wherein the source of photoenergy is a light source emitting light with wavelengths between around 300 and 500nm, between around 325 to 500nm, between around 350 to 450nm, or between 375 and 400 nm.
110. The method of any of Clauses 83 to 109, wherein exposing at least a portion of the photocurable sol-gel composition to a source of photoenergy comprises placing the photocurable sol-gel composition in a UV oven.
111. The method of Clause 110, wherein the photocurable sol-gel composition is exposed to UV radiation for between about 1 and 20 minutes, between about 2 and 15 minutes, between about 3 and 10 minutes, or between about 4 and 6 minutes.
112. The method of any of Clauses 83 to 111, wherein the steps of depositing the photocurable sol-gel composition and exposing at least a portion of the photocurable sol-gel composition to a source of photoenergy are performed by Digital Light Processing (DLP) or UV-assisted Direct Ink Writing (UV-DIW).
113. The method of Clauses 83 to 112, wherein exposing at least a portion of the photocurable sol-gel composition to a source of photoenergy comprises exposing at least a portion of the photocurable sol-gel composition within a predefined layer thickness of the composition to the photoenergy.
114. The method of Clause 113, wherein the predefined layer has a thickness of between about 10 and 250 µm, between about 20 and about 200 µm, between about 30 and about 150 µm, between about 40 and about 100 µm, or between about 50 and about 75 µm.
115. The method of Clause 113 or Clause 114, wherein the predefined layer has a thickness of about 10 µm, about 20 µm, about 30 µm, about 40 µm, about 50, about 60 µm, or about 70 µm; particularly about 50 µm.
116. The method of any of Clauses 83 to 115, wherein exposing at least a portion of the photocurable sol-gel composition to a source of photoenergy comprises exposing the portion of the photocurable sol-gel composition to photoenergy for a period of between about 1 and 20 s, between about 2 and 15 s, between about 3 and 10 s, or between about 4 and 6 s.
117. The method of any of Clauses 83 to 116, wherein exposing at least a portion of the photocurable sol-gel composition to a source of photoenergy comprises exposing the portion of the photocurable sol-gel composition to photoenergy at a light intensity of between about 10 and 50 mW/cm², between about 15 and 45 mW/cm², between about 20 and 40 mW/cm², between about 25 and 35 mW/cm², or between about 28 and 32 mW/cm².
118. The method of any of Clauses 83 to 117, wherein exposing at least a portion of the photocurable sol-gel composition to a source of photoenergy comprises exposing the portion of the photocurable sol-gel composition to photoenergy at a light intensity of about 25, about 26, about 27, about 28, about 29, about 30, about 31, about 32, or about 33 s; particularly about 29s.
119. The method of any of Clauses 83 to 118 wherein after the step of exposing at least a portion of the photocurable sol-gel composition to a source of photoenergy but before the step of subjecting the cured object to a thermal treatment the method further comprises a further step of subjecting the cured object to an aging process.
120. The method of Clause 119, wherein the aging process includes storing the cured object for a predefined period of time.
121. The method of Clause 120, wherein the aging process comprises storing the cured object for a period of between about 3 and 30 days, between about 4 and 24 days, between about 5 and 20 days, between about 6 and 18 days, between about 7 and about 14 days, or between about 8 and about 12 days.
122. The method of Clause 120 or Clause 121, wherein the aging process comprises storing the cured object for a period of about 5, about 6, about 7, about 8, about 9, about 10, about 11, about 12, about 13, about 14 or about 15 days.
123. The method of any of Clauses 119 to 122, wherein the aging process comprises storing the cured object at a temperature of between about 16 and 30 °C, between about 17 and 28 °C, between about 18 and 25 °C, or between about 19 and 22 °C.
124. The method of any of Clauses 83 to 123, wherein subjecting the cured object to a thermal treatment to form a glass object comprises drying the cured object.
125. The method of Clause 124, wherein drying the cured object comprises incubating the cured object at a temperature of between about 90 and 150 °C, between about 100 and 140 °C, or between about 110 and 130 °C.
126. The method of Clause 124 or Clause 125, wherein drying the cured object comprises incubating the cured object at a temperature of about 100 °C, about 110 °C, about 120 °C, or about 130 °C; particularly about 120 °C.
127. The method of any of Clauses 124 to 126, wherein the thermal treatment comprises drying the cured object according to the following protocol:
   (i) heating the cured object from ambient temperature to a first target temperature between about 40 and 60 °C at a temperature ramp of between about 0.1 and 0.3 °C/min, and
      incubating the cured object for between about 12 and 16 hours at the first target temperature;
   (ii) heating the cured object from the first target temperature to a second target temperature between about 70 and 90 °C at a temperature ramp of between about 0.15 and 0.35 °C/min, and
      incubating the cured object for between about 2 and 4 hours at the second target temperature;
   (iii) heating the cured object from the second target temperature to a third target temperature between about 90 and 110 °C at a temperature ramp of between about 0.23 and 0.43 °C/min, and
      incubating the cured object for between about 2 and 4 hours at the third target temperature;
   (iv) heating the cured object from the third target temperature to a fourth target temperature between about 110 and 130 °C at a temperature ramp of between about 0.23 and 0.43 °C/min, and
      Incubating the cured object for between about 13 and 17 hours at the fourth target temperature.
128. The method of any of Clauses 124 to 127, wherein the thermal treatment comprises drying the cured object according to the following protocol:
   (i) heating the cured object from ambient temperature to a first target temperature of about 50°C at a temperature ramp of about 0.2°C/min, and
      incubating the cured object for about 14 hours at the first target temperature;
   (ii) heating the cured object from the first target temperature to a second target temperature about 80°C at a temperature ramp of 0.25°C/min, and
      incubating the cured object for about 3 hours at the second target temperature;
   (iii) heating the cured object from the second target temperature to a third target temperature about 100°C at a temperature ramp of about 0.33°C/min, and incubating the cured object for about 3 hours at the third target temperature;
   (iv) heating the cured object from the third target temperature to a fourth target temperature about 120°C at a temperature ramp of about 0.33°C/min, and
      incubating the cured object for about 15 hours at the fourth target temperature.
129. The method of any of Clauses 124 to 128, wherein drying to performed under air.
130. The method of any of Clauses 83 to 129, wherein subjecting the cured object to a thermal treatment to form a glass object comprises subjecting the cured object to debinding and sintering, preferably where debinding and sintering are performed during a single heating curve.
131. The method of Clause 130 when dependent on any of Clauses 124 to 128, wherein debinding and sintering is performed after drying.
132. The method of Clause 130 or Clause 131, wherein subjecting the cured object to debinding and sintering comprises incubating the cured object at a temperature of between about 900 and about 1,150 °C, between about 950 and about 1,100 °C or between about 975 and 1,050 °C.
133. The method of any of Clauses 130 to 132, wherein subjecting the cured object to debinding and sintering comprises incubating the cured object at a temperature of about 950 °C, about 975 °C, about 1,000 °C, about 1,025 °C or about 1,050 °C; particularly about 1,000 °C.
134. The method of any of Clauses 130 to 133, wherein debinding and sintering is performed under air.
135. The method of any of Clauses 130 to 134, wherein debinding and sintering are performed by heating the cured object from ambient temperature to a target debinding-sintering temperature over a plurality of heating stages.
136. The method of Clause 135, wherein each heating stage comprises a ramped temperature increase to the target debinding-sintering temperature followed by an incubation period at the target temperature.
137. The method of Clause 136, wherein the incubation period is between about 30 minutes and 6 hours, between about 1 hour and 5 hours, or between about 2 hours and 4 hours.
138. The method of Clause 136 or Clause 137, wherein the incubation period is about 1 hour, about 2 hours, about 3 hours, about 4 hours, or about 5 hours.
139. The method of Clause 135 or Clause 136, wherein the heating stages comprise: heating the cured object from ambient temperature to a first intermediate temperature, wherein the first intermediate temperature is less than the target debinding-sintering temperature, and incubating the cured object at the first intermediate debinding-sintering temperature for a first predetermined period of time; heating the cured object from the first intermediate temperature to a second intermediate temperature, wherein the second intermediate temperature is less than the target debinding-sintering temperature, and incubating the cured object at the second intermediate debinding-sintering temperature for a second predetermined period of time; and optionally repeating the steps of heating and incubating for one or more of a third, fourth, fifth, sixth, seventh and eighth steps, until the target debinding-sintering temperature is reached; followed by a step of cooling the cured object to ambient temperature to provide the glass object.
140. The method of any of Clauses 135 to 139, wherein heating is performed by a ramped temperature increase, and wherein the ramp is between about 0.05 and 0.5 °C/min, between about 0.06 and 0.4 °C/min, between about 0.07 and 0.3 °C/min, between about 0.08 and 0.2 °C/min.
141. The method of any of Clauses 135 to 140, wherein heating is performed by a ramped temperature increase, and wherein the ramp is about 0.05 °C/min, about 0.1 °C/min, about 0.2 °C/min, or about 0.3 °C/min; particularly about 0.1 °C/min.
142. The method of any of Clauses 130 to 141, wherein the thermal treatment comprises debinding and sintering of the cured object, according to the following protocol:
   (i) heating the cured object from ambient temperature to a first target temperature between about 70 and 120 °C at a temperature ramp of between about 0.05 and 0.2 °C/min, and
      incubating the cured object for between about 1 and 4 hours at the first target temperature;
   (ii) heating the cured object from the first target temperature to a second target temperature between about 170 and 210 °C at a temperature ramp of between about 0.05 and 0.2 °C/min, and
      incubating the cured object for between about 1 and 4 hours at the second target temperature;
   (iii) heating the cured object from the second target temperature to a third target temperature between about 210 and 250 °C at a temperature ramp of between about 0.05 and 0.2 °C/min, and
      incubating the cured object for between about 1 and 4 hours at the third target temperature;
   (iv) heating the cured object from the third target temperature to a fourth target temperature between about 250 and 290 °C at a temperature ramp of between about 0.05 and 0.2 °C/min, and
      incubating the cured object for between about 1 and 4 hours at the fourth target temperature;
   (v) heating the cured object from the fourth target temperature to a fifth target temperature between about 290 and 330 °C at a temperature ramp of between about 0.05 and 0.2 °C/min, and
      incubating the cured object for between about 1 and 4 hours at the fifth target temperature;
   (vi) heating the cured object from the fifth target temperature to a sixth target temperature between about 400 and 500 °C at a temperature ramp of between about 0.05 and 0.2 °C/min, and
      incubating the cured object for between about 1 and 4 hours at the sixth target temperature;
   (vii) heating the cured object from the sixth target temperature to seventh target temperature between about 750 and 850 °C at a temperature ramp of between about 0.1 and 0.3 °C/min, and
      incubating the cured object for between about 1 and 4 hours at the seventh target temperature;
   (viii) heating the cured object from the seventh target temperature to a target debinding-sintering temperature between about 950 and 1,150 °C at a temperature ramp of between about 0.1 and 0.3 °C/min, and
      incubating the cured object for between about 1 and 4 hours at the target debinding-sintering temperature; and optionally
   (ix) cooling the cured object from 1,000 °C to ambient temperature at a temperature ramp of about 0.5°C.
143. The method of any of Clauses 130 to 142, wherein the thermal treatment comprises debinding and sintering of the cured object, according to the following protocol:
   (x) heating the cured object from ambient temperature to about 75 °C at a temperature ramp of about 0.1 °C/min, and
      incubating the cured object for about 3 hours at about 75 °C;
   (xi) heating the cured object from about 75 °C to about 200 °C at a temperature ramp of about 0.1 °C/min, and
      incubating the cured object for about 4 hours at about 200 °C;
   (xii) heating the cured object from about 200 °C to about 233 °C at a temperature ramp of about 0.1 °C/min, and
      incubating the cured object for about 4 hours at about 233 °C;
   (xiii) heating the cured object from about 233 °C to about 266 °C at a temperature ramp of about 0.1 °C/min, and
      incubating the cured object for about 5 hours at about 266 °C;
   (xiv) heating the cured object from about 266°C to about 300 °C at a temperature ramp of 0.1 °C/min, and
      incubating the cured object for about 4 hours at about 300 °C;
   (xv) heating the cured object from about 300 °C to about 350 °C at a temperature ramp of about 0.1 °C/min, and
      incubating the cured object for about 4 hours at about 350 °C;
   (ii) heating the shaped object from about 350 °C to about 450 °C at a temperature ramp of about 0.1 °C/min, and incubating the shaped object for about 3 hours at about 450 °C;
   (xvi) heating the cured object from about 450 °C to about 800 °C at a temperature ramp of about 0.2 °C/min, and
      incubating the cured object for about 3 hours at about 800 °C;
   (xvii) heating the cured object from about 800 °C to about 1,000 °C at a temperature ramp of about 0.2 °C/min, and
      incubating the cured object for about 1 hour at about 1,000 °C; and optionally
   (xviii) cooling the cured object from 1,000 °C to ambient temperature at a temperature ramp of about 0.5°C.
144. The method of any of Clauses 83 to 143, wherein the formed glass object has a refractive index of more than about 1.535, more than about 1.540, more than about 1.545, more than about 1.550 or more than 1.555.
145. The method of any of Clauses 83 to 144, wherein the formed glass object has a refractive index of about 1.548, about 1.552, about 1.554, about 1.558 or about 1.572
146. The method of any of Clauses 83 to 145, wherein the formed glass object has a refractive index of between about 1.535 and 1.580, between about 1.540 and 1.578, between about 1.545 and 1.576 or between about 1.545 and 1.574.

## Claims

1. A photocurable sol-gel composition for the production of transparent and crack-free glass bodies, wherein the composition comprises a silicon sol-gel precursor, a photopolymerisable monomer, a transition metal precursor, an organic solvent and water.

2. The composition of any of Claim 1, wherein the silicon sol-gel precursor comprises or consists of triethoxymethylsilane (MTES) and/ or tetraethyl orthosilicate (TEOS), and/ or wherein the photopolymerisable monomer comprises or consists of 3-(Trimethoxysilyl)propyl Methacrylate (TMSPM).

3. The composition of Claim 1 or Claim 2, wherein the silicon sol-gel precursor comprises or consists of a mixture of MTES and TEOS, and the photopolymerisable monomer comprises or consists of TMSPM.

4. The composition of any of Claims 1 to 3, wherein the organic solvent has a boiling point of at least 100°C, at least 120°C, at least 140°C, at least 160°C, at least 180°C, at least 200°C, at least 220°C, or at least 240°C.

5. The composition of any of Claims 1 to 4, wherein the organic solvent comprises or consists of a mixture of two or three of PC, POE and TPM

6. The composition of any of Claims 1 to 5, wherein the transition metal precursor is a transition metal alkoxide, and preferably wherein the transition metal precursor comprises a source of at least one of zirconium (Zr) and titanium (Ti).

7. The composition of any of Claims 1 to 6, wherein the composition further comprises a chelating agent, preferably selected from at least one of acetic acid and acrylic acid.

8. The composition of any of Claims 1 to 7 wherein the composition further comprises a photoinitiator and/or a photoabsorber.

9. A method of making a photocurable sol-gel composition for the production of transparent and crack-free glass bodies, wherein the composition comprises a silicon sol-gel precursor, a photopolymerisable monomer, an organic solvent and water, the method comprising
preparing a first solution by mixing a silicon sol-gel precursor and a photopolymerisable monomer with a solvent,
adding water to the first solution,
subjecting the first solution to a first mixing,
preparing a second solution comprising a transition metal precursor, and
mixing the first and second solutions to form a third solution.

10. A method of making a transparent and crack-free glass object using the photocurable sol-gel composition of any of Claims 1 to 8 or using a photocurable sol-gel composition made according to the method of Claim 9, wherein the method comprises:
providing the photocurable sol-gel composition,
depositing the photocurable sol-gel composition,
exposing at least a portion of the photocurable sol-gel composition to a source of photoenergy so as to form a cured object comprising a cured portion of the composition; and
subjecting the cured object to a thermal treatment to form a glass object; wherein the glass object has a refractive index of between about 1.535 and 1.580, between about 1.540 and 1.578, between about 1.545 and 1.576 or between about 1.545 and 1.574.

11. The method of Claim 10, wherein between the steps of providing and depositing the photocurable sol-gel composition the method comprises a further step of subjecting the photocurable sol-gel composition to a rest process that preferably involves stirring, more preferably continuous stirring, of the sol-gel composition in a closed container.

12. The method of any of Claim 10 or Claim 11, wherein between the steps of providing and depositing the photocurable sol-gel composition the method comprises a further step of subjecting the photocurable sol-gel composition to an evaporation process that preferably involves heating and stirring, more preferably continuous stirring, of the sol-gel composition while exposed to air.

13. The method of Claim 12 depending on Claim 11, wherein the evaporation process is performed after the resting process.

14. The method of any of Claims 10 to 13, wherein after the step of exposing at least a portion of the photocurable sol-gel composition to a source of photoenergy but before the step of subjecting the cured object to a thermal treatment the method comprises a further step of subjecting the cured object to an aging process.

15. The method of any of Claims 10 to 14, wherein the thermal treatment comprises drying and/ or debinding and sintering of the cured object.
